(19) Europäisches Patentamt
European Patent Office
Office européen des brevets

(11) **EP 3 611 224 A1**

(12) **EUROPEAN PATENT APPLICATION**
published in accordance with Art. 153(4) EPC

(43) Date of publication:
**19.02.2020 Bulletin 2020/08**

(21) Application number: **18756598.1**

(22) Date of filing: **22.02.2018**

(51) Int Cl.:
***C08L 27/12*** (2006.01) ***C08G 73/10*** (2006.01)
***C08L 27/22*** (2006.01) ***C08L 77/00*** (2006.01)
***C08L 79/08*** (2006.01) ***H01B 1/06*** (2006.01)
***H01M 8/10*** (2016.01) ***H01M 8/1004*** (2016.01)
***H01M 8/103*** (2016.01) ***H01M 8/1039*** (2016.01)
***H01M 8/1044*** (2016.01) ***H01M 8/1058*** (2016.01)

(86) International application number:
**PCT/JP2018/006592**

(87) International publication number:
**WO 2018/155598 (30.08.2018 Gazette 2018/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority:
**23.02.2017 JP 2017032159**
**24.02.2017 JP 2017033885**
**11.05.2017 JP 2017094841**
**07.07.2017 JP 2017134028**
**08.08.2017 JP 2017153592**
**08.08.2017 JP 2017153437**

(71) Applicant: **ASAHI KASEI KABUSHIKI KAISHA**
**Tokyo 100-0006 (JP)**

(72) Inventors:
- **KANADA, Yuka**
**Tokyo 101-8101 (JP)**
- **KAMOCHI, Hiroko**
**Tokyo 101-8101 (JP)**
- **KATO, Satoshi**
**Tokyo 101-8101 (JP)**
- **MIYAMOTO, Yoshiki**
**Tokyo 101-8101 (JP)**
- **TANAKA, Norihito**
**Tokyo 101-8101 (JP)**

(74) Representative: **Hoffmann Eitle**
**Patent- und Rechtsanwälte PartmbB**
**Arabellastraße 30**
**81925 München (DE)**

(54) **COMPOSITION, COMPOSITE FILM AND MEMBRANE ELECTRODE ASSEMBLY**

(57) The present invention provides:
a composition including 100.0 parts by mass of a perfluorocarbon polymer having an ion-exchange group (A); and 0.1 to 200.0 parts by mass of a basic polymer (B), and
a composition including a polyimide having a structure represented by formula (1):

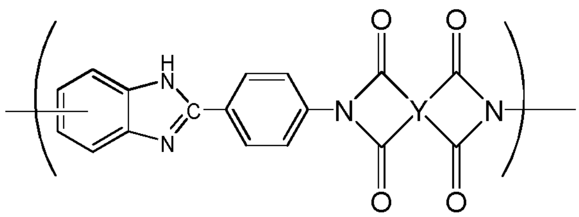

(1)

wherein Y represents a tetravalent organic group.

EP 3 611 224 A1

Figure 1

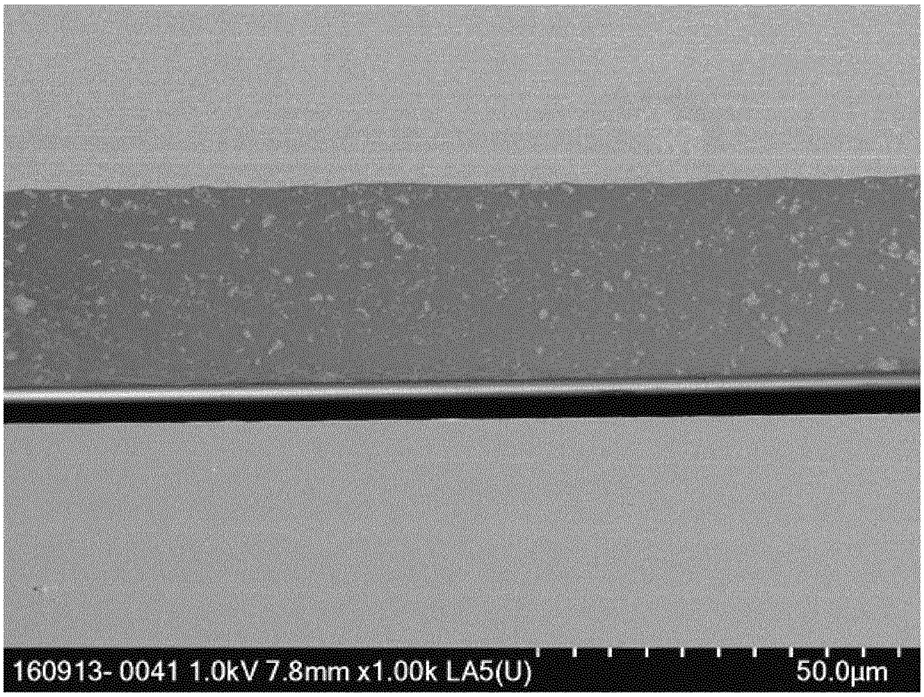

## Description

### Technical Field

The present invention relates to a composition, a composite membrane, and a membrane electrode assembly.

### Background Art

Fuel cells are electricity generators that extract electrical energy by electrochemically oxidizing fuels such as hydrogen and methanol, and attract attention as a clean source of energy. In particular, solid polymer electrolyte fuel cells operate at lower temperatures than other types of fuel cells, and are therefore used as alternative power sources for automobiles as well as electrical sources for household cogeneration systems and portable electricity generators.

It is known that peroxide is produced in the concomitant presence of a fuel and a catalyst used in the cell reaction of a solid polymer electrolyte fuel cell and becomes a radical during the process of diffusion, thus deteriorating an electrolyte membrane. Accordingly, high chemical durability needs to be imparted to the electrolyte membrane in order to use a fuel cell for a long period of time.

Fluorine-based resins are generally known to be more resistant to radicals than hydrocarbon-based resins are, and thus fluorine-based polymer electrolytes having a perfluorocarbon main chain and a side-chain sulfonic acid group are widely used in a solid polymer electrolyte membrane. However, as more and more fuel cells are in practical use, even higher durability is demanded.

As a method for enhancing chemical durability, a method that involves adding a basic polymer to an electrolyte membrane is studied.

For example, Patent Literature 1 discloses a technique involving adding a polyazole compound dissolved in an aprotic solvent to a fluorine-based polymer electrolyte.

Patent Literature 2 discloses a technique involving adding a polyazole compound dissolved in an alkali metal hydroxide to a fluorine-based polymer electrolyte.

Patent Literature 3 discloses a technique involving adding particles of a polyazole compound to a hydrocarbon-based polymer electrolyte.

Patent Literature 4 discloses a technique involving adding a solution obtained by dissolving a polyazole compound in an aprotic solvent and a solution obtained by dissolving a polyimide precursor in an aprotic solvent to a fluorine-based polymer electrolyte.

The solid polymer electrolyte fuel cell includes at least a membrane electrode assembly obtained by attaching a gas diffusion electrode that is a laminate of an electrode catalyst layer and a gas diffusion layer to both surfaces of a proton exchange membrane. The proton exchange membrane as referred to herein is a material that has a strongly acidic group such as a sulfonic acid group or a carboxylic acid group in the polymer chain and has properties of selectively allowing protons to permeate. Perfluorinated proton exchange membranes represented by highly chemically stable Nafion(R) (manufactured by Du Pont) are suitably used as such proton exchange membranes.

During fuel cell operation, a fuel (such as hydrogen) is supplied to the gas diffusion electrode on the anode side, an oxidant (such as oxygen or air) is supplied to the gas diffusion electrode on the cathode side, both electrodes are connected via an external circuit, and thus the function of the fuel cell is attained. Specifically, when hydrogen is used as a fuel, hydrogen is oxidized on an anode catalyst, and protons are produced. The protons travel through the proton conducting polymer in the anode catalyst layer, then moves through the proton exchange membrane, and reaches the cathode catalyst through the proton conductive polymer in the cathode catalyst layer.

On the other hand, electrons produced simultaneously with protons by the oxidation of hydrogen travel through the external circuit and reach the cathode-side gas diffusion electrode. On the cathode catalyst, the protons react with oxygen in the oxidant, and thus water is produced. At this time, electrical energy is extracted.

In this case, the proton exchange membrane also needs to serve as a gas barrier. If the proton exchange membrane has a high gas permeability, leakage of anode-side hydrogen to the cathode side and leakage of cathode-side oxygen to the anode side, i.e., cross-leakage, occur, thus resulting in a so-called chemical short-circuit, and a favorable voltage cannot be extracted.

Such a solid polymer electrolyte fuel cell is usually operated at around 80°C in order to obtain high-output characteristics. In particular, when used in automobile applications, such a fuel cell is desirably capable of operation under high-temperature, low-humidity conditions, assuming that the automobile is used in summer. From this viewpoint, Patent Literature 5 proposes a polymer electrolyte composition containing a polymer electrolyte, a compound having a thioether group, and a compound having an azole ring, and the use of the composition is described as exerting high chemical stability. Patent Literature 6 proposes an electrolyte membrane containing a proton conductive polymer, in which a nanofiber mat is used as a core material, and the electrolyte membrane is described as being thermally and chemically strong and exhibiting excellent dimensional stability during operation of a fuel cell in severe environments at

high temperatures. Patent Literature 7 proposes a method for producing a proton exchange membrane using a cross-linked porous membrane.

Citation List

Patent Literature

Patent Literature 1
Japanese Unexamined Patent Application Publication No. 2012-084278
Patent Literature 2
Japanese Unexamined Patent Application Publication No. 2015-219941
Patent Literature 3
Japanese Unexamined Patent Application Publication No. 2013-080701
Patent Literature 4
Japanese Unexamined Patent Application Publication No. 2005-336475
Patent Literature 5
Japanese Patent No. 5548445
Patent Literature 6
Japanese Patent No. 5798186
Patent Literature 7
Chinese Patent No. 104629081

Summary of Invention

Technical Problems

<First Object of Present Invention>

In the production of an electrolyte membrane, a production method involving a solution obtained by dissolving a basic polymer in a solvent is commonly used.
However, it is difficult to prepare a stable solution by using a basic polymer, and a problem is that even when an aprotic solvent that is capable of dissolving the basic polymer is used, the basic polymer cannot be dissolved to a high concentration.
A composition to which the polyazole compound disclosed in Patent Literature 1 is added has a low solids concentration, thus multiple application and drying procedures need to be repeated to obtain a membrane having a desired thickness by using the composition, and thus there is the problem of inferior productivity. Moreover, another problem is that the aprotic solvent capable of dissolving the basic polymer has a high boiling point, and thus a high temperature is required when attempting to remove the solvent in order to increase viscosity, resulting in the decomposition of the basic polymer due to the concomitant presence with a strong acid contained in the electrolyte as well as the decomposition and degeneration of the electrolyte itself.
Patent Literature 2 discloses a method for dissolving a basic polymer by using an alkali metal hydroxide, but a problem is that the step of removing ions derived from the alkali metal hydroxide is required, and thus productivity is poor.
Patent Literature 3 discloses a method for adding particles of a polyazole compound to a hydrocarbon-based electrolyte, but a problem is that when particles of the basic polymer are added to a fluorine-based polymer electrolyte, particles aggregate, thus making it difficult to stably produce a homogeneous membrane.
Patent Literature 4 as well does not recognize the above problems and have the same problems as Patent Literature 1.
The present invention has been conceived in view of the problems of conventional art described above, and the first object of the present invention is to provide a composition that has excellent productivity when producing an electrolyte membrane and that is capable of imparting excellent chemical durability to the electrolyte membrane to be obtained, as well as an electrolyte membrane and a membrane electrode assembly containing the composition.

<Second Object of Present Invention>

The polymer electrolyte composition of Patent Literature 5 is described as exerting sufficient durability under high-temperature, low-humidity conditions at an operating temperature of around 100°C and a humidity of about 12

RH%, but the electrolyte still has room for improvement from the viewpoint of durability under severer conditions (such as an operating temperature at about 120°C).

The electrolyte membrane described in Patent Literature 6 also still has room for improvement, assuming that the electrolyte membrane is used under severe conditions such as those described above, and, in particular, has room for improvement from the viewpoint of membrane resistance (ion conductivity) and core-material embeddability of the electrolyte.

According to Patent Literature 7, a proton exchange membrane having a high tensile strength can be obtained by crosslinking a porous membrane, but there is room for improvement from the durability viewpoint.

The present invention has been conceived in view of the problems of conventional art described above, and the second object of the present invention is to provide a composition that is capable of exerting excellent embeddability resulting from good affinity between an electrolyte and a core material and that exerts excellent durability and ion conductivity even under high-temperature, low-humidity conditions, as well as a composite membrane, a membrane electrode assembly, a fuel cell, and a fuel cell system in which the composition is used.

Solution to Problems

<Means for solving first object>

As a result of having conducted diligent research to solve the first object, the inventors found that a composition having a specific configuration can solve the problems, and accomplished the present invention.

<Means for solving second object>

As a result of having conducted diligent research to solve the second object, the inventors found that a composition containing a polyimide that has a specific structure can solve the problems, and accomplished the present invention.

That is, the present invention is as follows. The first object described above can be solved by the following first group of inventions, and the second object described above can be solved by the following second group of inventions.

<First group of inventions>

[1] A composition comprising:

100.0 parts by mass of a perfluorocarbon polymer having an ion-exchange group (A); and
0.1 to 200.0 parts by mass of a basic polymer (B),
wherein the basic polymer (B) is a fine particle.

[2] A composition comprising:

100.0 parts by mass of a perfluorocarbon polymer having an ion-exchange group (A); and
0.1 to 200.0 parts by mass of a basic polymer (B),
wherein a concentration of a basic group per gram of the basic polymer (B) is 5.0 mmol or less.

[3] The composition according to [2], wherein the concentration of the basic group per gram of the basic polymer (B) is 3.0 mmol or less.
[4] The composition according to any of [1] to [3], wherein
the basic polymer (B) is a fine particle, and
a proportion of the fine particle having a particle diameter exceeding 5.0 μm is 10% or less of the fine particle of the basic polymer (B).
[5] The composition according to any of [1] to [4], wherein
the basic polymer (B) is a fine particle, and
an average diameter of the fine particle of the basic polymer (B) is 0.10 μm or more and 5.00 μm or less.
[6] The composition according to any of [1] to [5], wherein the basic polymer (B) comprises an imide and/or an amide structure.
[7] The composition according to any of [1] to [6], comprising 0.1 parts by mass or more and 20.0 parts by mass or less of the basic polymer (B) per 100.0 parts by mass of the perfluorocarbon polymer having an ion-exchange group

(A).

[8] The composition according to any of [1] to [7], wherein the basic polymer (B) has an azole ring.

[9] The composition according to any of [1] to [8], wherein the basic polymer (B) has two or more azole rings and an imide and/or an amide structure positioned between the two or more azole rings.

[10] The composition according to any of [1] to [9], wherein a weight average molecular weight (Mw) of the basic polymer (B) is 300 or more and 500000 or less.

[11] The composition according to any of [1] to [10], wherein a molecular weight distribution of the basic polymer (B) calculated as weight average molecular weight (Mw)/number average molecular weight (Mn) is 2.60 or less.

[12] The composition according to any of [1] to [11], wherein the basic polymer (B) comprises at least one structure selected from the group consisting of an imidazole ring, a benzimidazole ring, an oxazole ring, a benzoxazole ring, a thiazole ring, and a benzothiazole ring.

[13] The composition according to any of [1] to [12], wherein the basic polymer (B) has a structure represented by formula (1):

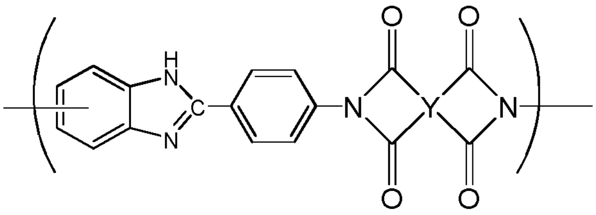

(1)

wherein Y represents a tetravalent organic group.

[14] The composition according to any of [1] to [13], wherein an ion-exchange capacity of the perfluorocarbon polymer having an ion-exchange group (A) is 0.5 to 3.0 meq/g.

[15] The composition according to any of [1] to [14], wherein the perfluorocarbon polymer having an ion-exchange group (A) is a perfluorocarbon polymer having a structure represented by formula (2):

$$-[CF_2CX^1X^2]_a-[CF_2-CF((-O-CF_2-CF(CF_2X^3))_b-O_c-(CFR^1)_d-(CFR^2)_e-(CF_2)_f-X^4)]_g- \quad (2)$$

wherein

$X^1$, $X^2$, and $X^3$ are each independently selected from the group consisting of halogen atoms and perfluoroalkyl groups having 1 to 3 carbon atoms;

$X^4$ represents COOZ, $SO_3Z$, $PO_3Z_2$, or $PO_3HZ$;

Z represents a hydrogen atom, an alkali metal atom, an alkaline earth metal atom, or an amine selected from the group consisting of $NH_4$, $NH_3R^{x1}$, $NH_2R^{x1}R^{x2}$, $NHR^{x1}R^{x2}R^{x3}$, and $NR^{x1}R^{x2}R^{x3}R^{x4}$, wherein $R^{x1}$, $R^{x2}$, $R^{x3}$, and $R^{x4}$ each independently represent an alkyl group or an arene group;

when $X^4$ is $PO_3Z_2$, Z may be the same or different;

$R^1$ and $R^2$ each independently represent a halogen atom or a perfluoroalkyl group or fluorochloroalkyl group having 1 to 10 carbon atoms;

a and g are numbers that satisfy $0 \leq a < 1$, $0 < g \leq 1$, and $a+g=1$;

b is an integer of 0 to 8;

c is 0 or 1; and

d, e, and f are each independently an integer of 0 to 6, provided that d, e, and f are not 0 at the same time.

[16] The composition according to any of [1] to [15], wherein the perfluorocarbon polymer having an ion-exchange group (A) has a structure represented by formula (4) :

$$-[CF_2CF_2]_a-[CF_2-CF((-O-(CF_2)_m-X^4)]_g- \quad (4)$$

wherein

a and g are numbers that satisfy $0 \leq a < 1$, $0 < g \leq 1$, and $a+g=1$; m is an integer of 1 to 6; and $X^4$ represents $SO_3H$.

[17] An electrolyte membrane comprising the composition according to any of [1] to [16].

[18] The electrolyte membrane according to [17], wherein

the basic polymer (B) contained in the electrolyte membrane is a fine particle; and

a particle diameter of the basic polymer (B) included in a 62.8 μm × 26.0 μm region on a SEM image of a membrane

cross-section of the electrolyte membrane has a coefficient of variation of 0.10 or more and 2.00 or less.

[19] The electrolyte membrane according to [18], wherein the coefficient of variation of the particle diameter of the basic polymer (B) is 0.20 or more and 1.50 or less.

[20] A membrane electrode assembly comprising the electrolyte membrane according to any of [17] to [19].

[21] A composite membrane comprising:

the electrolyte membrane according to any of [17] to [19]; and
a membrane comprising a polyimide,
wherein the polyimide is a polyimide having a structure represented by formula (1):

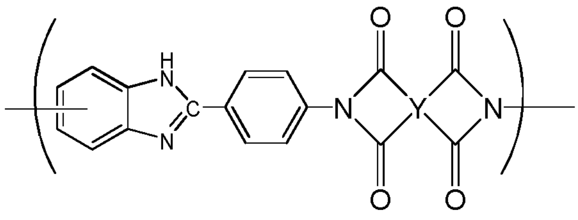

(1)

wherein Y represents a tetravalent organic group.

[22] The composite membrane according to [21], wherein the membrane comprising the polyimide is in a fiber sheet form.

<Second group of inventions>

[23] A composition comprising a polyimide having a structure represented by formula (1):

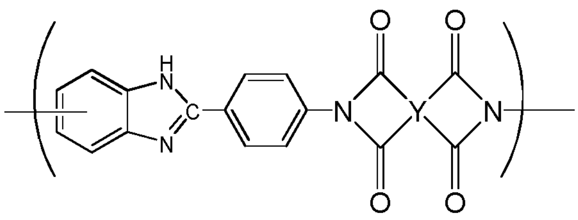

(1)

wherein Y represents a tetravalent organic group.

[24] The composition according to [23], comprising a polyimide having a structure represented by formula (5):

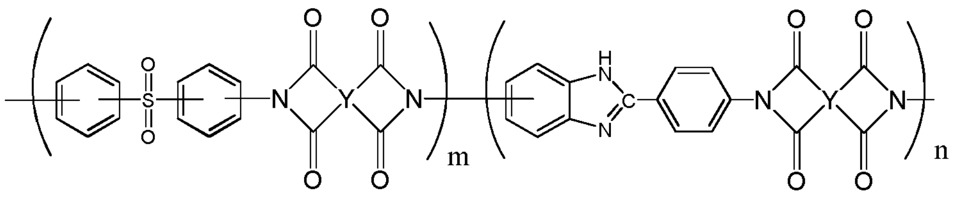

(5)

wherein Y represents a tetravalent organic group, m and n represent the number of repeating units, and a ratio m:n is 20:80 to 70:30.

[25] The composition according to [23], comprising a polyimide having a structure represented by formula (6):

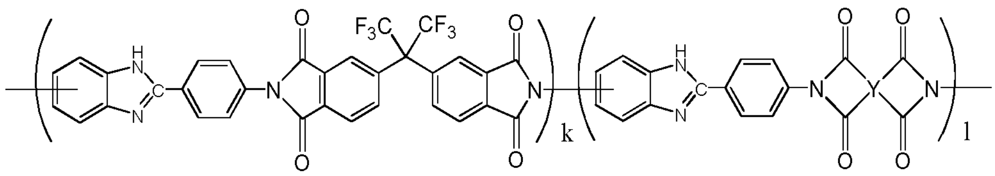

(6)

wherein Y represents a tetravalent organic group, k and l represent the number of repeating units, and a ratio k:l is 20:80 to 70:30.

[26] The composition according to [23] or [24], wherein Y is represented by formula (Y1).

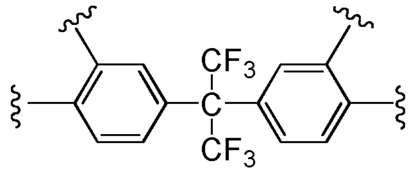

(Y1)

[27] The composition according to any of [23] to [25], wherein Y is a tetravalent organic group having an alicyclic structure.

[28] The composition according to any of [23] to [27], wherein a molecular weight distribution calculated as Mw/Mn is 2.60 or less.

[29] The composition according to any of [23] to [28], wherein when the composition is formed into a porous material or a fiber sheet, a weight loss of the porous material or the fiber sheet in a nitrogen atmosphere from 30°C to 350°C is 10% by mass or less.

[30] A porous material made of the composition according to any of [23] to [29].

[31] A fiber sheet made of the composition according to any of [23] to [29].

[32] A fiber sheet comprising a polyimide represented by formula (7):

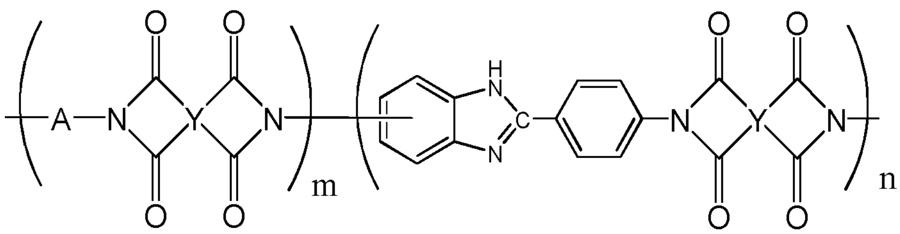

(7)

wherein

in formula (7), A represents a divalent organic group represented by formula (A-1), (A-2), (A-3), or (A-4) :

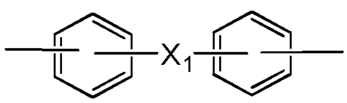

(A-1)

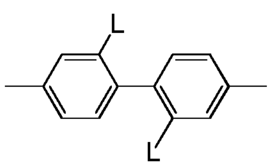

(A-2)

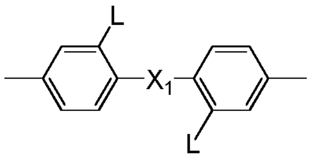

(A-3)

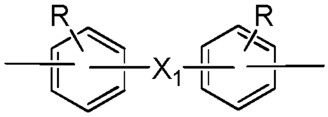

(A-4)

in formulas (A-1), (A-3), and (A-4), $X_1$ represents a divalent organic group represented by (X1-1) or (X1-2):

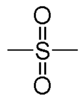

(X1-1)

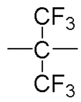

(X1-2)

in formulas (A-2) and (A-3), L represents a methyl group or a trifluoromethyl group;
in formula (A-4), R represents a hydroxyl group;
Y represents a tetravalent organic group, m and n represent the number of repeating units, and a ratio m:n is 20:80 to 70:30.

[33] A fiber sheet comprising a polyimide represented by formula (8):

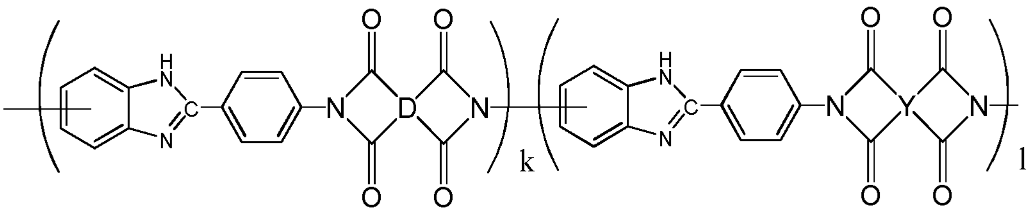

(8)

wherein D and Y represent a tetravalent organic group, and a ratio k:l is 20:80 to 70:30.
[34] The fiber sheet according to [33], wherein D is a tetravalent organic group represented by formula (D1):

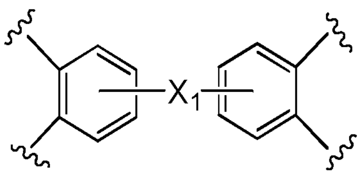

(D1)

wherein $X_1$ represents a divalent organic group represented by formula (X1-1) or (X1-2).

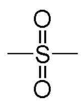

(X1-1)

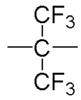

(X1-2)

[35] The fiber sheet according to any of [32] to [34], wherein the fiber has an average fiber diameter of 100 nm or more and 1000 nm or less.

[36] A composite membrane comprising the fiber sheet according to any of [31] to [35]; and a proton-conductive electrolyte, wherein the proton-conductive electrolyte is present in the fiber sheet.

[37] The composite membrane according to [36], wherein the proton-conductive electrolyte is a perfluorocarbon polymer having an ion-exchange group.

[38] A membrane electrode assembly comprising the composite membrane according to [37].

[39] A fuel cell comprising the membrane electrode assembly according to [38].

[40] A fuel cell system comprising the fuel cell according to [39].

Advantageous Effects of Invention

<Effects of first embodiment>

According to the composition of the present invention, a highly viscous composition having good dispersibility can be obtained, and excellent chemical durability can be imparted to an electrolyte membrane to be obtained.

<Effects of second embodiment>

According to the composition of the present invention, a composite membrane having excellent embeddability resulting from good affinity between an electrolyte and a core material can be provided, and excellent durability and ionic conductivity can be exerted even under high-temperature, high-humidity conditions.

Brief Description of Drawings

[Figure 1] Figure 1 shows a SEM image of a cross-section of the electrolyte membrane obtained in Example A1.

[Figure 2] Figure 2 shows a SEM image of the core material (porous material) obtained in Example B1.

[Figure 3] Figure 3 shows a SEM image of the cross-section of the composite membrane obtained in Example B1.

[Figure 4] Figure 4 shows a SEM image of a cross-section of the composite membrane obtained in Comparative Example B1.

[Figure 5] Figure 5 shows a SEM image of the core material (fiber sheet) obtained in Example C1.

[Figure 6] Figure 6 shows a SEM image of the cross-section of the composite membrane obtained in Example C1.

[Figure 7] Figure 7 shows a SEM image of a cross-section of the composite membrane obtained in Comparative Example C1.

[Figure 8] Figure 8 shows a SEM image of the core material (porous material) obtained in Example D1.

[Figure 9] Figure 9 shows a SEM image of the cross-section of the composite membrane obtained in Example D1.

[Figure 10] Figure 10 shows a SEM image of a cross-section of the composite membrane obtained in Comparative Example D1.

[Figure 11] Figure 11 shows an image obtained by extracting a $62.8\ \mu m \times 26.0\ \mu m$ range of a cross-sectional image of an electrolyte membrane captured in the membrane thickness direction by a scanning electron microscope (SEM) of 2000 magnification.

[Figure 12] Figure 12 shows an image after binarization by a Triangle method by using image processing software ImageJ 1.50i.

[Figure 13] Figure 13 shows an image after binarization by a Triangle method and then analysis and extraction of a particle portion by Analyze Particle by using image processing software ImageJ 1.50i.

Description of Embodiments

Below, embodiments for carrying out the present invention (hereinafter referred to as "the present embodiments") will now be described in detail. The present invention is not limited to the following description, and can be carried out after making various modifications within the scope of the present invention.

The embodiment for carrying out the first group of inventions will be referred to as the "first embodiment" below. The embodiment for carrying out the second group of inventions will be referred to as the "second embodiment" below.

<<First Embodiment>>

<Composition>

The composition of the present embodiment contains 0.1 parts by mass or more, preferably 1.0 part by mass or more, and more preferably 1.5 parts by mass or more of a basic polymer (B) (hereinafter also simply referred to as "component B") per 100.0 parts by mass of a perfluorocarbon polymer having an ion-exchange group (A) (hereinafter also simply referred to as "component A"). By containing 0.1 parts by mass or more of the basic polymer (B), the electrolyte membrane obtained from the composition has excellent chemical durability. Also, 200.0 parts by mass or less, preferably 30.0 parts by mass or less, more preferably 20.0 parts by mass or less, and even more preferably 15.0 parts by mass or less of the basic polymer (B) is contained per 100.0 parts by mass of the perfluorocarbon polymer having an ion-exchange group. By containing 200.0 parts by mass or less of the basic polymer (B), the electrolyte membrane obtained from the composition has excellent conductivity.

That is, the composition of the present embodiment contains 100.0 parts by mass of the perfluorocarbon polymer having an ion-exchange group (A) and 0.1 to 200.0 parts by mass of the basic polymer (B). The basic polymer (B) contained in the composition of the present embodiment is preferably contained in an amount of 0.1 to 20.0 parts by mass per 100.0 parts by mass of the perfluorocarbon polymer having an ion-exchange group (A).

The basic polymer (B) in the present embodiment satisfies that the basic polymer (B) is a fine particle and/or the concentration of the basic group per gram of the basic polymer (B) is 5.0 mmol or less.

That is, one aspect of the present embodiment is a composition containing 100.0 parts by mass of the perfluorocarbon polymer having an ion-exchange group (A); and 0.1 to 200.0 parts by mass of the basic polymer (B), wherein the basic polymer (B) is a fine particle.

Also, one aspect of the present embodiment is a composition containing 100.0 parts by mass of the perfluorocarbon polymer having an ion-exchange group (A); and 0.1 to 200.0 parts by mass of the basic polymer (B), wherein a concentration of a basic group per gram of the basic polymer (B) is 5.0 mmol or less.

The composition of the present embodiment is a highly viscous composition having high dispersibility that is advantageous when producing an electrolyte membrane, and can impart excellent chemical durability to the electrolyte membrane obtained from the composition. The electrolyte membrane obtained from the composition of the present embodiment can be suitably used in a solid polymer electrolyte membrane, a membrane electrode assembly, and a solid polymer electrolyte fuel cell.

(Component A: Perfluorocarbon polymer having ion-exchange group)

The perfluorocarbon polymer having an ion-exchange group (A) in the present embodiment is not particularly limited, and representative examples include perfluorocarbon polymers having an ion-exchange group represented by formula (2), such as Nafion(R) (manufactured by DuPont, USA), Aciplex(R) (manufactured by Asahi Kasei Corporation, Japan), and Flemion(R) (manufactured by Asahi Glass Co., Ltd., Japan).

The perfluorocarbon polymer having an ion-exchange group is a polymer electrolyte having a fluorine atom within at least one repeating unit, and specific examples include, but are not limited to, perfluorocarbon polymer compounds having a structural unit represented by formula (2) .

$$-[CF_2CX^1X^2]_a-[CF_2-CF((-O-CF_2-CF(CF_2X^3))_b-O_c-(CFR^1)_d-(CFR^2)_e-(CF)_f-X^4)]_g- \quad (2)$$

In formula (2), $X^1$, $X^2$, and $X^3$ are each independently selected from the group consisting of halogen atoms and perfluoroalkyl groups having 1 to 3 carbon atoms.

The halogen atoms are not particularly limited, and examples include a fluorine atom, a chlorine atom, a bromine atom, and an iodine atom. A fluorine atom or a chlorine atom is preferable.

$X^4$ represents COOZ, $SO_3Z$, $PO_3Z_2$, or $PO_3HZ$.

Z is a hydrogen atom; an alkali metal atom such as a lithium atom, a sodium atom, or a potassium atom; an alkaline earth metal atom such as a calcium atom or a magnesium atom; or an amine selected from the group consisting of $NH_4$, $NH_3R^{x1}$, $NH_2R^{x1}R^{x2}$, $NHR^{x1}R^{x2}R^{x3}$, and $NHR^{x1}R^{x2}R^{x3}R^{x4}$. $R^{x1}$, $R^{x2}$, $R^{x3}$, and $R^{x4}$ each independently represent an alkyl group or an arene group.

The arene group is not particularly limited, and examples include residues obtained by removing one hydrogen atom from the nuclei of aromatic hydrocarbons (monocyclic rings or condensed rings having 6 to 16 carbon atoms). Specific examples include a phenyl group, a tolyl group, and a naphthyl group.

The alkyl group and the arene group may be substituted.

When $X^4$ is $PO_3Z_2$, Z may be the same or different.

The alkyl group in $R^{x1}$, $R^{x2}$, $R^{x3}$, and $R^{x4}$ is not particularly limited, and examples include monovalent groups represented by general formula $C_nH_{2n+1}$ wherein n represents an integer of 1 or more, preferably an integer of 1 to 20, and more preferably an integer of 1 to 10. Specific examples of the alkyl group in $R^{x1}$, $R^{x2}$, $R^{x3}$, and $R^{x4}$ include a methyl group, an ethyl group, a propyl group, a butyl group, a pentyl group, and a hexyl group.

$R^1$ and $R^2$ each independently represent a halogen atom or a perfluoroalkyl group or fluorochloroalkyl group having 1 to 10 carbon atoms. Examples of the halogen atom include a fluorine atom, a chlorine atom, a bromine atom and an iodine atom, and a fluorine atom or a chlorine atom is preferable.

a and g are numbers that satisfy $0 \le a < 1$, $0 < g \le 1$, and $a+g=1$.

b is an integer of 0 to 8.

c is 0 or 1.

d, e, and f are each independently an integer of 0 to 6, provided that d, e, and f are not 0 at the same time.

When Z in formula (2) is an alkaline earth metal, two $X^4$ may form a salt with an alkaline earth metal, such as $(COO)_2Z$ or $(SO_3)_2Z$.

Among the perfluorocarbon polymers having an ion-exchange group, perfluorocarbon sulfonic acid polymers represented by formula (3) or (4) or metal salts thereof are more preferable.

$$-[CF_2CF_2]_a-[CF_2-CF((-O-CF_2-CF(CF_3))_b-O-(CF_2)_h-SO_3X)]_g- \qquad (3)$$

In formula (3), a and g are numbers that satisfy $0 \le a < 1$, $0 < g \le 1$, and $a+g=1$; b is an integer of 1 to 3; h is an integer of 1 to 8; and X is a hydrogen atom or an alkali metal atom.

$$-[CF_2CF_2]_a-[CF_2-CF((-O-(CF_2)_m-X^4)]_g- \qquad (4)$$

In formula (4), a and g are numbers that satisfy $0 \le a < 1$, $0 < g \le 1$, and $a+g=1$; m is an integer of 1 to 6; and $X^4$ represents $SO_3H$.

A perfluorocarbon polymer having an ion-exchange group, which is usable in the present embodiment, can be produced by, for example, polymerizing a precursor polymer represented by formula (I) and then carrying out alkali hydrolysis, acid treatment, or the like.

$$-[CF_2CX^1X^2]_a-[CF_2-CF((-O-CF_2-CF(CF_2X^3))_b-O_c-(CFR^1)_d-(CFR^2)_e-(CF_2)_f-X^5)]_g- \qquad (I)$$

In formula (I), $X^1$, $X^2$, and $X^3$ are each independently selected from the group consisting of halogen atoms and perfluoroalkyl groups having 1 to 3 carbon atoms.

Examples of the halogen atom include a fluorine atom, a chlorine atom, a bromine atom and an iodine atom, and a fluorine atom or a chlorine atom is preferable.

$X^5$ is $COOR^3$, $COR^4$, or $SO_2R^4$. $R^3$ is a hydrocarbon-based alkyl group having 1 to 3 carbon atoms. $R^4$ is a halogen atom.

$R^1$ and $R^2$ is each independently selected from the group consisting of a halogen atom and a perfluoroalkyl group and fluorochloroalkyl group having 1 to 10 carbon atoms. Examples of the halogen atom include a fluorine atom, a chlorine atom, a bromine atom and an iodine atom, and a fluorine atom or a chlorine atom is preferable.

a and g are numbers that satisfy $0 \le a < 1$, $0 < g \le 1$, and $a+g=1$.

b is an integer of 0 to 8.

c is 0 or 1.

d, e, and f are each independently an integer of 0 to 6, provided that d, e, and f are not 0 at the same time.

The precursor polymer represented by formula (I) can be produced by, for example, copolymerizing an olefin fluoride compound and a vinyl fluoride compound.

Here, examples of the olefin fluoride compound include, but are not particularly limited to, compounds represented by formula (1a).

$$CF_2=CX^1X^2 \qquad (1a)$$

In formula (1a), $X^1$ and $X^2$ are the same as $X^1$ and $X^2$ in formula (I).

Specific examples of the compounds represented by formula (1a) include $CF_2=CF_2$, $CF_2=CFCl$, and $CF_2=CCl_2$.

Examples of the vinyl fluoride compound include, but are not particularly limited to, compounds represented by formula (1b).

$$CF_2{=}CF((\text{-}O\text{-}CF_2\text{-}CF(CF_2X^3))_b\text{-}O_c\text{-}(CFR^1)_d\text{-}(CFR^2)_e\text{-}(CF_2)_f\text{-}X^5) \quad (1b)$$

In formula (1b), $X^3$, $X^5$, $R^1$, $R^2$, b, c, d, e, and f are the same as $X^3$, $X^5$, $R^1$, $R^2$, b, c, d, e, and f in formula (I).

Specific examples of the compounds represented by formula (1b) include $CF_2=CF(-O-(CF_2)_j-SO_2F)$, $CF_2=CF(-O-CF_2CF(CF_3)-O-(CF_2)_j-SO_2F)$, $CF_2=CF((-O-CF_2CF(CF_3))_j-(CF_2)_{j-1}-SO_2F)$, $CF_2=CF(-O-(CF_2)_j-CO_2R)$, $CF_2=CF(-O-CF_2CF(CF_3)-O-(CF_2)_j-CO_2R)$, $CF_2=CF(-(CF_2)_j-CO_2R)$, $CF_2=CF((-OCF_2CF(CF_3))_j-(CF_2)_2-CO_2R)$, wherein j represents an integer of 1 to 8, and R represents a hydrocarbon-based alkyl group having 1 to 3 carbon atoms.

The precursor polymer as described above can be synthesized by a known method. The synthesis method is not particularly limited, and examples include the following methods:

(i) Solution polymerization: a method in which a polymerization solvent such as a fluorine-containing hydrocarbon is used, and a vinyl fluoride compound and an olefin fluoride gas introduced and dissolved in the polymerization solvent are reacted and polymerized.
Here, the fluorine-containing hydrocarbon is not particularly limited, and, for example, compounds collectively referred to as "Freons" such as trichlorotrifluoroethane and 1,1,1,2,3,4,4,5,5,5-decafluoropentane can be suitably used.
(ii) Bulk polymerization; a method in which a solvent such as a fluorine-containing hydrocarbon is not used, and a vinyl fluoride compound is polymerized using the vinyl fluoride compound itself as a polymerization solvent.
(iii) Emulsion polymerization: a method in which an aqueous solution of a surfactant is used as a polymerization solvent, and a vinyl fluoride compound and an olefin fluoride gas introduced and dissolved in the polymerization solvent are reacted and polymerized.
(iv) Miniemulsion polymerization and microemulsion polymerization; a method in which an aqueous solution of an interface polymerizing agent and an emulsifying aid such as alcohol is used, and a vinyl fluoride compound and an olefin fluoride gas introduced and emulsified in the aqueous solution are reacted and polymerized.
(v) Suspension polymerization: a method in which an aqueous solution of a suspension stabilizer is used, and a fluorinated vinyl compound and a fluorinated olefin gas introduced and suspended in the aqueous solution are reacted and polymerized.

In the present embodiment, the melt mass flow rate (hereinafter sometimes abbreviated as "MFR") can be used as an index of the degree of polymerization of the precursor polymer.

In the present embodiment, from the viewpoint of facilitating the molding process, the MFR of the precursor polymer is preferably 0.01 or more, more preferably 0.1 or more, and even more preferably 0.3 or more. The upper limit of the MFR is not particularly limited and, from the viewpoint of facilitating the molding process, is preferably 100 or less, more preferably 50 or less, and even more preferably 10 or less.

The precursor polymer produced as described above is hydrolyzed in a basic reaction solution, sufficiently washed with warm water or the like, and treated with acid. By this hydrolysis and acid treatment, for example, the perfluorocarbon sulfonic acid resin precursor is protonated and becomes a perfluorocarbon sulfonic acid resin in an $SO_3H$ form.

The perfluorocarbon polymer having an ion-exchange group (A) in the present embodiment preferably has an ion-exchange capacity of 0.5 to 3.0 meq/g, and preferably contains an ion-exchange group so as to satisfy this condition. With the ion-exchange capacity being 3.0 meq/g or less, swelling of a polymer electrolyte membrane containing the polymer electrolyte under high temperature, high-humidity conditions during the operation of a fuel cell tends to be reduced. Reduced swelling of the polymer electrolyte membrane can address problems such as reduction in the strength of the polymer electrolyte membrane, separation from electrodes caused by wrinkles, and, moreover, deterioration of gas barrier properties. On the other hand, with the ion-exchange capacity being 0.5 meq/g or more, a fuel cell including a polymer electrolyte membrane satisfying such a condition can favorably maintain its power generating capacity. From these viewpoints, the ion-exchange capacity of the perfluorocarbon polymer having an ion-exchange group (component A) is more preferably 0.6 to 2.8 meq/g and even more preferably 1.3 to 2.5 meq/g.

The ion-exchange capacity of the perfluorocarbon polymer having an ion-exchange group in the present embodiment is measured as follows.

First, a membrane made of a polymer electrolyte in which the counter ion of an ion-exchange group is in a proton state is immersed in a saturated aqueous NaCl solution at 25°C, and the aqueous solution is stirred for a sufficient period of time. Then, protons in the saturated aqueous NaCl solution are subjected to neutralization titration with a 0.01 N aqueous sodium hydroxide solution. After neutralization and filtration, the obtained membrane made of a polymer electrolyte in which the counter ion of the ion-exchange group is in a sodium ion state is rinsed with pure water, vacuum-dried, and weighed. The equivalent weight EW (g/eq) is determined from the following equation, where M (mmol) is the molar amount of sodium hydroxide required for neutralization, and W (mg) is the mass of a membrane made of a polymer electrolyte in which the counter ion of the ion-exchange group is a sodium ion:

$$EW=(W/M)-22$$

(Component B: Basic polymer)

The basic polymer (B) in the present embodiment is a polymer containing a basic group. Also, the basic polymer (B) in the present embodiment satisfies that the basic polymer (B) is a fine particle and/or the concentration of the basic group per gram of the basic polymer (B) is 5.0 mmol or less.

The basic polymer (B) in the present embodiment is preferably a polymer containing at least one structure derived from a nitrogen-containing aliphatic compound and/or a nitrogen-containing aromatic compound as a basicity imparting structure. The basic polymer (B) in the present embodiment is more preferably a polymer containing an imide and/or an amide structure.

The basic polymer (B) in the present embodiment is preferably a polymer containing a structure derived from an aromatic imide from the viewpoint of heat resistance and chemical durability when an electrolyte membrane is formed.

The basicity imparting structure is preferably contained in the main chain and/or the side chain of the polymer. The basicity imparting structure is preferably a structure derived from a nitrogen-containing aromatic compound from the viewpoint of heat resistance, and examples of such nitrogen-containing aromatic compounds include, but are not limited to, aniline, pyrrole, imidazole, pyrazole, triazole, tetrazole, isoindole, indole, benzimidazole, indazole, benzotriazole, imidazopyridine, imidazopyrimidine, pyrazolopyrimidine, triazolopyrimidine, oxazole, benzoxazole, thiazole, benzothiazole, and isothiazole.

The basic polymer (B) preferably contains an azole ring structure. The basic polymer (B) preferably contains one or more structures selected from the group consisting of an imidazole ring, a benzimidazole ring, an oxazole ring, a benzoxazole ring, a thiazole ring, and a benzothiazole ring, more preferably contains an imidazole structure, and even more preferably contains a benzimidazole structure.

From the viewpoint of dispersibility when formed into a composition with the perfluorocarbon polymer having an ion-exchange group (A), the basic polymer (B) contained in the composition of the present embodiment preferably has a basic group concentration of 5.0 mmol or less, more preferably 3.0 mmol or less, and even more preferably 2.5 mmol or less per gram of the basic polymer (B) .

From the viewpoint of chemical durability of an electrolyte membrane obtained from the composition, the basic group concentration is preferably 0.01 mmol or more, more preferably 0.03 mmol or more, and even more preferably 0.05 mmol or more.

When the basic group concentration is high, aggregation resulting from the interaction of particles on each other is likely to occur at the time of forming a composition with the perfluorocarbon polymer having an ion-exchange group (A). Accordingly, the surface area of basic polymer particle is reduced, and thus radicals generated therearound are unlikely to be captured. When radicals are unlikely to be captured, the electrolyte membrane is possibly deteriorated by the radicals, and thus the basic group concentration is preferably 5.0 mmol or less.

The basic polymer (B) may be formed into a fine particle as necessary, and from the viewpoint of facilitating pulverization for forming a fine particle, the imide and/or the amide structure is preferably contained elsewhere in the basic polymer (B). With an imide and/or an amide structure being contained in the main chain structure of the basic polymer (B) and the imide and/or the amide structure being contained between basicity imparting structures, the basic group concentration per gram of the basic polymer tends to be suppressed.

The concentration of the basic group of per gram of the basic polymer (B) can be measured by a known measurement method such as NMR. The basic polymer contained in the electrolyte membrane can be measured by NMR after dissolving the perfluorocarbon polymer having an ion-exchange group (A) of the electrolyte membrane by using hot water or a fluorine-based solvent and separating the basic polymer (B) by a known method such as centrifugation or pressure filtration.

The basic polymer (B) can be synthesized by one of or a combination of known synthesis methods, and examples of methods for producing the basic polymer (B) include the following methods:

(a) a method involving reacting a diamine having an azole ring structure with a tetracarboxylic dianhydride;
(b) a method involving reacting a diamine having an azole ring structure with a dicarboxylic acid chloride;
(c) a method involving subjecting a diamine having an azole ring structure and a dicarboxylic acid to a dehydrative condensation reaction;
(d) a method involving subjecting a dicarboxylic acid having an azole ring structure and a diamine to a dehydrative condensation reaction;
(e) a method involving converting a dicarboxylic acid having an azole ring structure to a diacid chloride and then reacting the diacid chloride with a diamine;

(f) a method involving reacting a compound having an azole ring structure and also having an amino group and a hydroxy group with a tetracarboxylic dianhydride;

(g) a method involving reacting a tetraamine with a dicarboxylic acid to form an oligomer having an azole ring structure and then further conducting the reaction by using the reaction of (a) to (f);

(h) a method involving allowing a monofunctional compound having an azole ring to react with a terminal of a polymer having an imide and/or an amide structure; and

(i) a method involving reacting a monofunctional compound having an azole ring with a polymer having an imide and/or an amide structure to form a side chain.

Below, compounds usable in reactions (a) to (i) above will now be described. The compounds may not only be used singly, but also be subjected to the reactions in combinations of two or more.

Bifunctional compounds having an azole ring structure, i.e., diamines having an azole ring structure, dicarboxylic acids having an azole ring structure, and compounds having an azole ring structure and further having an amino group and a hydroxy group are not particularly limited, and examples include 5-amino-2-mercaptobenzimidazole, 6-amino-2-mercaptobenzimidazole, 2-amino-4-hydroxybenzimidazole, 2-(4-carboxyphenyl)-5-carboxybenzimidazole, 5-amino-2-(4-aminophenyl)benzimidazole, 5-amino-2-mercaptobenzothiazole, 6-amino-2-mercaptobenzothiazole, 2-amino-4-hydroxybenzothiazole, 2-(4-carboxyphenyl)-5-carboxybenzothiazole, 5-amino-2-(4-aminophenyl)benzothiazole, 5-amino-2-mercaptobenzoxazole, 6-amino-2-mercaptobenzoxazole, 2-amino-4-hydroxybenzoxazole, 2-(4-carboxyphenyl)-5-carboxybenzoxazole, and 5-amino-2-(4-aminophenyl)benzoxazole.

These bifunctional compounds having an azole ring structure may further have a substituent.

The monofunctional compounds having an azole ring are not particularly limited, and examples include 2-aminobenzimidazole, 2-mercaptobenzimidazole, 2-hydroxybenzimidazole, 5-aminobenzimidazole, 5-carboxybenzimidazole, 5-phenylbenzimidazole-2-thiol, (2-benzimidazolylthio)acetic acid, 2-(4-aminophenyl)benzimidazole, 2-(2-hydroxyphenyl)benzimidazole, 2-aminobenzothiazole, 2-mercaptobenzothiazole, 2-hydroxybenzothiazole, 5-aminobenzothiazole, 5-carboxybenzothiazole, 5-phenylbenzothiazole-2-thiol, (2-benzothiazolylthio)acetic acid, 2-(4-aminophenyl)benzothiazole, 2-(2-hydroxyphenyl)benzothiazole, 2-aminobenzoxazole, 2-mercaptobenzoxazole, 2-hydroxybenzoxazole, 5-aminobenzoxazole, 5-carboxybenzoxazole, 5-phenylbenzoxazole-2-thiol, (2-benzoxazolylthio)acetic acid, and 2-(4-aminophenyl)benzoxazole, 2-(2-hydroxyphenyl)benzoxazole.

These monofunctional compounds having an azole ring structure may further have a substituent.

Specific examples of compounds that can react with bifunctional compounds having an azole ring structure are as follows.

Examples of the tetracarboxylic dianhydride include aromatic tetracarboxylic dianhydride, aliphatic tetracarboxylic dianhydride, and alicyclic tetracarboxylic dianhydride.

The aromatic tetracarboxylic dianhydride is not particularly limited, and examples include 4,4'-(hexafluoroisopropylidene)diphthalic anhydride, 5-(2,5-dioxotetrahydro-3-furanyl)-3-methyl-cyclohexene-1,2-dicarboxylic dianhydride, pyromellitic dianhydride, 1,2,3,4-benzenetetracarboxylic dianhydride, 3,3',4,4'-benzophenonetetracarboxylic dianhydride, 2,2',3,3'-benzophenonetetracarboxylic dianhydride, 3,3',4,4'-biphenyltetracarboxylic dianhydride, 3,3',4,4'-diphenylsulfonetetracarboxylic dianhydride, 2,2',3,3'-biphenyltetracarboxylic dianhydride, methylene-4,4'-diphthalic dianhydride, 1,1'-ethylidene-4,4'-diphthalic dianhydride, 2,2'-propylidene-4,4'-diphthalic dianhydride, 1,2-ethylene-4,4'-diphthalic dianhydride, 1,3-trimethylene-4,4'-diphthalic dianhydride, 1,4-tetramethylene-4,4'-diphthalic dianhydride, 1,5-pentamethylene-4,4'-diphthalic dianhydride, 4,4'-oxydiphthalic dianhydride, thio-4,4'-diphthalic dianhydride, sulfonyl-4,4'-diphthalic dianhydride, 1,3-bis(3,4-dicarboxyphenyl)benzene dianhydride, 1,3-bis(3,4-dicarboxyphenoxy)benzene dianhydride, 1,4-bis(3,4-dicarboxyphenoxy)benzene dianhydride, 1,3-bis[2-(3,4-dicarboxyphenyl)-2-propyl]benzene dianhydride, 1,4-bis[2-(3,4-dicarboxyphenyl)-2-propyl]benzene dianhydride, bis[3-(3,4-dicarboxyphenoxy)phenyl]methane dianhydride, bis[4-(3,4-dicarboxyphenoxy)phenyl]methane dianhydride, 2,2'-bis[3-(3,4-dicarboxyphenoxy)phenyl]propane dianhydride, 2,2'-bis[4-(3,4-dicarboxyphenoxy)phenyl]propane dianhydride, bis(3,4-dicarboxyphenoxy)dimethylsilane dianhydride, 1,3-bis(3,4-dicarboxyphenyl)-1,1',3,3'-tetramethyldisiloxane dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 3,4,9,10-perylenetetracarboxylic dianhydride, 2,3,6,7-anthracenetetracarboxylic dianhydride, and 1,2,7,8-phenanthrenetetracarboxylic dianhydride.

The aliphatic tetracarboxylic dianhydride is not particularly limited, and examples include ethylenetetracarboxylic dianhydride and 1,2,3,4-butanetetracarboxylic dianhydride.

The alicyclic tetracarboxylic dianhydride is not particularly limited, and examples include 1,2,3,4-cyclobutanetetracarboxylic dianhydride, cyclopentanetetracarboxylic dianhydride, cyclohexane-1,2,3,4-tetracarboxylic dianhydride, cyclohexane-1,2,4,5-tetracarboxylic dianhydride, 3,3',4,4'-bicyclohexyltetracarboxylic dianhydride, carbonyl-4,4'-bis(cyclohexane-1,2-dicarboxylic) dianhydride, methylene-4,4'-bis(cyclohexane-1,2-dicarboxylic) dianhydride, 1,2-ethylene-4,4'-bis(cyclohexane-1,2-dicarboxylic) dianhydride, 1,1'-ethylidene-4,4'-bis(cyclohexane-1,2-dicarboxylic) dianhydride, 2,2'-propylidene-4,4'-bis(cyclohexane-1,2-dicarboxylic) dianhydride, oxy-4,4'-bis(cyclohexane-1,2-dicarboxylic) dianhydride, thio-4,4'-bis(cyclohexane-1,2-dicarboxylic) dianhydride, sulfonyl-4,4'-bis(cyclohexane-1,2-dicarboxylic) dianhydride, bicyclo[2,2,2]oct-7-ene-2,3,5,6-tetracarboxylic dianhydride, rel-[1S,5R,6R]-3-oxabicyclo[3,2,1]octane-2,4-dione-6-spiro-3'-(tetrahydrofuran-2',5'-dione), 4-(2,5-dioxotetrahydrofuran-3-yl)-1,2,3,4-tetrahydronaphthalene-1,2-dicarboxylic dianhydride, ethylene glycol bis-(3,4-dicarboxylic dianhydride phenyl) ether, and 4,4'-biphenylbis(trimellitic monoester dianhydride).

Among the aromatic tetracarboxylic dianhydrides, aliphatic tetracarboxylic dianhydrides, and alicyclic tetracarboxylic dianhydrides, the aromatic tetracarboxylic dianhydrides are preferably used from the viewpoint of heat resistance.

As for the structure of the basic polymer (B), from the viewpoint of suppressing an interaction between the ion-exchange group moiety and the azole ring when forming a composition with the perfluorocarbon polymer having an ion-exchange group (A), a unit containing an azole ring and a unit not containing an azole ring are preferably copolymerized. It is also preferable to carry out two-step polymerization, i.e., block copolymerization, in which a base having an azole ring structure and an acid anhydride are copolymerized to form an oligomer, and then a base not having an azole ring structure is added for further polymerization.

In the basic polymer (B) contained in the composition of the present embodiment, the content of the unit containing an azole ring based on the sum of the unit containing an azole ring and the unit not containing an azole ring is preferably 70 mol% or less, more preferably 55 mol% or less, and even more preferably 50 mol% or less, from the viewpoint of dispersibility. From the viewpoint of chemical durability, the content is preferably 10 mol% or more, more preferably 15 mol% or more, even more preferably 18 mol% or more, and yet more preferably 20 mol% or more.

The structure of the basic polymer (B) preferably contains a unit represented by formula (II).

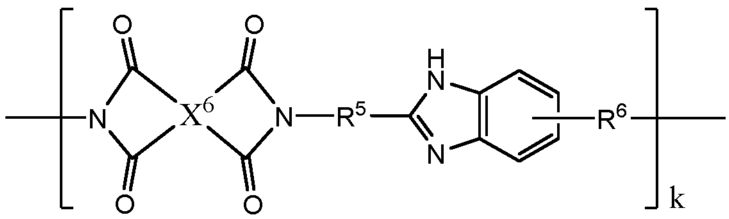

(II)

In formula (II), $X^6$ represents a tetravalent organic group, $R^5$ represents a divalent organic group, $R^6$ represents a divalent organic group or a single bond, and k is an integer of 1 to 1000.

In formula (II), $X^6$ is preferably a tetravalent aliphatic organic group, or a tetravalent aromatic organic group having 6 to 50 carbon atoms. The number of carbon atoms in the organic group is preferably 6 to 36 and more preferably 6 to 20. From the viewpoint of heat resistance, $X^6$ preferably contains an aromatic ring.

In formula (II), $R^5$ is preferably a divalent aliphatic organic group, or a divalent aromatic organic group having 6 to 20 carbon atoms. The number of carbon atoms in the organic group is preferably 6 to 12 and more preferably 6 to 10. From the viewpoint of heat resistance, $R^5$ preferably contains an aromatic ring.

In formula (II), $R^6$ is preferably a single bond or a divalent aliphatic organic group or aromatic organic group having 6 to 20 carbon atoms.

The structure of the basic polymer (B) preferably contains a unit represented by formula (1).

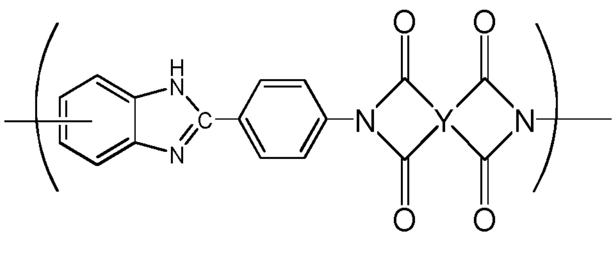

(1)

In formula (1), Y represents a tetravalent organic group.

The tetravalent organic group corresponding to Y in formula (1) is not particularly limited, and is preferably a tetravalent organic group represented by formula (D1).

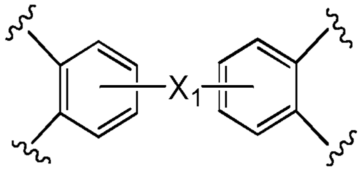

(D1)

In formula (D1), $X_1$ is selected from the following group.

-O- $(X_1\text{-}1)$

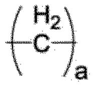

$(X_1-2)$

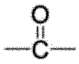

$(X_1-3)$

-S- $(X_1\text{-}4)$

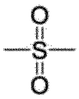

$(X_1-5)$

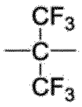

$(X_1-6)$

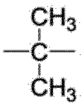

$(X_1-7)$

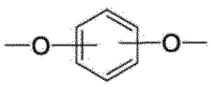

$(X_1-8)$

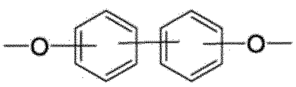

$(X_1-9)$

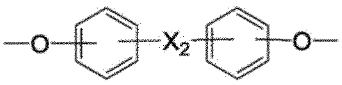

$(X_1-10)$

-O- $(X_2\text{-}1)$

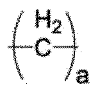 $(X_2-2)$

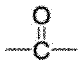 $(X_2-3)$

-S- $(X_2-4)$

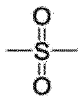 $(X_2-5)$

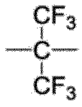 $(X_2-6)$

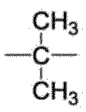 $(X_2-7)$

The molecular weight of the basic polymer (B) is preferably 300 or more, more preferably 1000 or more, and even more preferably 5000 or more in terms of weight average molecular weight Mw from the viewpoint of heat resistance. The weight average molecular weight Mw is preferably 500000 or less, more preferably 300000 or less, and even more preferably 100000 or less from the viewpoint of production stability.

Here, the weight average molecular weight refers to a molecular weight measured by gel permeation chromatography against a polystyrene standard having a known number average molecular weight Mn.

The molecular weight distribution Mw/Mn of the basic polymer (B) in the present embodiment is preferably 2.60 or less, more preferably 2.50 or less, and even more preferably 2.40 or less. The lower limit of the molecular weight distribution is not particularly limited, and is usually 1.20 or more.

The terminal structure of the basic polymer is not particularly limited, and the starting material used in polymerization, such as a carboxylic acid or an amine, may be retained as-is or may be used after modification.

A solvent may be used in the synthesis of the basic polymer. The solvent is not particularly limited, and aprotic solvents are preferable from the viewpoint of uniformly carrying out the reaction, such as N-methyl pyrrolidone, N,N-dimethylacetamide, N,N-dimethylformamide, γ-butyrolactone, and N,N-dimethyl sulfoxide.

The form of the basic polymer (B) in the present embodiment is not particularly limited, and is preferably in a particle form. Due to being in a particle form, the basic polymer exerts good filterability and makes it possible to form a highly viscous composition, the particle of which is unlikely to precipitate when formed into a composition together with the component (A). The basic polymer (B) is more preferably in the form of a fine particle.

The method for forming the basic polymer (B) into the fine particle is described below, but is not limited to those exemplified below, and known pulverization methods can be used. The Fine particle can be formed by two or more methods in combination.

Examples of the pulverization method include cryomilling, a dry jet mill, a wet jet mill, a hammer mill, a vibrating mill, a roller mill, a tumbling mill, a pin disc mill, a dry beads mill, a wet beads mill, an impact shear mill, a high-pressure fluid collision mill, a dry ball mill, and a wet ball mill. Examples of methods for obtaining the fine particle of the basic polymer include a method involving spray-drying a reaction solution of the basic polymer into the fine particle and a method involving bringing a reaction solution into contact with a poor solvent to precipitate the fine particle.

The fine particle of the basic polymer can be used as-is, and can also be used after classification to regulate the particle size distribution. Examples of classification methods include, but are not limited to, a method involving sieving, a method involving classification according to the air resistance of a particle by using an air flow, a method involving centrifugal separation, and a method involving an electric field to classify the particle according to the moving speed of an electrically charged particle. The method is not limited to those exemplified, and known classifying methods can be

used.

In the case of wet pulverization, any solvent can be used as long as the basic polymer is not degenerated.

A dispersant may be added as long as the effects of the present embodiment are not impaired.

The particle diameter of the basic polymer (B) in the present embodiment is measured in terms of volume, and is preferably evaluated according to the primary particle diameter. Accordingly, it is preferable that, in order to disperse particles that have undergone secondary aggregation, a suitable dispersion medium is used, and the diameter of particles dispersed by ultrasonic waves or the like is evaluated.

When the basic polymer (B) is a fine particle, the abundance of the fine particle having a particle diameter exceeding 5.0 μm measured in terms of volume is preferably 10% or less, more preferably 8% or less, and even more preferably 6% or less from the viewpoint of membrane uniformity when the membrane is formed.

Also, when the basic polymer (B) is a fine particle, the abundance of the fine particle having a particle diameter exceeding 3.0 μm measured in terms of volume is preferably 10% or less, more preferably 8% or less, and even more preferably 6% or less from the viewpoint of facilitating the filtration of the composition.

When the basic polymer (B) is a fine particle, as for the distribution of the fine particle, the abundance of a particle having a particle diameter within the range of 0.05 μm or more and 1.00 μm or less measured in terms of volume is preferably 50% or more, more preferably 60% or more, and even more preferably 70% or more from the viewpoint of enhancing chemical durability.

When the basic polymer (B) is a fine particle, the average diameter of the fine particle measured in terms of volume is preferably 5.00 μm or less, more preferably 3.00 μm or less, and even more preferably 2.00 μm or less from the viewpoint of membrane uniformity when a membrane is formed.

The average value is preferably 0.10 μm or more, more preferably 0.12 μm or more, and even more preferably 0.15 μm or more from the viewpoint of smoothly pulverizing a fine-particle slurry.

Herein, "fine particle" refer to a particle having an average diameter of less than 7.5 μm, and a particle having an average diameter of 7.5 μm or more is regarded as an ordinary particle.

The average diameter and the particle size distribution set forth above can be measured by, for example, the methods described in the Examples below. The average diameter and the particle size distribution can be regulated to the aforementioned preferable ranges by various known methods described above.

The composition of the present embodiment can be formed into an electrolyte membrane. That is, one aspect of the present embodiment is an electrolyte membrane comprising the composition of the present embodiment. The average diameter of the particle of the basic polymer (B) in the electrolyte membrane of the present embodiment can be measured by capturing a cross-sectional image in the membrane thickness direction of the electrolyte membrane under a scanning electron microscope (SEM) of 2000 magnification and analyzing a 62.8 μm × 26.0 μm range.

Figure 11 shows an image obtained by extracting a 62.8 μm × 26.0 μm range of an image captured by a SEM of 2000 magnification.

For analysis, by using image processing software ImageJ 1.50i, noises were removed by setting 2 pix at the median filter, the background was processed by setting 50 pix at Subtract Background, binarization was performed by Triangle Method, and then all particles detected within an analytical visual field were analyzed at Analyze Particles to output the region of each particle. Figure 12 is an image after binarization, and Figure 13 is an image after analysis and extraction of particle portions at Analyze Particles.

Subsequently, particle diameter d was calculated from the area of each particle region that was output, assuming that the particle was circular. That is, the value of d was calculated for each particle such that $S=d/2\times d/2\times\pi$ where S is the area of a particle region, and d is the particle diameter assuming that the particle is circular.

Moreover, concerning the particle diameter d, the range from 0 nm to 10000 nm was equally divided into 100 sections, and the number of particle in each 100 nm section was counted. Calculating the average value of particle diameters d from the obtained counting results makes it possible to determine the average diameter of the particle of the basic polymer.

The average diameter of the particle of the basic polymer (B) in the membrane obtained in the above-described analysis is preferably 5.00 μm or less, more preferably 3.00 μm or less, and even more preferably 2.00 μm or less from the viewpoint of enhancing the chemical durability of the membrane when the membrane is formed. The average diameter is preferably 0.10 μm or more, more preferably 0.12 μm or more, and even more preferably 0.15 μm or more from the viewpoint of smoothly pulverizing a fine-particle slurry.

As for the particle diameter of the basic polymer in the membrane, the proportion of a particle having a particle diameter d exceeding 5.0 μm among the particles subjected to the analysis described above is 10% or less, more preferably 8% or less, and even more preferably 6% or less from the viewpoint of membrane uniformity when the membrane is formed. As for the particle diameter of the basic polymer, the proportion of the particle exceeding 3.0 μm is preferably 10% or less, more preferably 8% or less, and even more preferably 6% or less from the viewpoint of membrane uniformity.

As for the distribution of the basic polymer in the membrane, the particle having a particle diameter d within

the range of 0.05 μm or more and 1.00 μm or less among the particles subjected to the analysis described above is preferably 50% or more, more preferably 60% or more, and even more preferably 70% or more from the viewpoint of enhancing chemical durability.

The coefficient of variation concerning the electrolyte membrane of the present embodiment can be calculated from the standard deviation and the average value of the particle diameter obtained by the analysis described above. That is, the coefficient of variation can be determined from the following formula: Coefficient of variation = Standard deviation / Average value. The coefficient of variation of the particle diameter of the basic polymer in the membrane is preferably 0.10 or more, more preferably 0.20 or more, and even more preferably 0.30 or more from the viewpoint of membrane formability. From the viewpoint of enhancing membrane strength, the coefficient of variation is preferably 2.00 or less, more preferably 1.80 or less, even more preferably 1.50 or less, and yet more preferably 1.40 or less.

The basic polymer contained in the composition of the present embodiment can be a mixture of two or more basic polymers.

The method for preparing the composition of the present embodiment is not particularly limited as long as it is a method capable of uniformly mixing the perfluorocarbon polymer having an ion-exchange group (A) and the basic polymer (B), and mixing can be achieved by a known method. Examples of the method for preparing the composition include, but are not limited to, a method involving stirring with a magnetic stirrer, a method involving stirring by using a stirring blade, a method involving mixing by using a static mixer, and a method involving centrifugal mixing.

The composition of the present embodiment may contain a solvent capable of suspending the perfluorocarbon polymer having an ion-exchange group (A) as necessary. Examples of the solvent include water; protic organic solvents such as ethanol, methanol, n-propanol, isopropyl alcohol, butanol, and glycerin; and aprotic organic solvents such as N,N-dimethylformamide, N,N-dimethylacetamide, N-methylpyrrolidone. These may be used singly or in combinations of two or more.

Depending on the molding method and/or the application of the electrolyte membrane, the composition can be concentrated to regulate viscosity. Examples of the concentration method include, but are not particularly limited to, a method involving heating the composition to evaporate the solvent and a method involving reducing the pressure for concentration. The viscosity measured at 25°C is preferably 100 cP or more, more preferably 300 cP or more, and even more preferably 500 cP or more from the viewpoint of facilitating the labor of membrane formation. From the viewpoint of making it easy to regulate the membrane thickness, the viscosity is preferably 5000 cP or less, more preferably 4000 cP or less, and even more preferably 3500 cP or less.

A third component may be added to the composition of the present embodiment as necessary.

The third component is not particularly limited, and examples include hydrocarbon-based polymer electrolytes, thioether compounds, metal ions, and porous materials. The respective examples will now be described below.

(Hydrocarbon-Based Polymer Electrolyte)

The content of component A in the composition of the present embodiment is preferably 100% by mass based on the entirety of the polymer used as a polymer electrolyte from the viewpoint of chemical durability.

In addition to component A, the composition of the present embodiment may contain, for example, a hydrocarbon-based polymer electrolyte in any proportion. The hydrocarbon-based polymer electrolyte is not particularly limited as long as it is a hydrocarbon-based polymer having an ion-exchange group, and examples include polyphenylene sulfide, polyphenylene ether, polysulfone, polyether sulfone, polyether ether sulfone, polyether ketone, polyether ether ketone, polythioether ether sulfone, polythioether ketone, polythioether ether ketone, polybenzimidazole, polybenzoxazole, polyoxadiazole, polybenzoxazinone, polyxylylene, polyphenylene, polythiophene, polypyrrole, polyaniline, polyacene, polycyanogen, polynaphthyridine, polyphenylene sulfide sulfone, polyphenylene sulfone, polyimide, polyether imide, polyester imide, polyamide imide, polyarylate, aromatic polyamide, polystyrene, polyester, and polycarbonate. The content of the hydrocarbon-based polymer electrolyte is preferably 50% by mass or less and more preferably 20% by mass or less based on the entirety of the polymer used as the polymer electrolyte.

(Thioether Compound)

The composition of the present embodiment may contain a thioether compound. The thioether compound in the present embodiment is a compound having a chemical structure -(R-S)r- wherein S is a sulfur atom, R is a hydrocarbon group, and r is an integer of 1 or more.

Specific examples of the thioether compound include, but are not limited to, dialkyl thioethers such as dimethyl thioether, diethyl thioether, dipropyl thioether, methyl ethyl thioether, and methyl butyl thioether; cyclic thioethers such as tetrahydrothiophene and tetrahydroapirane; aromatic thioethers such as methyl phenyl sulfide, ethyl phenyl sulfide, diphenyl sulfide, and dibenzyl sulfide. These exemplified here may be used as thioether compounds as-is, and polymers obtained by using these exemplified here as monomers, such as polyphenylene sulfide (PPS), may be used as thioether

compounds.

From the viewpoint of durability, the thioether compound is preferably a polymer (an oligomer or a polymer) wherein r is 10 or more, and more preferably a polymer wherein r is 1,000 or more. A particularly preferable thioether compound is polyphenylene sulfide (PPS). Polyphenylene sulfide preferably usable in the present embodiment has a paraphenylene sulfide skeleton preferably in an amount of 70 mol% or more and more preferably 90 mol% or more.

The method for producing polyphenylene sulfide is not particularly limited, and examples include a method involving polymerizing a halogen-substituted aromatic compound (such as p-dichlorobenzene) in the presence of sulfur and sodium carbonate, a method involving polymerizing a halogen-substituted aromatic compound in a polar solvent in the presence of sodium sulfide or sodium hydrogen sulfide as well as sodium hydroxide, a method involving polymerizing a halogen-substituted aromatic compound in a polar solvent in the presence of hydrogen sulfide as well as sodium hydroxide or sodium aminoalkanoate, and a method involving the selfcondensation of p-chlorothiophenol. Among these, a method is suitably used that involves reacting sodium sulfide with p-dichlorobenzene in an amide solvent such as N-methylpyrrolidone or dimethylacetamide or in a sulfone solvent such as sulfolane.

Polyphenylene sulfide preferably contains an -SX group. In the -SX group, S represents a sulfur atom, and X represents an alkali metal atom or a hydrogen atom.

The content of the -SX group in polyphenylene sulfide is usually 10 μmol/g to 10,000 μmol/g, preferably 15 μmol/g to 10,000 μmol/g, and more preferably 20 μmol/g to 10,000 μmol/g.

A content of the -SX group within the above range means that there are many reaction active sites. By using polyphenylene sulfide having an -SX group content within the above range, miscibility with component A contained in the composition of the present embodiment is enhanced. Accordingly, it is considered that the dispersibility of polyphenylene sulfide in the composition is enhanced, and that an electrolyte membrane obtained from the composition has greater durability under high-temperature, low-humidity conditions.

A thioether compound having an acidic functional group that is introduced into the terminal can be suitably used as well. The acidic functional group to be introduced is preferably selected from the group consisting of a sulfonic acid group, a phosphoric acid group, a carboxylic acid group, a maleic acid group, a maleic anhydride group, a fumaric acid group, an itaconic acid group, an acrylic acid group, and a methacrylic acid group. A sulfonic acid group is more preferable.

The method for introducing an acidic functional group is not particularly limited, and a commonly used method is used. For example, when introducing a sulfonic acid group is introduced into a thioether compound, the sulfonic acid group can be introduced under known conditions using a sulfonating agent such as sulfuric anhydride or fuming sulfuric acid. More specifically, the sulfonic acid group can be introduced under conditions described in, for example, K. Hu, T. Xu, W. Yang, Y. Fu, Journal of Applied Polymer Science, Vol. 91, and E. Montoneri, Journal of Polymer Science: Part A: Polymer Chemistry, Vol. 27, 3043-3051 (1989).

A thioether compound in which the introduced acidic functional group is further substituted with a metal salt or an amine salt can be suitably used as well. An alkali metal salt such as a sodium salt or a potassium salt and an alkaline earth metal salt such as a calcium salt are preferable as metal salts.

When using the thioether compound in a powder form, the average particle size of the thioether compound is preferably 0.01 μm to 10.0 μm, more preferably 0.01 μm to 5.0 μm, even more preferably 0.01 μm to 3.0 μm, and yet more preferably 0.01 μm to 2.0 μm in order to favorably achieve effects such as a longer life by enhancing dispersibility in the composition. The average particle diameter of the thiol compound is a value measured by a laser diffraction/scattering particle size distribution analyzer (e.g., model number: LA-950, manufactured by Horiba Ltd.).

Examples of methods for finely dispersing the thioether compound in the composition include a method involving applying high shear when melt-kneading the thioether compound with component A and component B to pulverize and finely disperse the thioether compound, and a method involving obtaining a mixed solution of the thioether compound, the component A, and the component B, then subjecting the solution to filtration to remove a particle of coarse thioether compound, and using the post-filtration solution. The melt viscosity of polyphenylene sulfide suitably used when performing melt-kneading is preferably 1 to 10,000 poise and more preferably 100 to 10,000 poise from the viewpoint of moldability. The melt viscosity is a value obtained by using a flow tester such that polyphenylene sulfide is retained at 300°C under a load of 196 N at a L/D (L: orifice length, D: orifice inner diameter) = 10/1 for 6 minutes.

The ratio (Wa/Wd) of the mass (Wa) of component A (the total amount of component A contained in the composition) to the mass (Wd) of the thioether compound is preferably 60/40 to 99.99/0.01, more preferably 70/30 to 99.95/0.05, even more preferably from 80/20 to 99.9/0.1, and yet more preferably from 90/10 to 99.5/0.5. With the mass ratio being 60 or more, even better ion conductivity can be achieved, and even better battery characteristics can be achieved. On the other hand, with the mass ratio of the thioether compound being 40 or less, durability during battery operation under high-temperature, low-humidity conditions can be enhanced.

(Metal Ion)

Metal ions can also be added to the composition of the present embodiment from the viewpoint of further enhancing chemical durability. As metal ions, transition metal ions are preferable.

The transition metal ions are not particularly limited, and examples include scandium ions, titanium ions, vanadium ions, chromium ions, manganese ions, iron ions, cobalt ions, nickel ions, copper ions, zinc ions, yttrium ions, zirconium ions, niobium ions, niobium ions, molybdenum ions, technetium ions, ruthenium ions, rhodium ions, palladium ions, silver ions, cadmium ions, lanthanum ions, cerium ions, praseodymium ions, neodymium ions, promethium, samarium ions, europium ions, gadolinium ions, terbium ions, dysprosium ions, holmium ions, erbium ions, thulium ions, ytterbium ions, lutetium ions, hafnium ions, tantalum ions, tungsten ions, rhenium ions, osmium ions, iridium ions, platinum ions, and gold ion. From the viewpoint of effectively enhancing the function to decompose hydrogen peroxide, cerium ions are preferable. Cerium ions may be in a +3 or +4 oxidation state, but the oxidation state is not particularly limited in the present embodiment.

(Porous Material)

The composition and the electrolyte membrane of the present embodiment may be reinforced with a porous material which is contained in the composition and the electrolyte membrane by a known method. Examples of known reinforcing methods include, but are not limited to, reinforcement by adding fibrillated PTFE (Japanese Unexamined Patent Application Publication No. 53-149881 and Japanese Examined Patent Application Publication No. 63-61337), reinforcement with a stretched PTFE porous membrane (see Japanese Examined Patent Application Publication No. 5-75835 and Japanese Unexamined Patent Application Publication (Translation of PCT Application) No. 11-501964), reinforcement with an electrospun membrane (Japanese Unexamined Patent Application Publication No. 2008-243420), reinforcement with a wet phase separation membrane (Japanese Unexamined Patent Application Publication No. 2003-297393).

The composition of the present embodiment can also be used after filtration for, for example, removing foreign matter in component A, foreign matter in component B, and foreign matter in other components. The filtration method is not particularly limited, and is, for example, a method involving pressure filtration.

The solids concentration in the composition of the present embodiment is not particularly limited, and is preferably 5% or more, more preferably 8% or more, and even more preferably 10% or more, from the viewpoint of facilitating the formation of the electrolyte membrane. The solids concentration is preferably 50% or less, more preferably 40% or less, and even more preferably 35% or less from the viewpoint of facilitating filtration.

The solids concentration can be measured as follows. First, the mass W0 of a weighing bottle is precisely weighed. About 10 g of a specimen is placed in the measured weighing bottle, and the weight is precisely measured, which is regarded as W1. After being dried at 110°C at 0.10 MPa or less for 3 hours or longer, the specimen is cooled in a silica gel-packed desiccator. After reaching room temperature, the specimen is precisely weighed so as not to absorb moisture, and the weight is regarded as W2. (W2-W0)/(W1-W0) is expressed in percent, and the above measurement is carried out a total of 5 times, and the average is regarded as the solids concentration.

<Electrolyte Membrane>

The electrolyte membrane of the present embodiment contains the composition of the present embodiment. The electrolyte membrane of the present embodiment is a membrane obtained by forming the composition of the present embodiment into a membrane. The electrolyte membrane of the present embodiment exerts excellent chemical durability.

The thickness of the electrolyte membrane of the present embodiment is not particularly limited, and is preferably 1 μm or more, more preferably 2 μm or more, and even more preferably 5 μm or more from the viewpoint of gas permeability.

The thickness is preferably 500 μm or less, more preferably 100 μm or less, and even more preferably 50 μm or less from the viewpoint of improving electroconductivity.

From the viewpoint of heat resistance during operation of the fuel cell, the electrolyte membrane of the present embodiment preferably has a glass transition temperature of 80°C or higher, more preferably 100°C or higher, even more preferably 120°C or higher, and yet more preferably 130°C or higher.

The glass transition temperature of the electrolyte membrane is measured in accordance with JIS-C-6481. Specifically, a test piece having a width of 5 mm is cut from a membrane electrolyte and heated at a rate of 2°C/min from room temperature by using a dynamic viscoelasticity analyzer, and the dynamic viscoelasticity and the loss tangent of the test piece are measured by the dynamic viscoelasticity analyzer. The peak temperature of the measured loss tangent is regarded as the glass transition temperature. The glass transition temperature can be regulated by controlling the structure, the molecular weight, the ion-exchange capacity, and the like of the perfluorocarbon polymer having an

ion-exchange group (A) contained in the composition.

The electrolyte membrane of the present embodiment may be reinforced with a porous membrane produced by a known technique, such as fibrilated PTFE, a stretched porous PTFE membrane, a nanofiber sheet obtained by electrospinning an organic resin, a membrane obtained by melt-spinning an organic resin, or a fiber-woven fabric.

(Method for Producing Electrolyte Membrane)

The electrolyte membrane of the present embodiment can be obtained by forming the composition of the present embodiment into a membrane by a known membrane forming method. The membrane forming method is not particularly limited, and examples include methods involving a knife coater, a blade coater, a dip coater, a gravure roll coater, a chamber doctor coater, a natural roll coater, a reverse roll coater, and the like.

After being formed as described above, the electrolyte membrane of the present embodiment is preferably further subjected to heat treatment from the viewpoint of mechanical strength. The temperature of heat treatment is preferably 100°C to 230°C, more preferably 110°C to 230°C, and even more preferably 120°C to 200°C. The time of heat treatment varies according to the temperature of heat treatment, and is preferably 5 minutes to 3 hours and more preferably 10 minutes to 2 hours from the viewpoint of obtaining a highly durable polymer electrolyte membrane.

<Membrane Electrode Assembly >

The membrane electrode assembly of the present embodiment contains the electrolyte membrane of the present embodiment. Accordingly, the membrane electrode assembly of the present embodiment can exert excellent chemical durability.

As described above, when using the electrolyte membrane of the present embodiment in a solid polymer electrolyte fuel cell, the electrolyte membrane can be used as a membrane electrode assembly (hereinafter referred to as a "MEA") in which two electrode catalyst layers, i.e., an anode and a cathode, are attached. What is obtained by respectively attaching a pair of gas diffusion layers to the opposite outer surfaces of the electrode catalyst layers is also referred to as a MEA.

Concerning the MEA or the electrolyte membrane of the present embodiment, dispersion of a particle can be verified by observing their cross-sections under a SEM or the like. A known method can be used for cutting the cross-section. For example, by using a cryomicrotome method, the cross-section of the electrolyte can be observed while minimizing deformation of the internal structure.

As for the analysis of a particle, a method involving analyzing elements of a particle portion observed on the cross-section of the electrolyte by using an X-ray microanalyzer or a method involving sampling a particle by microsampling or the like and performing IR analysis makes it possible to verify the constituent elements of the particle, a peak in the vicinity of 1780 $cm^{-1}$ characteristic of imide, and a peak in the vicinity of 1720 $cm^{-1}$ characteristic of amide.

Whether the composition of the present embodiment is contained in the electrolyte membrane and the MEA of the present embodiment can be verified in the above-described manner.

<Composite Membrane>

The electrolyte membrane of the present embodiment can be combined with another membrane to form a composite membrane. Another membrane may be a polyimide-containing membrane. That is, the composite membrane of the present embodiment is a composite membrane including the electrolyte membrane of the present embodiment and a polyimide-containing membrane. As the polyimide, a polyimide represented by formula (1) is preferable.

Moreover, the polyimide-containing membrane is preferably in a fiber sheet form.

<<Second Embodiment>>

[Composition]

The composition of the present embodiment is a composition containing a polyimide having a structure represented by formula (1) (hereinafter also referred to as the "polyimide in the present embodiment"). The polyimide in the present embodiment may contain a structural unit other than the structure represented by formula (1).

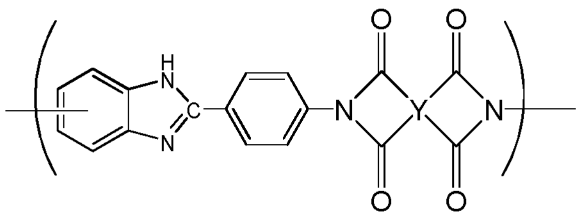

(1)

In formula (1), Y represents a tetravalent organic group.

The composition of the present embodiment may be in the state of a varnish containing the polyimide in the present embodiment and a solvent, or may be in the state of a solid containing the polyimide in the present embodiment, another polymer, and a filler. The composition of the present embodiment can also be formed into a solid state from a varnish state by a variety of known methods.

The composition of the present embodiment exerts excellent durability even under high-temperature, low-humidity conditions. The composition of the present embodiment has high affinity for a perfluorinated proton exchange membrane having an acidic group such as a sulfonic acid group or a carboxylic acid group. In particular, a composite membrane in which the composition of the present embodiment is used as a core material of an electrolyte membrane exerts excellent durability and ionic conductivity even under high-temperature, low-humidity conditions. Accordingly, the composition of the present embodiment can be suitably used as a core material of an electrolyte membrane.

The polyimide in the present embodiment is preferably a polyimide having a structure represented by formula (7) or (8).

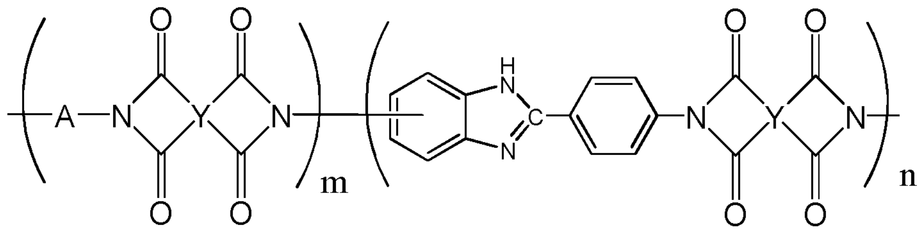

(7)

In formula (7), A represents a divalent organic group, Y represents a tetravalent organic group, m and n represent the number of repeating units, and a ratio m:n is 20:80 to 70: 30.

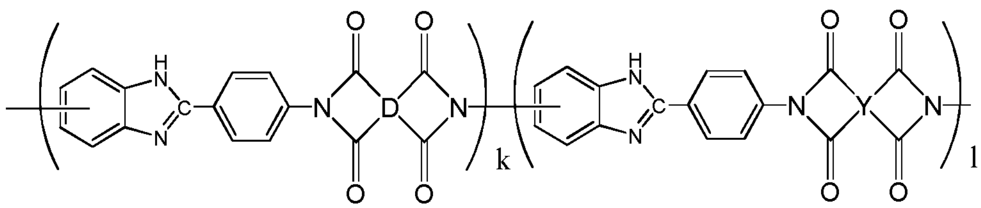

(8)

In formula (8), Y and D represent a tetravalent organic group, and a ratio k:l is 20:80 to 70:30.

The polyimide of formula (7) in the present embodiment contains repeating unit 1 that is present in the number indicated by m and repeating unit 2 that is present in the number indicated by n. It is considered that repeating unit 1 contributes to strength and solubility when the composition is formed into a core material and that repeating unit 2 contributes to strength and compatibility with an electrolyte membrane when the composition is formed into a core material. In particular, the imidazole group in repeating unit 2 is considered to contribute to compatibility with a polytetrafluoroethylene (PTFE)-based electrolyte membrane. Thus, from the viewpoint of ensuring solubility in a solvent and compatibility with an electrolyte membrane, the ratio m:n in formula (7) is preferably 20:80 to 70:30, more preferably 25:75 to 65:35, and even more preferably 30:70 to 60:40.

The polyimide of formula (8) in the present embodiment contains repeating unit 3 that is present in the number indicated by k and repeating unit 4 that is present in the number indicated by 1. It is considered that repeating unit 3 contributes to strength when the composition is formed into a core material and that repeating unit 4 contributes to solubility. The imidazole group present in both repeating units 3 and 4 is considered to contribute to compatibility as with the polyimide of formula (7). Thus, from the viewpoint of ensuring solubility in a solvent, compatibility with an electrolyte

membrane, and strength, the ratio k:l in formula (8) is preferably 20:80 to 70:30, more preferably 25:75 to 65:35, and even more preferably 30:70 to 60:40.

A larger amount of the imidazole group in the polyimide tends to result in increased flatness of the molecular structure and lowered solubility. Accordingly, from the viewpoint of the storage stability of the solution, the proportion of the imidazole group in the polyimide is preferably 50 mol% or less.

The divalent organic group represented by A in formula (7) is not particularly limited, and is preferably a divalent organic group represented by formula (A-1), (A-2), (A-3), or (A-4) from the viewpoint of solubility.

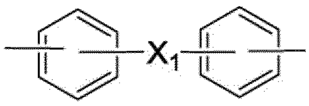

(A − 1)

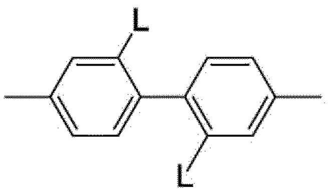

(A − 2)

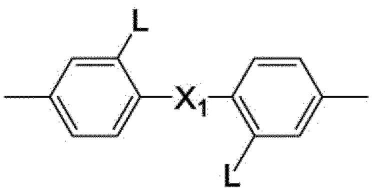

(A − 3)

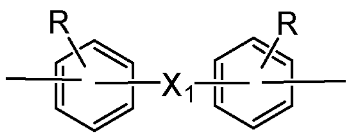

(A−4)

In formulas (A-1), (A-3), and (A-4), $X_1$ represents a divalent organic group selected from the group consisting of those represented by formulas ($X_1$-1) to ($X_1$-10) below, wherein $X_2$ in formula ($X_1$-10) represents a divalent organic group selected from the group consisting of those represented by formulas ($X_2$-1) to ($X_2$-7). In formulas (A-2) and (A-3), L represents a methyl group or a trifluoromethyl group, and in formula (A-4), R represents a hydroxyl group.

-O- ($X_1$-1)

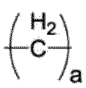

($X_1$−2)

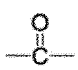

($X_1$−3)

-S- ($X_1$-4)

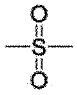 ($X_1-5$)

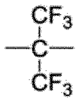 ($X_1-6$)

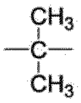 ($X_1-7$)

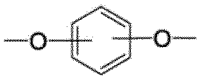 ($X_1-8$)

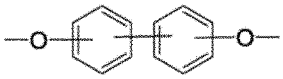 ($X_1-9$)

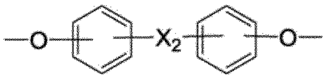 ($X_1-10$)

-O- ($X_2$-1)

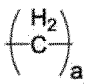 ($X_2-2$)

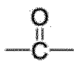 ($X_2-3$)

-S- ($X_2$-4)

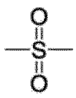 ($X_2-5$)

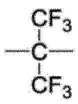 ($X_2-6$)

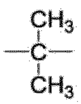 ($X_2-7$)

In formulas ($X_1$-2) and ($X_2$-2), a represents the number of repeating units and is an integer of 1 to 5.

Each benzene ring in formulas ($X_1$-8) to ($X_1$-10) may have a substituent such as a methyl group, an ethyl group, a methoxy group, a trifluoromethyl group, or a halogen.

Polyimides in general are poorly soluble in solvents, but polyimides having the structures represented by formulas (7) and (8) have excellent solubility, and it is thus easy to form the composition of the present embodiment into a solvent-containing polyimide solution. The polyimide solution can be easily processed into a porous membrane, nanofiber, film, and the like of a polyimide merely by removing the solvent, and thus has superior processability to polyimides that are poorly soluble in solvents and to polyimide precursors that require an imidization step. In particular, the porous membrane and the nanofiber can be suitably used as core materials of the electrolyte membrane.

In the present embodiment, from the viewpoint of solubility, A is particularly preferably represented by formula (A1) below.

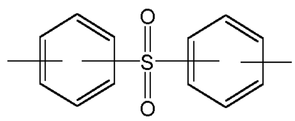

(A1)

That is, the polyimide in the present embodiment is preferably a polyimide having a structure represented by formula (5).

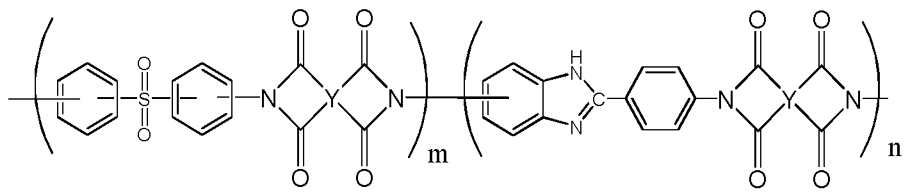

(5)

In formula (5), Y represents a tetravalent organic group, m and n represent the number of repeating units, and the ratio m:n is 20:80 to 70:30.

In formulas (1), (7), and (8) above, the tetravalent organic group corresponding to Y and D is not particularly limited, and is preferably a tetravalent organic group represented by formula (D1) from the viewpoint of solubility of polyimides having structures represented by formulas (1), (7) and (8) in a solvent and strength when the composition is used as a core material.

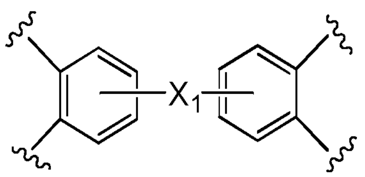

(D1)

In formula (D1), $X_1$ is the same as $X_1$ in formula (A-1) above.

$X_1$ in D1 is preferably a divalent organic group represented by formula ($X_1$-1) or ($X_1$-2).

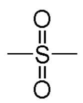

(X1-1)

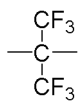

(X1-2)

In general, a polyimide can be synthesized by a condensation reaction between a diamine and an acid dianhydride.

Typically, the imidazole structure of the polyimide in the present embodiment can be introduced into a polyimide by reacting 5-amino-2-(4-aminophenyl)benzimidazole with an acid dianhydride, but the method is not limited thereto,

and the polyimide can be synthesized in the following manner.

It can be said that A in the polyimide in the present embodiment is a structure obtained from, for example, a diamine, and examples include, but are not limited to, divalent organic groups derived from 4,4'-oxydianiline (hereinafter also referred to as 4,4'-ODA), derived from 3,4'-oxydianiline (hereinafter also referred to as 3,4'-ODA), derived from 4,4'-methylenebisaniline (hereinafter also referred to as 4,4'-DDM), derived from 3,3'-methylenebisaniline (hereinafter also referred to as 3,3'-DDM), derived from 4,4'-diaminobenzophenone (hereinafter also referred to as 4,4'-DADPM), derived from 3,3'-diaminobenzophenone (hereinafter also referred to as 3,3'-DADPM), derived from 4,4'-diaminodiphenyl sulfide (hereinafter also referred to as 4,4'-ASD), derived from 3,3'-diaminodiphenyl sulfone (hereinafter also referred to as 3,3'-DDS), derived from 4,4'-diaminodiphenyl sulfone (hereinafter also referred to as 4,4'-DDS), derived from 4,4'-(hexafluoroisopropylidene)dianiline (hereinafter also referred to as 6FAP), derived from 4,4'-isopropylidenebisaniline (4,4'-isopropylidenedianiline), derived from 1,4-bis(4-aminophenoxy)benzene (hereinafter also referred to as TFE-Q), derived from 1,3-bis(4-aminophenoxy)benzene (hereinafter also referred to as TFE-R), derived from 4,4'-bis(4-aminophenoxy)biphenyl (hereinafter also referred to as BAPB), derived from 2,2-bis{4-(4-aminophenoxy)phenyl}propane (hereinafter also referred to as BAPP, derived from 2,2-bis{4-(4-aminophenoxy)phenyl}hexafluoropropane (hereinafter also referred to as HFBAPP), derived from bis{4-(4-aminophenoxy)phenyl}sulfone (hereinafter also referred to as BAPS), derived from bis{4-(3-aminophenoxy)phenyl}sulfone (hereinafter also referred to as BAPS-M), derived from 4,4'-diamino-2,2'-bis(trifluoromethyl)biphenyl (hereinafter also referred to as TFMB), derived from 4,4'-diamino-2,2'-dimethylbiphenyl (hereinafter also referred to as m-TB), derived from 4,4'-diamino-2,2'-dimethoxybiphenyl (hereinafter also referred to as m-DS), derived from 4,4'-diamino-2,2'-bis(trifluoromethyl)diphenyl ether (hereinafter also referred to as BTFDPE), derived from 1,4-bis{4-amino-2-(trifluoromethyl)phenoxy}benzene (hereinafter also referred to as FAPQ), derived from 2,2-bis(3-amino-4-hydroxyphenyl)propane (hereinafter also referred to as BPA-DA), derived from 2,2-bis(3-amino-4-hydroxyphenyl)hexafluoropropane (hereinafter also referred to as 6FHA), derived from 2,2-bis(3-amino-4-methylphenyl)hexafluoropropane, derived from bis(3-amino-4-hydroxyphenyl)sulfone (hereinafter also referred to as BPS-DA), and derived from 4,4'-diamino-3,3'-dimethyldiphenylmethane. A structure corresponding to A can be obtained by, for example, using these when forming a polyimide. The above structures may be contained singly or in combinations of two or more in any order.

It can be said that B and D in the polyimide in the present embodiment are structures each independently obtained from, for example, an acid dianhydride, and examples include, but are not limited to, tetravalent organic groups derived from 4,4'-oxydiphthalic anhydride: (hereinafter also referred to as "ODPA"), derived from 3,3',4,4'-benzophenonetetracarboxylic dianhydride (hereinafter also referred to as BTDA), derived from 3,3',4,4'-diphenylsulfonetetracarboxylic dianhydride (hereinafter also referred to as DSDA), and derived from 4,4'-(hexafluoroisopropylidene)diphthalic anhydride (hereinafter also referred to as 6FDA). A structure corresponding to B can be obtained by, for example, using these when forming a polyimide. The above structures may be contained singly or in combinations of two or more in any order.

D in the present embodiment can be a structure obtained from, for example, an acid dianhydride, and examples include structured cited for B above. 6FDA is particularly preferable from the viewpoint of solubility.

In the present embodiment, from the viewpoint of solubility, B or D is each independently represented by formula (B1), and more preferably represented by formula (Y1).

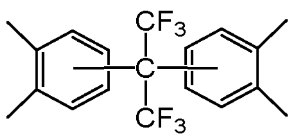

(B1)

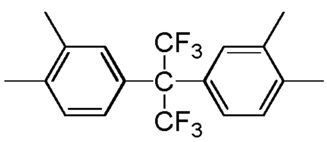

(Y1)

The polyimide in the present embodiment is preferably a polyimide having a structure represented by formula (6).

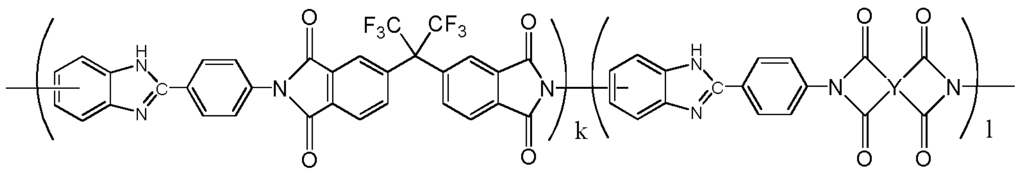

(6)

In formula (6), Y represents a tetravalent organic group, k and 1 represent the number of repeating units, and the ratio k:l is 20:80 to 70:30.

An organic group having an alicyclic structure is also preferable as the tetravalent organic group in the present embodiment.

Examples of the alicyclic structure include 1,2,3,4-cyclopentanetetracarboxylic dianhydride, 1,2,4,5-cyclohexanetetracarboxylic dianhydride, 1,2,3,4-cyclobutanetetracarboxylic dianhydride, and 4-(2,5-dioxotetrahydrofuran-3-yl)-1,2,3,4-tetrahydronaphthalene-1,2-dicarboxylic anhydride. The above acid dianhydrides may be used singly or in combinations of two or more. When A contains groups derived from two or more acid dianhydrides, the order of such groups is not limited.

The weight average molecular weight of the polyimide in the present embodiment is not particularly limited, and is preferably 300 or more, more preferably 1000 or more, and even more preferably 5000 or more from the viewpoint of heat resistance. From the viewpoint of production stability, the weight average molecular weight is preferably 500000 or less, more preferably 300000 or less, and even more preferably 100000 or less. Here, the weight average molecular weight refers to a molecular weight as measured by gel permeation chromatography against a polystyrene standard having a known number average molecular weight.

The molecular weight distribution Mw/Mn of the polyimide in the present embodiment is preferably 2.60 or less, more preferably 2.50 or less, and even more preferably 2.40 or less. The lower limit of the molecular weight distribution is not particularly limited, and is usually 1.50 or more.

When a processed article such as a porous material or a fiber sheet is produced from the composition of the present embodiment, the amount of residual volatile components in the processed article is preferably 10% by mass or less, more preferably 5% by mass or less, and even more preferably 3% by mass or less from the viewpoint of electrical properties when the processed article is used as a composite membrane.

The content of residual volatile components is expressed as a weight loss in a nitrogen atmosphere from 30°C to 350°C and, specifically, can be measured by the method described in the Examples.

The residual volatile components of the fiber sheet can be regulated to 10% by mass or less by, for example, providing a heat treatment step after preparing a processed article such as a fiber sheet.

Specifically, the amount of residual volatile components can be measured by the method described in the Examples below.

The synthesis method is not particularly limited, and the polyimide in the present embodiment can be synthesized in the following manner. That is, an acid dianhydride component and a diamine component as exemplified above are dissolved in an organic solvent, an azeotropic solvent such as toluene is added, water generated during imidization is removed out of the system, and thus the polyimide can be produced as the composition of the present embodiment containing a polyimide and a solvent (also referred to as a polyimide varnish). Here, the conditions during the reaction are not particularly limited, and, for example, the reaction temperature is 0°C to 200°C, and the reaction time is 3 to 72 hours. In order to allow the reaction with a sulfone group-containing diamine to sufficiently proceed, it is preferable to carry out a heating reaction at 180°C for about 12 hours. The reaction may be carried out in air, and is preferably carried out in an inert atmosphere such as argon or nitrogen. In the reaction, an imidization catalyst such as pyridine, triethylamine, imidazole, or acetic anhydride may be used.

In the present embodiment, diamines and acid dianhydrides other than those set forth above can also be used, and examples of diamines include, but are not limited to, those derived from p-phenylenediamine (hereinafter also referred to as p-PD), derived from 4,4'-diaminobenzanilide (hereinafter also referred to as DABA), derived from 1,4-cyclohexanediamine, and derived from 1,2-cyclohexanediamine, and examples of acid dianhydrides include, but are not limited to, those derived from pyromellitic dianhydride (hereinafter also referred to as PMDA), derived from diphenyltetracarboxylic dianhydride (hereinafter also referred to as BPDA), derived from 9,9-diphenylfluorenic dianhydride (hereinafter also referred to as DPFLDA), derived from hydroxypyromellitic dianhydride (hereinafter also referred to as HPMDA), derived from bicyclo[2,2,2]oct-7-ene-2,3,5,6-tetracarboxylic dianhydride (hereinafter also referred to as BODA), and 1,3,3a,4,5,9b-hexahydro-5-(tetrahydro-2,5-dioxo-3-furanyl)naphtho[1,2-c]furan-1,3-dione (hereinafter also referred to as TDA).

In particular, from the viewpoint of enhancing the heat resistance and the strength of the polyimide, p-PD,

DABA, PMDA, and BPDA are preferably contained and, from the viewpoint of ensuring the solubility of the polyimide in a solvent and the compatibility with an electrolyte, are preferably 20 mol% or less based on formula (1) above.

From the viewpoint of increasing the solubility of the polyimide in a solvent, aromatic acid dianhydrides (DPFLDA), alicyclic acid dianhydrides (HPMDA, BODA, and TDA), and alicyclic diamines (cyclohexane diamine) having a bulky functional group are preferably contained and, from the viewpoint of not impairing the heat resistance and the strength of the polyimide, are preferably 20 mol% or less based on formula (1) above.

The polyimide in the present embodiment may contain a constitutional unit other than repeating unit 1 and repeating unit 2 described above as long as the capability thereof is not impaired.

The solvent is not particularly limited as long as it is a solvent capable of dissolving the polyimide in the present embodiment. Known reaction solvents are not limited to the following solvents, and, for example, one or more polar solvents selected from phenol-based solvents such as m-cresol; amide-based solvents such as N-methyl-2-pyrrolidone (NMP), N,N-dimethylformamide (DMF), N,N- dimethylacetamide (DMAc), and Equamide; lactone-based solvents such as $\gamma$-butyrolactone (GBL), $\delta$-valerolactone, $\varepsilon$-caprolactone, $\gamma$-crotonolactone, $\gamma$-hexanolactone, $\alpha$-methyl-$\gamma$-butyrolactone, $\gamma$-valerolactone, $\alpha$-acetyl-$\gamma$-butyrolactone, and $\delta$-hexanolactone; sulfoxide-based solvents such as N,N-dimethyl sulfoxide (DMSO); ketone-based solvents such as acetone, methyl ethyl ketone, methyl isobutyl ketone, and cyclohexanone; ester-based solvents such as methyl acetate, ethyl acetate, butyl acetate, and dimethyl carbonate; and the like. Among these, from the viewpoint of solubility, NMP, GBL, DMF, and DMAc are preferable, and NMP, DMF, and DMAc are more preferable.

Specific examples of methods for preparing the composition of the present embodiment containing a polyimide and a solvent are as follows.

First, 5-amino-2-(4-aminophenyl)benzimidazole and 3,3'-diaminodiphenyl sulfone in a molar ratio of 50:50 are placed in a separable flask equipped with a reflux tube, and dissolved by adding NMP as a solvent. Then, 4,4'-oxydiphthalic dianhydride is added in an amount of 95 to 105 mol% based on the diamine to obtain a solution having a solids content of 30% by mass. Then, the inner temperature of the flask is raised to 180°C, toluene is added in an amount of 15% by mass based on the solution, and after refluxing for 2 hours, water that has built up in the reflux pipe is distilled off. Then, the inner temperature of the flask is raised to 180°C for 5 hours, and thus an NMP varnish (a composition) of a polyimide having a structure represented by formula (1) can be obtained. When GBL, DMF, or DMAc is used as a solvent, a varnish (a composition) of a polyimide having a structure represented by formula (1) can be obtained by the same method.

An additive may be suitably added to the polyimide varnish in the present embodiment. Examples of the additive include inorganic particles of cerium oxide, strontium carbonate, and the like; and organic compounds such as polystyrene, polyvinyl naphthalene, polymethyl methacrylate, cellulose triacetate, and fluorene derivatives. Other examples include inorganic salts, organic salts, leveling agents, dispersants, surfactants, and adhering aids for improving processability; and flame retardants for imparting flame retardancy. Further examples include antioxidants, ultraviolet preventing agents, light stabilizers, plasticizers, waxes, fillers, pigments, dyes, foaming agents, anti-foaming agents, dehydrating agents, anti-static agents, anti-bacterial agents, and anti-fungal agents. Additives added to the polyimide varnish may be contained as-is in a processed article such as a core material.

The polyimide varnish in the present embodiment can be processed into, but are not limited to, various forms such as films, porous materials, and nanofibers by, for example, a variety of known methods. That is, the processed article of the present embodiment contains the composition of the present embodiment, and such a processed article may have various forms such as a film, a porous material, and a nanofiber. In particular, a porous material and a nanofiber can be suitably used as a core material that reinforces an electrolyte membrane for a fuel cell. Other than those set forth above, the processed article of the present embodiment can be used in various applications such as fiber sheets, wet phase separation membranes, and particulate additives.

The method for forming the porous material and the fiber sheet in the present embodiment is not limited to the following, and they can be formed by, for example, a variety of known methods. That is, the porous material of the present embodiment contains the polyamide of the present embodiment, and the porous material may have various forms such as a porous membrane and a fiber sheet. The fiber sheet can be suitably used as a core material that reinforces an electrolyte membrane for a fuel cell. Other than those set forth above, the porous material of the present embodiment can be used in various applications such as wet phase separation membranes and particulate additives.

The method for preparing a porous material is not particularly limited, and a variety of known methods can be employed. Examples of methods for preparing a porous material include a thermally induced phase separation method and a non-solvent induced phase separation method in which a porous material is prepared by using phase separation. The method for preparing a porous material as a fiber sheet is not particularly limited, and a variety of known methods can be employed. Examples of methods for preparing a porous material as a fiber sheet include methods in which a nonwoven fabric is produced, such as an electrospinning deposition method (also referred to as an electrospray deposition method), a melt-blowing method, a spunbond method, and a papermaking method.

The mechanical strength of a fiber sheet that is a nonwoven fabric can be increased by performing heat treatment, press treatment, calendar treatment, plasma treatment, infrared irradiation, ultraviolet irradiation, electron

beam irradiation, γ-ray irradiation, or the like.

The average fiber diameter of the fiber sheet when the porous body of the present embodiment is prepared as a fiber sheet is preferably 1000 nm or less, more preferably 800 nm or less, and even more preferably 700 nm or less from the viewpoint of facilitating embedding it into the proton conductive polymer. The average fiber diameter of the fiber sheet is preferably 100 nm or more and 1000 nm or less, more preferably 100 nm or more and 500 nm or less, and even more preferably 200 nm or more and 350 nm or less in order to cope with a dimensional change when a composite membrane is formed.

The thickness of the fiber sheet of the present embodiment is preferably 5 μm or more, more preferably 7 μm or more, and even more preferably 8 μm or more from the viewpoint of maintaining strength. The thickness of the fiber sheet is preferably 50 μm or less, more preferably 40 μm or less, and even more preferably 30 μm or less from the viewpoint of enhancing the proton conductivity of the composite membrane.

The basis weight of the fiber sheet of the present embodiment is preferably 1.5 $g/m^2$ or more, more preferably 1.8 $g/m^2$ or more, and even more preferably 2.0 $g/m^2$ or more from the viewpoint of maintaining strength. The basis weight of the fiber sheet is preferably 10.0 $g/m^2$ or less, more preferably 8.0 $g/m^2$ or less, and even more preferably 7.0 $g/m^2$ from the viewpoint of enhancing the proton conductivity of the composite membrane.

The volatile components contained in the fiber sheet of the present embodiment are preferably 10 wt% or less, more preferably 5 wt% or less, and even more preferably 3 wt% or less from the viewpoint of enhancing electrical properties when the fiber sheet is used as a composite membrane.

From the viewpoint of increasing affinity between the above-described fiber sheet and an electrolyte membrane, the surface of the porous material may be subjected to chemical treatment such as sulfonation. Such treatment may promote attachment of a proton conductive polymer to the porous body.

A specific example of a method for preparing a fiber sheet that can be used as a porous material containing the polyimide in the present embodiment is as follows.

First, a DMAc varnish of a polyimide having a structure represented by formula (1) is prepared such that the polyimide accounts for 25% by mass. The prepared varnish is subjected to electrospinning deposition by using an electrospinning apparatus in which the nozzle needle of a needle electrode for discharging the varnish has a diameter of 0.2 to 0.5 mm and a length of 20 to 40 mm, the distance between the needle electrode and a collector electrode for depositing nanofibers is 10 to 40 cm, the voltage applied across the electrodes is 30 kV, the flow rate of the varnish is 0.3 mL/h, and a Kapton film is placed on the collector electrode as a support. Thereby, a fiber sheet can be obtained.

By containing the polyimide having a structure represented by formula (1), solubility in a solvent can be increased, the solids concentration during spinning can be increased, and a fiber sheet can be obtained in a highly productive manner.

[Composite Membrane]

The composite membrane of the present embodiment includes a processed article containing the composition of the present embodiment, and a proton-conductive electrolyte membrane. That is, it can be said that the composite membrane of the present embodiment has a configuration in which the electrolyte membrane is reinforced with the processed article containing the polyimide having a structure represented by formula (1), and the composite membrane can exert excellent durability and ion conductivity even under high-temperature, low-humidity conditions.

The processed article containing the composition of the present embodiment contains the polyimide having a structure represented by formula (1) (hereinafter also referred to as the "polyimide in the present embodiment"). Being thus configured, the composition of the present embodiment can suppress thermal expansion even during high-temperature operation due to the high heat resistance (a high glass transition point) of the polyimide. Also, since the glass transition point of the polyimide is high, the elastic modulus of the polyimide can be retained even in a high-temperature region. Accordingly, a composite membrane that retains mechanical strength even during high-temperature operation can be formed.

The composite membrane of the present embodiment includes the fiber sheet of the present embodiment and a proton-conductive electrolyte membrane. That is, it can be said that the composite membrane in the present embodiment has a configuration in which the electrolyte membrane is reinforced with a fiber-sheet porous material containing the polyimide in the present embodiment, and the composite membrane can exert excellent durability and ion conductivity even under high-temperature, low-humidity conditions. The fiber sheet is characterized in that fibers are two-dimensionally deposited and that there is little constraint in the third dimensional direction. Accordingly, when the polyimide in the present embodiment is used as a fiber sheet in the core material of the composite membrane, dimensional change of the fiber length in the two-dimensional directions is strongly suppressed at the time of swelling during humidification whereas dimensional change in the thickness direction of the fiber sheet is weakly suppressed. By suppressing dimensional change in the two-dimensional directions, durability against repetitive swelling and shrinking is enhanced while the membrane can retain water by swelling in the thickness direction, and high proton conductivity can be maintained.

The composition of the present embodiment has high affinity for a perfluorinated proton exchange membrane

having an acidic group such as a sulfonic acid group or a carboxylic acid group, and thus the processed article when present in the proton-conductive electrolyte membrane barely has voids, and exerts a reinforcing effect as a processed article. Also, the composition of the present embodiment barely has voids that inhibit proton conduction and thus can exert favorable proton conductivity.

Accordingly, the composite membrane in which the composition of the present embodiment is used as a processed article in particular exerts excellent durability and ion conductivity even under high-temperature, low-humidity conditions. That is, the composition of the present embodiment can be suitably used as a processed article for a composite membrane.

The processed article of the present embodiment is not particularly limited as long as it contains the polyimide having a structure represented by formula (1), and can have various forms such as porous materials and nanofibers.

The method for preparing the processed article as a porous material is not particularly limited, and a variety of known methods can be employed. Examples of methods for preparing the processed article as a porous material include a thermally induced phase separation method and a non-solvent induced phase separation method in which a porous material is prepared by using phase separation.

The method for preparing the processed article as a nanofiber is not particularly limited, and a variety of known methods can be employed. Examples of methods for preparing the processed article as a nanofiber include methods in which a nonwoven fabric is produced, such as an electrospinning deposition method (also referred to as an electrospray deposition method), a melt-blowing method, a spunbond method, and a papermaking method. The mechanical strength of a nonwoven fabric can be increased by performing heat treatment, press treatment, calendar treatment, plasma treatment, infrared irradiation, ultraviolet irradiation, electron beam irradiation, $\gamma$-ray irradiation, or the like.

The amount of volatile components in the processed article in the present embodiment is preferably 10 wt% or less, more preferably 5 wt% or less, and even more preferably 3 wt% or less from the viewpoint of electrical properties (in particular, electrical properties when the processed article applied to a fuel cell). The amount of volatile components can be measured by, for example, the method described in the Examples below.

From the viewpoint of increasing affinity between the above-described porous material and an electrolyte membrane, the surface of the porous material may be subjected to chemical treatment such as sulfonation. Such treatment may promote attachment of a proton conductive polymer to the porous body.

A specific example of a method for preparing a fiber sheet that is one form of the processed article of the present embodiment is as follows.

First, a DMAc varnish of a polyimide having a structure represented by formula (1) is prepared such that the polyimide accounts for 25% by mass. The prepared varnish is subjected to electrospinning deposition by using an electrospinning apparatus in which the nozzle needle of a needle electrode for discharging the varnish has a diameter of 0.2 to 0.5 mm and a length of 20 to 40 mm, the distance between the needle electrode and a collector electrode for depositing nanofibers is 10 to 40 cm, the voltage applied across the electrodes is 30 kV, the flow rate of the varnish is 0.3 mL/h, and a Kapton film is placed on the collector electrode as a support. Thereby, a fiber sheet can be obtained.

A specific example of a method for preparing a composite membrane by using the above processed article is as follows.

First, for example, a 10% by mass perfluorocarbon polymer compound (hereinafter referred to as PFSA) solution (the solvent is a mixture of ethylene glycol, ethanol, water, isopropyl alcohol, and the like) is applied to a Kapton film support such that the wet film thickness is about 130 $\mu$m. A fiber sheet is layered on the PFSA-applied part so as not to form wrinkles, sufficiently impregnated with the PFSA solution, and then dried at about 70°C for about 30 minutes. After drying, a PFSA solution is again applied to the laminate of PFSA and a fiber sheet, the laminate is dried at about 70°C for about 30 minutes, washed with water, then heat-treated at about 160°C, and separated from the Kapton film support, and thus a composite membrane can be obtained.

In such a production method, since the polyimide in the present embodiment contains a basic skeleton, a composite membrane can be prepared that has high affinity for a perfluorinated proton exchange membrane having an acidic group such as a sulfonic acid group or a carboxylic acid group, that has excellent PFSA solution impregnatability and applicability, and that barely has voids in the membrane.

The processed article in the present embodiment may contain a polymer other than the polyimide in the present embodiment as long as the function of the processed article is not impaired. Examples of the polymer other than the polyimide include polyether sulfone, polybenzimidazole, polybenzoxazole, polyamic acid (also referred to as a polyimide precursor), polyamide, polyphenylene ether, epoxy resin, acrylic resin, methacrylic resin, polyethylene, polypropylene, and silicone.

The electrolyte membrane in the present embodiment is not particularly limited, and, for example, the following component A' can be used as a proton-conductive electrolyte membrane. The electrolyte membrane can contain components B' to C' as necessary. The electrolyte membrane in the present embodiment is also defined as a membrane prepared from a polymer electrolyte composition containing component A' and, as necessary, component B' and component C'. Hereinafter, each component contained in the polymer electrolyte composition will now be described in detail.

(Polymer Electrolyte (Component A'))

The polymer electrolyte (component A') is preferably, for example, a perfluorocarbon polymer compound having an ion-exchange group, a polymer electrolyte obtained by introducing an ion-exchange group into a hydrocarbon-based polymer compound having an aromatic ring within the molecule, or the like. The ion-exchange capacity thereof is preferably 0.5 to 3.0 meq/g.

Examples of the hydrocarbon-based polymer compound having an aromatic ring within the molecule include polyphenylene sulfide, polyphenylene ether, polysulfone, polyether sulfone, polyether ether sulfone, polyether ketone, polyether ether ketone, polythioether ether sulfone, polythioether ketone, polythioether ether ketone, polybenzimidazole, polybenzoxazole, polyoxadiazole, polybenzoxazinone, polyxylylene, polyphenylene, polythiophene, polypyrrole, polyaniline, polyacene, polycyanogen, polynaphthyridine, polyphenylene sulfide sulfone, polyphenylene sulfone, polyimide, polyether imide, polyester imide, polyamide imide, polyarylate, aromatic polyamide, polystyrene, polyester, and polycarbonate.

In particular, from the viewpoint of heat resistance, oxidation resistance, and hydrolysis resistance, the hydrocarbon-based polymer compound having an aromatic ring within the molecule is preferably polyphenylene sulfide, polyphenylene ether, polysulfone, polyether sulfone, polyether ether sulfone, polyether ketone, polyether ether ketone, polythioether ether sulfone, polythioether ketone, polythioether ether ketone, polybenzimidazole, polybenzoxazole, polyoxadiazole, polybenzoxazinone, polyxylylene, polyphenylene, polythiophene, polypyrrole, polyaniline, polyacene, polycyanogen, polynaphthyridine, polyphenylene sulfide sulfone, polyphenylene sulfone, polyimide, or polyetherimide. Examples of the ion-exchange group introduced into the aromatic ring of the hydrocarbon-based polymer compound having an aromatic ring within the molecule include a sulfonic acid group, a sulfonimide group, a sulfonamide group, a carboxylic acid group, and a phosphoric acid group. A sulfonic acid group is preferable.

The polymer electrolyte (component A) used in the present embodiment is suitably a perfluorocarbon polymer compound having an ion-exchange group from the viewpoint of chemical stability.

Examples of the perfluorocarbon polymer compound having an ion-exchange group include a perfluorocarbon sulfonic acid resin, a perfluorocarbon carboxylic acid resin, a perfluorocarbon sulfonimide resin, a perfluorocarbon sulfonamide resin, and a perfluorocarbon phosphoric acid resin as well as amine salts and metal salts of these resins.

A specific example of the polymer electrolyte (component A) used in the present embodiment is a perfluorocarbon polymer compound having a structural unit represented by formula (2).

$$-[CF_2CX^1X^2]_a-[CF_2-CF((-O-CF_2-CF(CF_2X^3))_b-O_c-(CFR^1)_d-(CFR^2)_e-(CF_2)_f-X^4)]_g- \qquad (2)$$

In the formula, $X^1$, $X^2$, and $X^3$ are each independently selected from the group consisting of halogen atoms and perfluoroalkyl groups having 1 to 3 carbon atoms. Examples of halogen atoms include a fluorine atom, a chlorine atom, a bromine atom, and an iodine atom. A fluorine atom or a chlorine atom is preferable.

$X^4$ represents COOZ, $SO_3Z$, $PO_3Z_2$, or $PO_3HZ$.

Z is a hydrogen atom; an alkali metal atom such as a lithium atom, a sodium atom, or a potassium atom; an alkaline earth metal atom such as a calcium atom or a magnesium atom; or an amine selected from the group consisting of $NH_4$, $NH_3R^{x1}$, $NH_2R^{x1}R^{x2}$, $NHR^{x1}R^{x2}R^{x3}$, and $NR^{x1}R^{x2}R^{x3}R^{x4}$. $R^{x1}$, $R^{x2}$, $R^{x3}$, and $R^{x4}$ are each independently selected from the group consisting of alkyl groups and arene groups.

When $X^4$ is $PO_3Z_2$, Z may be the same or different.

The alkyl groups in $R^{x1}$, $R^{x2}$, $R^{x3}$, and $R^{x4}$ are not particularly limited, and examples include monovalent groups represented by general formula $C_nH_{2n+1}$ wherein n represents an integer of 1 or more, preferably an integer of 1 to 20, and more preferably an integer of 1 to 10. Specific examples of the alkyl groups in $R^{x1}$, $R^{x2}$, $R^{x3}$, and $R^{x4}$ include a methyl group, an ethyl group, a propyl group, a butyl group, a pentyl group, and a hexyl group.

The arene group is not particularly limited, and is a residue obtained by removing one hydrogen atom from the nucleus of an aromatic hydrocarbon (a monocyclic ring or a fused ring having 6 to 16 carbon atoms). Specific examples include a phenyl group, a tolyl group, and a naphthyl group.

The alkyl group and the arene group may be substituted.

$R^1$ and $R^2$ are each independently selected from the group consisting of halogen atoms as well as perfluoroalkyl groups and fluorochloroalkyl groups having 1 to 10 carbon atoms. Examples of the halogen atoms include a fluorine atom, a chlorine atom, a bromine atom, and an iodine atom. A fluorine atom or a chlorine atom is preferable.

a and g are numbers satisfying $0 \leq a < 1$, $0 < g \leq 1$, $a+g=1$.

b is an integer of 0 to 8.

c is 0 or 1.

d, e, and f are each independently an integer of 0 to 6, provided that d, e, and f are not simultaneously 0.

When Z in formula (2) is an alkaline earth metal, two $X^4$ may form a salt with an alkaline earth metal, such as $(COO)_2Z$ or $(SO_3)_2Z$.

Among the perfluorocarbon polymers having an ion-exchange group, perfluorocarbon sulfonic acid polymers represented by formula (3') or (4') or metal salts thereof are more preferable.

$$- [CF_2CF_2]_a-[CF_2-CF((-O-CF_2-CF(CF_3))_b-O-(CF_2)_h-SO_3X)]_g- \qquad (3')$$

In formula (3'), a and g are numbers that satisfy $0 \le a < 1$, $0 < g \le 1$, and $a+g=1$; b is an integer of 1 to 3; h is an integer of 1 to 8; and X is a hydrogen atom or an alkali metal atom.

$$- [CF_2CF_2]_a-[CF_2-CF(-O-(CF_2)_h-SO_3X)]_g- \qquad (4')$$

In formula (4'), a and g are numbers satisfying $0 \le a < 1$, $0 < g \le 1$, $a+g=1$; m is an integer of 1 to 8; and X is a hydrogen atom or an alkali metal atom.

When the ion-exchange capacity of the polymer electrolyte (component A') in the present embodiment is 3.0 meq/g or less, swelling of an electrolyte membrane tends to be reduced under high-temperature, high-humidity conditions during the operation of a fuel cell. Reduction of swelling can also alleviate problems such as reduction in the strength of the electrolyte membrane, separation from the electrode caused by wrinkles, and, moreover, deterioration of gas barrier properties. When the ion-exchange capacity is 0.5 meq/g or more, there is a tendency that the power generation capability of a fuel cell provided with the electrolyte membrane can be favorably maintained. The ion-exchange capacity of the polymer electrolyte (component A) is preferably 0.5 to 3.0 meq/g, more preferably 0.65 to 2.0 meq/g, and even more preferably 0.8 to 1.5 meq/g.

(Compound Having Thioether Group (Component B'))

The compound having a thioether group (component B) usable in the present embodiment is a compound containing a chemical structure $-(R-S)_n-$ (wherein S is a sulfur atom, R is a hydrocarbon group, and n is an integer of 1 or greater), and examples include dialkyl thioethers such as dimethyl thioether, diethyl thioether, dipropyl thioether, methyl ethyl thioether, and methyl butyl thioether; cyclic thioethers such as tetrahydrothiophene and tetrahydrothiapyran; and aromatic thioethers such as methyl phenyl sulfide, ethyl phenyl sulfide, diphenyl sulfide, and dibenzyl sulfide. These may be used as monomers or as polymers such as polyphenylene sulfide (PPS) .

From the viewpoint of durability, the compound having a thioether group (component B) is preferably a polymer (an oligomer or a polymer) wherein n is an integer of 10 or more, and is more preferably a polymer wherein n is an integer or 1,000 or more.

As the compound having a thioether group (component B) used in the present embodiment, a polyphenylene sulfide resin is preferable from the viewpoint of chemical stability.

The polyphenylene sulfide resin is a polyphenylene sulfide resin having a paraphenylene sulfide skeleton preferably in an amount of 70 mol% or more and more preferably 90 mol% or more.

A compound obtained by introducing an acidic functional group into the benzene ring of polyphenylene sulfide can also be suitably used as component B'. The acidic functional group to be introduced is preferably a sulfonic acid group, a phosphoric acid group, a carboxylic acid group, a maleic acid group, a maleic anhydride group, a fumaric acid group, an itaconic acid group, an acrylic acid group, or a methacrylic acid group. A sulfonic acid group is more preferable.

The method for introducing the acidic functional group is not particularly limited, and a commonly used method is performed. For example, a sulfonic acid group can be introduced under known conditions using a sulfonating agent such as sulfuric anhydride or fuming sulfuric acid. Specifically, the sulfonic acid group can be introduced under conditions described in K. Hu, T. Xu, W. Yang, Y. Fu, Journal of Applied Polymer Science, Vol. 91, and E. Montoneri, Journal of Polymer Science: Part A: Polymer Chemistry, Vol. 27, 3043-3051 (1989). A compound in which the introduced acidic functional group is substituted with a metal salt or an amine salt can be suitably used as well. An alkali metal salt such as a sodium salt or a potassium salt and an alkaline earth metal salt such as a calcium salt are preferable as metal salts.

(Compound Having Azole Ring (Component C'))

The compound having an azole ring (component C') used in the present embodiment is a compound having a five-membered heterocyclic ring structure containing at least one nitrogen atom within the ring. The five-membered heterocyclic ring may contain an atom such as oxygen or sulfur in addition to nitrogen.

Examples of the azole ring include those having two non-carbon atoms such as imidazole (1,3-diazole), oxazole, thiazole, selenazole, pyrazole (1,2-diazole), isoxazole, and isothiazole; those having three non-carbon atoms such as 1H-1,2,3-triazole (1,2,3-triazole), 1,2,3-oxadiazole (diazoanhydride), and 1,2,3-thiadiazole; and those having four non-carbon atoms such as 1H-1,2,3,4-tetrazole (1,2,3,4-tetrazole),1,2,3,5-oxatriazole, and 1,2,3,5-thiatriazole.

The azole ring as set forth above may be condensed with an aromatic ring such as a benzene ring.

As the compound having a five-membered heterocyclic structure, preferably used from the viewpoint of obtaining heat resistance is a compound in which a divalent aromatic group such as a p-phenylene group, a m-phenylene group, a naphthalene group, a diphenylene ether group, a diphenylene sulfone group, a biphenylene group, a terphenyl group, or a 2,2-bis(4-carboxyphenylene)hexafluoropropane group is bonded to a five-membered heterocyclic ring.

The compound having an azole ring (component C') used in the present embodiment is preferably a polyazole-based compound from the viewpoint of chemical stability.

Examples of the polyazole-based compound include polymers of polyimidazole-based compounds, polybenzimidazole-based compounds, polybenzobisimidazole-based compounds, polybenzoxazole-based compounds, polyoxazole-based compounds, polythiazole-based compounds, and polybenzothiazole-based compounds. Specifically, polybenzimidazole is preferably used as component C.

A polyazole salt is suitable as component C' from the viewpoint of chemical stability.

The polyazole salt is preferably a compound in which at least a part of a polyazole-based compound is a polyazole metal salt, and examples include polyazole alkali metal salts and polyazole alkaline earth metal salts. Specifically, alkali metal salts with monovalent ions such as $Li^+$, $Na^+$, $K^+$, $Rb^+$, $Cs^+$, and $Fr^+$ are preferable, and the polyazole salt is more preferably a polyazole Na salt.

The amount of metal ions is preferably 0.01 to 100 eq (0.01 eq or more and 100 eq or less), more preferably 0.05 to 50 eq, and even more preferably 0.1 to 10 eq based on the total number of equivalents of nitrogen present in the heterocyclic ring of the polyazole-based compound.

The polyazole-based compounds (including the modified polyazole-based compounds described below) and/or the polyazole salts may be used singly or in combinations of two or more.

Component C' that is usable has a weight average molecular weight of 300 to 500000 (in terms of polystyrene) as measured by GPC.

In the present embodiment, component A' and component C' may be in, for example, a state in which they are ionically bonded to form an acid-base ion complex, or a state in which they are covalently bonded. That is, for example, the sulfonic acid group in component A' and the nitrogen atom contained in the reactive groups such as an imidazole group, an oxazole group, and a thiazole group in component C' may form an ionic bond or a covalent bond.

In the present embodiment, the proportion of component A' in the solids content of the polymer electrolyte composition is preferably 50 to 99.99% by mass. From the viewpoint of the balance between ion conductivity and durability, the proportion is more preferably 55 to 95% by mass and more preferably from 60 to 90% by mass.

(Method for Producing Composite Membrane)

A method for producing the composite membrane in the present embodiment will now be described. The composite membrane of the present embodiment can be used as, for example, a component of a fuel cell. The means of production is not particularly limited, and a processed article and a proton-conductive electrolyte membrane may be formed into a composite by a pressing method, or the proton-conductive electrolyte membrane may be applied to the processed article to form a composite by a casting method (a coating method). At this time, any suitable casting method may be used, and examples include, but are not limited to, bar coating, spray coating, slit coating, and brush coating.

Also, by casting the composition of the present embodiment and a proton-conductive electrolyte component in a mixed state and performing phase separation after casting, the composite membrane including the proton-conductive electrolyte membrane and the processed article containing the composition of the present embodiment can be formed. In addition, by melt-extruding the composition of the present embodiment and a proton-conductive electrolyte component in a mixed state and performing phase separation, the composite membrane including the proton-conductive electrolyte membrane and the processed article containing the composition of the present embodiment can be formed.

Subsequently the composite membrane thus obtained is heat-treated as necessary. By heat treatment, the crystallinity of the proton-conductive electrolyte membrane is increased, and mechanical strength can be stabilized. The heat treatment temperature is preferably 120 to 300°C, more preferably 140 to 250°C, and even more preferably 160 to 230°C. A heat treatment temperature of 120°C or higher enhances crystallinity and thus can contribute to the enhancement of mechanical strength. On the other hand, a heat treatment temperature of 300°C or lower is preferable from the viewpoint of maintaining the properties of the composite membrane. The time of heat treatment varies according to the heat treatment temperature, and is preferably 5 minutes to 3 hours and more preferably 10 minutes to 2 hours.

(Washing Step)

Subsequently the composite membrane is subjected to washing treatment with an acid and/or water as necessary.

Washing with an acid is preferable from the viewpoint of removing metal ions and ions of organic matter ionically bonded to the ion-exchange group in the electrolyte membrane and enhancing ion-exchange capability. Thus, when

sufficient ion-exchange capability is obtained without washing with an acid, acid washing is not necessary.

Here, examples of acids used in acid washing include inorganic acids such as hydrochloric acid, sulfuric acid, nitric acid, phosphoric acid, hydrogen peroxide, phosphonic acid, and phosphinic acid; and organic acids such as tartaric acid, oxalic acid, acetic acid, formic acid, trifluoroacetic acid, aspartic acid, aminobenzoic acid, aminoethylphosphonic acid, inosine, glycerin phosphate, diaminobutyric acid, dichloroacetic acid, cysteine, dimethyl cysteine, nitroaniline, nitroacetic acid, picric acid, picolinic acid, histidine, bipyridine, pyrazine, proline, maleic acid, methanesulfonic acid, trifluoromethanesulfonic acid, toluenesulfonic acid, and trichloroacetic acid. These can be used singly or in combinations of two or more. Moreover, these inorganic acids and organic acids may be used as mixed solutions with water, methyl ethyl ketone, acetonitrile, propylene carbonate, nitromethane, dimethylsulfoxide, N,N-dimethylformamide, N-methyl-2-pyrrolidone, pyridine, methanol, ethanol, acetone, and the like.

The pH of these acids at 25°C is preferably 2 or less. The usable washing temperature is 0 to 160°C. An excessively low temperature results in a prolonged reaction time, an excessively high temperature makes handling difficult, and thus such temperatures are not preferable. An acid-resistant autoclave is preferably used for acid washing at high temperatures.

Also, water washing is carried out as necessary, and in particular, water washing is carried out to remove acid remaining in the membrane when acid washing is carried out, and water washing can be carried out to remove impurities in the membrane even when acid washing is not carried out.

As for the solvent used in washing, a variety of organic solvents having a pH of 1 to 7 can be used other than water. When using water in washing, a sufficient amount of pure water having a conductivity of 0.06 S/cm or less is preferably used, and washing is preferably carried out until the pH of the washed solution reaches 6 to 7.

(Stretching Step)

In the present embodiment, transverse uniaxial stretching, simultaneous biaxial stretching, or sequential biaxial stretching may be carried out as necessary in combination with the above production method. By such a stretching treatment, the mechanical properties of the composite membrane of the present embodiment can be enhanced.

The stretching treatment is preferably carried out such that the composite membrane is stretched 1.1 to 6.0 times in the transverse direction (TD) and 1.0 to 6.0 times in the machine direction (MD), more preferably 1.1 to 3.0 times in the transverse direction and 1.0 to 3.0 times in the machine direction, and even more preferably 1.1 to 2.0 times in the transverse direction and 1.0 to 2.0 times in the machine direction. The area stretch ratio is preferably 1.1 to 36 times.

(Reinforcing Materials)

In the present embodiment, in combination with the above production method, reinforcement by adding a reinforcing material (excluding the processed article of the present embodiment) composed of an inorganic material, an organic material or an organic-inorganic hybrid material, reinforcement by cross-linking, or the like can also be provided. The reinforcing material may be a fibrous material, a particulate material, or a flaky material. Also, the reinforcing material may be a continuous support such as a porous membrane, a mesh, or a nonwoven fabric. In the present embodiment, by providing reinforcement by adding a reinforcing material, mechanical strength and dry/wet dimensional change can be easily enhanced. In particular, the use of a fibrous material or the above-described continuous support as a reinforcing material provides a great reinforcing effect. A multi-layer laminate is also preferable in which a non-reinforced layer and a reinforced layer are laminated by any method.

The reinforcing material may be simultaneously added and mixed during melt kneading, may be applied by impregnation with a solution or a suspension, or may be laminated on a formed membrane.

(Membrane Thickness)

In the present embodiment, the thickness of the composite membrane is not limited, and is preferably 1 to 500 μm, more preferably 2 to 100 μm, and even more preferably 5 to 50 μm. A film thickness of 1 μm or more is preferable in that problems such as a direct reaction of hydrogen and oxygen can be reduced, and that damage or the like to the membrane is unlikely to occur even when differential pressure/deformation or the like occurs during handling at the time of producing a fuel cell or during operation of a fuel cell. On the other hand, a film thickness of 500 μm or less is preferable from the viewpoint of maintaining ion permeability and maintaining capability as a solid electrolyte membrane.

(EW)

In the present embodiment, the equivalent weight EW of the electrolyte membrane (the dry mass in gram of a proton exchange membrane per equivalent of a proton exchange group) is not limited, and is preferably 333 to 2000,

more preferably 400 to 1500, and even more preferably 500 to 1200. By using a proton conductive polymer having a lower EW, i.e., having a large proton exchange capacity, the electrolyte membrane can exhibit excellent proton conductivity even under high-temperature, low-humidity conditions, and a high output can be obtained during operation when used in a fuel cell.

[Membrane Electrode Assembly]

The membrane electrode assembly of the present embodiment includes the composite membrane of the present embodiment. That is, the composite membrane of the present embodiment can be used as a component of a membrane electrode assembly and a fuel cell together with an electrode catalyst layer, which will be described below. A unit obtained by attaching two electrode catalyst layers, i.e., an anode and a cathode, to the respective surfaces of an electrolyte membrane is called a membrane electrode assembly (hereinafter sometimes abbreviated as "MEA"). What is obtained by attaching a pair of gas diffusion layers to the opposite outer surfaces of the electrode catalyst layers may also be called a MEA. The electrode catalyst layer in the present embodiment is used as an anode catalyst layer and/or a cathode catalyst layer.

(Electrode Catalyst Layer)

The electrode catalyst layer in the present embodiment is composed of an electrode catalyst composition containing a composite particle in which electrode catalyst particle is supported on a electroconductive particle, and a polymer electrolyte composition containing a polymer electrolyte (which may be the same as component A') and optionally a compound having a thioether group (component B') and a compound having an azole ring (component C').

The electrode catalyst is a catalyst that oxidizes a fuel (such as hydrogen) to easily produce protons in the anode, and reacts protons and electrons with an oxidant (such as oxygen or air) to produce water in the cathode. The type of the electrode catalyst is not limited, and platinum is preferably used. In order to strengthen the resistance of platinum against impurities such as CO, an electrode catalyst may be preferably used in which ruthenium or the like is added to or alloyed with platinum.

The electroconductive particle is not particularly limited as long as it has electroconductivity, and, for example, carbon black such as furnace black, channel black and acetylene black, activated carbon, graphite, various metals, and the like are used. The particle diameter of the electroconductive particle is preferably 10 angstroms to 10 μm, more preferably 50 angstroms to 1 μm, and even more preferably 100 to 5000 angstroms. The particle diameter of the electrode catalyst particle is not limited, and is preferably 10 to 1000 angstroms, more preferably 10 to 500 angstroms, and even more preferably 15 to 100 angstroms.

As for the composite particle, the electrode catalyst particle is preferably supported on the electroconductive particle in an amount of preferably 1 to 99% by mass, more preferably 10 to 90% by mass, and even more preferably 30 to 70% by mass. Specifically, Pt catalyst-supported carbon such as TEC10E40E manufactured by Tanaka Kikinzoku Kogyo is a suitable example.

In the present embodiment, the content of the composite particle in the electrode catalyst layer is preferably 20 to 95% by mass, more preferably 40 to 90% by mass, even more preferably 50 to 85% by mass, and yet more preferably 60 to 80% by mass.

In the present embodiment, the mass ratio between component B' and component C' (B'/C') is preferably (B'/C') = 1/99 to 99/1. From the viewpoint of the balance between chemical stability and durability (dispersibility), the ratio is more preferably (B'/C') = 5/95 to 95/5, even more preferably (B'/C') = 10/90 to 90/10, and yet more preferably (B'/C') = 20/80 to 80/20.

In the present embodiment, the proportion of the total mass of component B' and component C' in the solids content in the polymer electrolyte composition is preferably 0.01 to 50% by mass. From the viewpoint of the balance between ionic conductivity and durability (dispersibility), the proportion is more preferably 0.05 to 45% by mass, even more preferably 0.1 to 40% by mass, yet more preferably 0.2 to 35% by mass, and further more preferably 0.3 to 30% by mass.

The amount of the supported electrode catalyst based on the electrode area, in a state where the electrode catalyst layer is formed, is preferably 0.001 to 10 $mg/cm^2$, more preferably 0.01 to 5 $mg/cm^2$, and even more preferably 0.1 to 1 $mg/cm^2$.

In the present embodiment, the thickness of the electrode catalyst layer is preferably 0.01 to 200 μm, more preferably 0.1 to 100 μm, and even more preferably 1 to 50 μm.

In the present embodiment, the voidage of the electrode catalyst layer is not particularly limited, and is preferably 10 to 90% by volume, more preferably 20 to 80% by volume, and even more preferably 30 to 60% by volume.

The electrode catalyst layer in the present embodiment may further contain polytetrafluoroethylene (hereinafter sometimes abbreviated as "PTFE") in order to enhance water repellency. In this case, the form of PTFE is not particularly

limited as long as PTFE has a definite form, and is preferably particulate or fibrous. These forms may be used singly or in a mixture.

In the present embodiment, the content of PTFE when contained in the electrode catalyst layer is preferably 0.001 to 20% by mass, more preferably 0.01 to 10% by mass, and even more preferably 0.1 to 5% by mass based on the total mass of the electrode catalyst layer.

The electrode catalyst layer in the present embodiment may further contain a metal oxide in order to enhance hydrophilicity. In this case, the metal oxide is not particularly limited, and is preferably a metal oxide that has at least one component selected from the group consisting of $Al_2O_3$, $B_2O_3$, MgO, $SiO_2$, $SnO_2$, $TiO_2$, $V_2O_5$, $WO_3$, $Y_2O_3$, $ZrO_2$, $Zr_2O_3$, and $ZrSiO_4$. In particular, $Al_2O_3$, $SiO_2$, $TiO_2$, and $ZrO_2$ are more preferable, and $SiO_2$ is even more preferable.

In the present embodiment, the content of the metal oxide when contained in the electrode catalyst layer is preferably 0.001 to 20% by mass, more preferably 0.01 to 10% by mass, and even more preferably 0.1 to 5% by mass based on the total mass of the electrode catalyst layer. As for the form of the metal oxide, a particulate or fibrous metal oxide may be used, and amorphous metal oxide is particularly desirable. The term amorphous as used herein means that neither a particulate metal oxide nor a fibrous metal oxide is observed even when observed under an optical microscope or an electron microscope.

(Method for Producing Electrode Catalyst Layer)

The electrode catalyst layer in the present embodiment can be produced by, for example, providing a solution or a suspension of a polymer electrolyte composition wherein a polymer electrolyte having an ion-exchange capacity of 0.5 to 3.0 meq/g (which may be the same as component A') and optionally a compound having a thioether group (component B') and a compound having an azole ring (component C') are dissolved or suspended in one or more protic solvents, the total % by mass of component A', component B', and component C' in the polymer electrolyte composition is 0.5 to 30% by mass, and the total mass of component B' and component C' in the solids content in the polymer electrolyte composition is 0.01 to 50% by mass; dispersing the above-described composite particle in the polymer electrolyte composition in an amount of 1 to 100% by mass based on the polymer electrolyte composition to prepare an electrode catalyst composition; applying the electrode catalyst composition to an electrolyte membrane or another substrate such as a PTFE sheet; and then drying and solidifying the electrode catalyst composition.

In the preparation of the electrode catalyst composition, the amount of a composite particle dispersed in the polymer electrolyte composition is preferably 5 to 95% by mass and more preferably 10 to 90% by mass based on the polymer electrolyte composition.

When applying the electrode catalyst composition in the present embodiment, a variety of generally known methods are usable such as a screen printing method and a spraying method.

Further, a solvent is added to the electrode catalyst composition as necessary to use the electrode catalyst composition. Examples of usable solvents include single solvents or mixed solvents of water, alcohols (such as ethanol, 2-propanol, ethylene glycol, and glycerin), Freon, and the like. Desirably, such a solvent is added in an amount of preferably 0.1 to 90% by mass, more preferably 1 to 50% by mass, even more preferably 5 to 20% by mass based on the total mass of the electrode catalyst composition.

On the other hand, the electrode catalyst layer in the present embodiment can also be obtained by applying, or immersing and applying, the polymer electrolyte composition to a gas diffusion electrode such as ELAT(R) manufactured by BASF in which a gas diffusion layer and an electrode catalyst layer are laminated, and then drying and solidifying the polymer electrolyte composition.

Moreover, the prepared electrode catalyst layer may be immersed in an inorganic acid such as hydrochloric acid. The temperature of acid treatment is preferably 5 to 90°C, more preferably 10 to 70°C, and even more preferably 20 to 50°C.

[Fuel Cell]

The fuel cell of the present embodiment includes the membrane electrode assembly of the present embodiment. Normally, an operable solid polymer fuel cell can be formed by mutually bonding the anode and the cathode of the above MEA via electron conductive materials disposed on the outer sides of the composite membrane. At this time, a gas diffusion layer can be set on the outer surface of each of the anode catalyst layer and the cathode catalyst layer as necessary. Commercially available carbon cloth or carbon paper can be used as a gas diffusion layer. Representative examples of the former include carbon cloth E-Tek B-1 manufactured by BASF, and representative examples of the latter include CARBEL(R) (Japan Gore-Tex Inc.), TGP-H manufactured by Toray Industries Inc., Japan, and Carbon Paper 2050 manufactured by SPECTRACORP, USA. Such a solid polymer electrolyte fuel cell can be prepared by a variety of known methods. A method for preparing a solid polymer electrolyte fuel cell is described in detail in, for example, in FUEL CELL HANDBOOK (VAN NOSTRAND REINHOLD, A. J. APPLEBY et. al, ISBN 0-442-31926-6), and Chemistry

One Point, Fuel Cell (Second Edition), Edited by Masao Taniguchi, Manabu Senoo, Kyoritsu Shuppan Co., Ltd. (1992).

As an electron conductive material, a current collector is used such as a composite material of graphite or resin or a metal plate in the surface of which grooves for allowing a gas such as a fuel or an oxidant to flow are formed. When the MEA does not have a gas diffusion layer, a solid polymer electrolyte fuel cell can be obtained by incorporating the anode and the cathode of the MEA into a single-cell casing (such as a PEFC single cell manufactured by Electrochem, USA), with gas diffusion layers being disposed on the respective outer surfaces.

In order to extract a high voltage, the fuel cell is operated as a stack cell in which a plurality of such single cells are stacked. In order to prepare a fuel cell as such a stack cell, a plurality of MEAs are prepared and incorporated into a stack-cell casing (such as a PEFC stack cell manufactured by ElectroChem Inc., USA). In a fuel cell as such a stack cell, a current collector referred to as a bipolar plate is used that plays the role of separating a fuel and an oxidant of adjacent cells and that plays the role of an electrical connector between adjacent cells.

[Fuel Cell System]

The fuel cell system of the present embodiment includes the fuel cell of the present embodiment. The fuel cell is operated by supplying hydrogen to one electrode and oxygen or air to the other electrode. A higher operating temperature of the fuel cell results in a greater catalyst activity and is thus preferable. Normally, the fuel cell is often operated at 50 to 80°C at which moisture control is easy, and the fuel cell can also be operated at 80°C to 150°C. That is, the fuel cell system of the present embodiment can include respective supply systems for supplying hydrogen and oxygen or air to the fuel cell and a control system for regulating, for example, the pressures, flow rate, and temperature thereof.

The fuel cell system of the present embodiment is usable in, but is not limited to, for example, mobile devices such as mobile phones and smart phones, forklifts, scooters, motorcycles, automobiles, stationary fuel cells (cogeneration systems), power plants, robots, boats, aircrafts, rockets, and drones.

<<Combination of First Embodiment and Second Embodiment>>

An electrolyte membrane is suitably obtained from the composition of the first embodiment.

A core material for supporting and reinforcing the electrolyte membrane is suitably obtained from the composition of the second embodiment.

The first embodiment and the second embodiment can be combined. Specifically, as the present embodiment, a composite membrane is obtained that includes an electrolyte membrane obtained from the composition of the first embodiment and a fiber sheet obtained from the composition of the second embodiment.

## Example

Below, the present embodiments will now be described in more detail by way of Examples and Comparative Examples, but the present embodiments are not limited thereto. The "Examples of the first embodiment" described below are Examples corresponding to the first embodiment described above, and the "Examples of the second embodiment" described below are Examples corresponding to the second embodiment.

<<Examples of First Embodiment>>

The measurement methods and evaluation methods used in the Examples and Comparative Examples are as follows.

(Measurement of Ion-Exchange Capacity)

About 10 to 50 mg of fluorine-based polymer electrolyte pellets or an electrolyte membrane was immersed in 50 mL of a saturated aqueous NaCl solution at 25°C and left to stand for 10 minutes while being stirring, and subjected to neutralization titration using a 0.01 N aqueous sodium hydroxide aqueous and phenolphthalein as an indicator. After neutralization, the resulting pellets of a Na-type fluorine-based polymer electrolyte were rinsed with pure water, then vacuum-dried, and weighed. The ion-exchange capacity (meq/g) was determined by the following formula where M (mmol) represents the equivalent of sodium hydroxide required for neutralization and W (mg) represents the mass of the Na-type polymer electrolyte membrane.

$$\text{Ion-exchange capacity} = 1000/((W/M)-22)$$

(Measurement of Solids Concentration in Ethanol Solution of Component B)

The mass of a weighing bottle was precisely measured, which was regarded as W0. About 10 g of a specimen was placed in the measured weighing bottle, and the weight was precisely measured, which was regarded as W1. After being dried at 250°C at 0.10 MPa or less for 3 hours or longer, the specimen was cooled in a silica gel-packed desiccator. After reaching room temperature, the specimen was precisely weighed so as not to absorb moisture, and the weight was regarded as W2. (W2-W0)/(W1-W0) was expressed in percent, and the measurement was carried out a total of 5 times, and the average was regarded as a solids concentration.

(Measurement of Molecular Weight)

The weight-average molecular weight (Mw) was measured under the following conditions by gel permeation chromatography (GPC). The solvent used was N,N-dimethylformamide (manufactured by Wako Pure Chemical Industries Ltd., for high performance liquid chromatography) to which 24.8 mol/L lithium bromide monohydrate (manufactured by Wako Pure Chemical Industries, Ltd., purity 99.5%) and 63.2 mol/L phosphoric acid (manufactured by Wako Pure Chemical Industries Ltd., for high performance liquid chromatography) were added before measurement. A calibration curve for calculating the weight average molecular weight was prepared using standard polystyrene (manufactured by Tosoh Corporation).

Column: TSK-GEL SUPER HM-H
Flow rate: 0.5 mL/min
Column temperature: 40°C
Pump: PU-2080 (manufactured by JASCO)
Detector: RI-2031 Plus (RI: differential refractometer, manufactured by JASCO)
UV-2075 Plus (UV-Vis: ultraviolet visible absorption spectrometer, manufactured by JASCO)

(Pulverizability Evaluation)

Pulverization was carried out by using a Nano Jet Pal(R) JN100 (manufactured by Jokoh Co., Ltd.), and evaluations were made according to the following criteria. Note that 1 pass means the number of discharges necessary for the entirety of a sample to pass through the pulverization path, and represents the number of discharges obtained by dividing the entirety of a sample by the amount of a single discharge. Here, pulverizability refers to how easy to pulverize a sample to a desired particle diameter.

◎: Possible to pulverize to an average diameter of 3 μm or less in 20 passes or less at a pressure of 180 MPa.
○: Possible to pulverize to an average diameter of 3 μm or less in more than 20 passes and 200 passes or less at a pressure of 180 MPa.
Δ: Possible to pulverize to an average diameter of 3 μm or less in 100 passes or less at a pressure of 250 MPa.
×: Possible to pulverize to an average diameter of 3 μm or less in more than 100 passes and 200 passes or less at a pressure of 250 MPa.

(Measurement of Particle Size Distribution)

The particle size distribution was measured by using a particle size distribution analyzer LA-920 (manufactured by HORIBA Ltd.). Ethanol was used as a dispersion medium, and measurement was made under conditions at a circulation speed of 3 after applying ultrasonic waves for 3 minutes. The refractive index of ethanol was set to 1.36, the refractive index of resin was set to 1.65, and the abundance ratio was evaluated in terms of volume. The average diameter indicates a value obtained by arithmetically averaging the particle diameter distribution, and the modal diameter indicates a particle diameter that appeared most frequently. The abundance ratio indicates an abundance ratio in terms of volume of particles existing in a specified particle diameter range.

(Viscosity Measurement)

Viscosity (cp) at 1 rpm was measured by using an E-type rotational viscometer (manufactured by Toki Sangyo., Co., Ltd., TV-20, cone plate type) at a measurement temperature of 25°C.

(Dispersibility Evaluation)

The particle size distribution of the mixed composition was measured to evaluate dispersibility. For evaluation, the particle size distribution was measured by using a particle size distribution analyzer LA-920 (manufactured by HORIBA Ltd.). Ethanol was used as a dispersion medium, and measurement was made under conditions having a circulation speed at 3. The refractive index of ethanol was set to 1.36, the refractive index of resin was set to 1.65, the abundance ratio was evaluated in terms of volume, and evaluations were made according to the following criteria. The average diameter indicates a value obtained by arithmetically averaging the particle diameter distribution.

◎: Average diameter of particles was 5 μm or less.
○: Average diameter of particles was more than 5 μm and 10 μm or less.
Δ: Average diameter of particles was more than 10 μm and 30 μm or less.
×: Average diameter of particles was more than 30 μm.

(Chemical Durability Evaluation)

The chemical durability of a fuel cell was evaluated as follows. First, electrode catalyst layers were prepared as follows. To 1.00 g of Pt-supported carbon (TEC10E40E, manufactured by Tanaka Kikinzoku Kogyo, Pt 36.4%) was added 3.31 g of a polymer solution obtained by concentrating a 5% by mass perfluorosulfonic acid polymer solution SS-910 (manufactured by Asahi Kasei E-materials Corp., equivalent weight (EW): 910, solvent composition: ethanol/water = 50/50 (mass ratio)) to 11% by mass, further, 3.24 g of ethanol was added, and then the mixture was thoroughly mixed by a homogenizer to obtain an electrode ink. The electrode ink was applied to a PTFE sheet by a screen printing method. The electrode ink was applied in two different amounts: one resulting in a Pt loading and a polymer loading of both 0.15 $mg/cm^2$, and the other resulting in a Pt loading and a polymer loading of both 0.30 $mg/cm^2$. After application, the electrode ink was dried at room temperature for 1 hour and at 120°C for 1 hour in air to obtain electrode catalyst layers having a thickness of about 10 μm. Among these electrode catalyst layers, one having a Pt loading and a polymer loading of 0.15 $mg/cm^2$ was used as an anode catalyst layer, and the other having a Pt loading and a polymer loading of 0.30 $mg/cm^2$ was used as a cathode catalyst layer.

The anode catalyst layer and the cathode catalyst layer thus obtained were placed so as to face each other, with a polymer electrolyte membrane being interposed therebetween, and hot-pressed at 160°C at a surface pressure of 0.1 MPa to transfer and attach the anode catalyst layer and the cathode catalyst layer to the polymer electrolyte membrane, and thus a MEA was prepared.

Carbon cloth (ELAT(R) B-1, manufactured by DE NORA NORTH AMERICA) was set as a gas diffusion layer on both sides of the MEA (the outer surfaces of the anode catalyst layer and the cathode catalyst layer) to be incorporated into an evaluation cell. The evaluation cell was set in a fuel cell evaluation system 890 CL (manufactured by Toyo Corporation), the temperature of the cell was raised to 95°C, and the gas humidification temperature of the anode and the cathode was 50°C. Hydrogen was allowed to flow at 50 cc/min on the anode side, and air was allowed to flow at 50 cc/min on the cathode side. In this state, by opening the circuit and maintaining a current value at 0, chemical durability was evaluated.

In a durability test, pinholes generated in an electrolyte membrane cause a phenomenon called cross-leakage in which hydrogen gas leaks to the cathode side. In order to determine the amount from cross-leakage, the hydrogen concentration in the cathode-side discharge gas was measured by a Micro GC (manufactured by Varian Co., model number: CP4900), and the test was terminated when the measured value exceeded 1,000 ppm. The time Hr from the beginning to the end of the test was used for the evaluation of the durability test, and durability was evaluated according to the following criteria.

◎: Showed a durability of 300 Hr or more.

○: Showed a durability of 200 Hr or more and less than 300 Hr.

Δ: Showed a durability of 100 Hr or more and less than 200 Hr.

×: Showed a durability of less than 100 Hr.

[Example A1]

(Preparation of Solution of Perfluorocarbon Polymer Having Ion-Exchange Group)

Pellets of a perfluorosulfonic acid resin precursor (ion-exchange capacity after hydrolysis and acid treatment: 1.30 meq/g) obtained from tetrafluoroethylene and $CF_2$=CFO($CF_2$)$_2$-$SO_2$F, which is a precursor polymer of a polymer electrolyte, were provided. Next, the precursor pellets were subjected to a hydrolysis treatment by being brought into contact at 80°C for 20 hours with an aqueous solution obtained by dissolving potassium hydroxide (15% by mass) and methyl alcohol (50% by mass). Thereafter, the pellets were immersed in water at 60°C for 5 hours. Next, the pellets after being immersed in water was subjected to an immersion treatment in a 2 N aqueous hydrochloric acid solution at 60°C for 1 hour. This treatment was repeated 5 times wherein a new aqueous hydrochloric acid solution was used each time. Then, the pellets after being repeatedly immersed in an aqueous hydrochloric acid solution was washed with ion-exchange water and dried. Thereby, a polymer electrolyte perfluorocarbon sulfonic acid resin (PFSA) was obtained.

The pellets were placed and sealed in a 5 L autoclave together with an aqueous ethanol solution (water:ethanol=50.0/50.0 (mass ratio)), heated to 160°C while being stirred with a blade, and retained for 5 hours. Thereafter, the autoclave was spontaneously cooled to obtain a uniform perfluorocarbon sulfonic acid resin solution having a solids concentration of 5% by mass. This solution was concentrated under reduced pressure at 80°C and then diluted with water and ethanol to prepare a solution of ethanol:water=60:40 (mass ratio) having a solids content of 15.0% by mass (A-1).

(Synthesis of Basic Polymer)

A 500 mL stirrer-equipped separable flask having a Dean-Stark tube and a reflux tube in the upper part was set, and purged with nitrogen gas. Then, 188 g of N-methylpyrrolidone (hereinafter referred to as "NMP"), 8.52 g (38.00 mmol) of 5-amino-2-(4-aminophenyl)benzimidazole (manufactured by Tokyo Chemical Industry Co., Ltd., hereinafter referred to as "ABI"), 12.41 g (40.00 mmol) of 4,4'-oxydiphthalic anhydride (manufactured by Tokyo Chemical Industry Co., Ltd., hereinafter referred to as "ODPA"), and 24 g of toluene were added, and stirred while introducing nitrogen gas into the reaction vessel. Then, the Dean-Stark tube was filled with toluene, the inner temperature was raised to 160°C in an oil bath, and the mixture was thermally refluxed at 160°C for 2 hours for imidization. It was verified from the weight of water recovered in the Dean-Stark tube that imidization progressed to 90% or more. Then, toluene was removed from the Dean-Stark tube, the temperature was raised to 180°C to further continue the reaction for 4 hours, and thus basic polymer P-1 having a Mw of $5.0\times10^4$ was obtained. The molecular weight of the polymer is shown in Table 1 below.

The reaction solution was cooled to room temperature, and 200 g of NMP was added. Separately from the reaction vessel, a 2 L vessel was provided, 600 g of Solmix AP-1 (manufactured by Japan Alcohol Trading Co., Ltd.) was added, and the reaction solution was added dropwise while being stirred, and thus precipitates were obtained. Then, filtration was carried out, and the precipitates were washed with ethanol.

Then, the recovered material was dried under reduced pressure at 100°C for 4 hours to obtain a basic polymer.

(Formation of Fine Particles of Basic Polymer)

The basic polymer obtained above was ground with an agate mortar and pestle and passed through a sieve having a mesh size of 53 μm to give a powder, and ethanol was added to the powder to regulate the solids content to 8%.

Moreover, pulverization was carried out using JN100 (manufactured by Jokoh Co., Ltd.) at a pressure of 180 MPa for 20 passes to obtain basic polymer fine particle slurry B-1.

When the particle size distribution of basic polymer fine particle slurry B-1 was measured, the average diameter was 0.24 μm, and the modal diameter was 0.14 μm. The average diameter, modal diameter, abundance ratio, and pulverizability of the basic polymer fine particle slurry are collectively shown in Table 2 below.

(Preparation of Composition)

The perfluorocarbon sulfonic acid resin solution (A-1) and the basic polymer fine particle slurry (B-1) were mixed such that the basic polymer was 6 parts by mass per 100 parts by mass of the perfluorocarbon sulfonic acid resin, and the mixture was concentrated by using an evaporator and a hot bath at 50°C. The viscosity and dispersibility of the resulting composition are collectively shown in Table 3 below.

(Membrane Formation)

The composition prepared above was applied to a substrate film by using an applicator, the gap of which was

regulated so as to provide a final membrane thickness of 30 μm. Moreover, a heat treatment was carried out at 120°C for 30 minutes and then at 170°C for 20 minutes to obtain a 30 μm homogeneous electrolyte membrane.

The measured ion-exchange capacity of the electrolyte membrane was 1.21 (meq/g).

The average particle diameter of the basic polymer in the membrane was 0.4 μm, and the coefficient of variation was 0.9.

A SEM image of a cross-section of the electrolyte membrane is shown in Figure 1.

(Chemical Durability Evaluation)

The results of the above-described chemical durability evaluation carried out on the film obtained above are shown in Table 3 below.

[Example A2]

Evaluations were made in the same manner as in Example A1 except that the amount of basic polymer B-1 was 3 parts by mass per 100 parts by mass of the perfluorocarbon sulfonic acid resin when preparing the composition.

It was also possible to obtain a homogeneous membrane of the electrolyte obtained in Example A2.

The measured ion-exchange capacity of the electrolyte membrane was 1.26 (meq/g).

The average particle diameter of the basic polymer in the membrane was 0.4 μm, and the coefficient of variation was 0.8.

[Example A3]

Evaluations were made in the same manner as in Example A1 except that basic polymer fine particle slurry B-2 obtained by using JN100 (manufactured by Jokoh Co., Ltd.) at a pressure of 180 MPa for 10 passes was used when preparing basic polymer fine particles.

It was also possible to obtain a homogeneous membrane of the electrolyte obtained in Example A3.

The measured ion-exchange capacity of the electrolyte membrane was 1.22 (meq/g).

The average particle diameter of the basic polymer in the membrane was 1.2 μm, and the coefficient of variation was 0.9.

[Example A4]

Basic polymer fine particle slurry B-3 obtained by using JN100 (manufactured by Jokoh Co., Ltd.) at a pressure of 180 MPa for 5 passes was used when preparing basic polymer fine particles. Moreover, evaluations were made in the same manner as in Example A1 except that the amount of basic polymer fine particles was 7 parts by mass per 100 parts by mass of the perfluorocarbon sulfonic acid resin when preparing the composition.

It was also possible to obtain a homogeneous membrane of the electrolyte obtained in Example A4.

The measured ion-exchange capacity of the electrolyte membrane was 1.23 (meq/g).

The average particle diameter of the basic polymer in the membrane was 1.1 μm, and the coefficient of variation was 0.9.

[Example A5]

Basic polymer P-2 was obtained by replacing 8.52 g (38.00 mmol) of ABI and 12.41 g (40.00 mmol) of ODPA with 8.97 g (40.00 mmol) of ABI and 11.17 g (36.00 mmol) of ODPA when synthesizing the basic polymer. Concerning basic polymer P-2, it was verified that imidization progressed to 90% or more. Moreover, fine particles were formed in the same manner as in Example A1, and thus basic polymer fine particle slurry B-4 was obtained. Evaluations were made in the same manner as in Example A1 except that the amount of basic polymer fine particles was 5 parts by mass per 100 parts by mass of the perfluorocarbon sulfonic acid resin when preparing the composition.

It was also possible to obtain a homogeneous membrane of the electrolyte obtained in Example A5.

The measured ion-exchange capacity of the electrolyte membrane was 1.23 (meq/g).

The average particle diameter of the basic polymer in the membrane was 0.5 μm, and the coefficient of variation was 0.8.

[Example A6]

Basic polymer P-3 was obtained by replacing 8.52 g (38.00 mmol) of ABI with 8.07 g (36.00 mmol) of ABI when

synthesizing the basic polymer. Concerning basic polymer P-3, it was verified that imidization progressed to 90% or more. Fine particles were formed in the same manner as in Example A1, and thus basic polymer fine particle slurry B-5 was obtained. Otherwise, evaluations were made in the same manner as in Example A1.

It was also possible to obtain a homogeneous membrane of the electrolyte obtained in Example A6.

The measured ion-exchange capacity of the electrolyte membrane was 1.21 (meq/g).

The average particle diameter of the basic polymer in the membrane was 0.3 μm, and the coefficient of variation was 0.7.

[Example A7]

Basic polymer P-4 was obtained by replacing 8.52 g (38.00 mmol) of ABI with 8.75 g (39.00 mmol) of ABI when synthesizing the basic polymer. Concerning basic polymer P-4, it was verified that imidization progressed to 90% or more. Fine particles were formed in the same manner as in Example A1, and thus basic polymer fine particle slurry B-6 was obtained. Otherwise, evaluations were made in the same manner as in Example A1.

It was also possible to obtain a homogeneous membrane of the electrolyte obtained in Example A7.

The measured ion-exchange capacity of the electrolyte membrane was 1.20 (meq/g).

The average particle diameter of the basic polymer in the membrane was 0.3 μm, and the coefficient of variation was 0.7.

[Example A8]

Basic polymer P-5 was obtained by replacing 12.41 g (40.00 mmol) of ODPA with 12.89 g (40.99 mmol) of 3,3',4,4'-benzophenonetetracarboxylic dianhydride (manufactured by Tokyo Chemical Industry Co., Ltd.) when synthesizing the basic polymer. Concerning basic polymer P-5, it was verified that imidization progressed to 90% or more. Fine particles were formed in the same manner as in Example A1, and thus basic polymer fine particle slurry B-7 was obtained. Otherwise, evaluations were made in the same manner as in Example A1.

It was also possible to obtain a homogeneous membrane of the electrolyte obtained in Example A8.

The measured ion-exchange capacity of the electrolyte membrane was 1.21 (meq/g).

The average particle diameter of the basic polymer in the membrane was 0.4 μm, and the coefficient of variation was 0.8.

[Example A9]

Basic polymer P-6 was obtained by replacing 12.41 g (40.00 mmol) of ODPA with 11.77 g (40.00 mmol) of 4,4'-biphthalic anhydride (manufactured by Tokyo Chemical Industry Co., Ltd.) when synthesizing the basic polymer. Concerning basic polymer P-6, it was verified that imidization progressed to 90% or more. Fine particles were formed in the same manner as in Example A1, and thus basic polymer fine particle slurry B-8 was obtained. Otherwise, evaluations were made in the same manner as in Example A1.

It was also possible to obtain a homogeneous membrane of the electrolyte obtained in Example A9.

The measured ion-exchange capacity of the electrolyte membrane was 1.21 (meq/g).

The average particle diameter of the basic polymer in the membrane was 0.4 μm, and the coefficient of variation was 0.7.

[Example A10]

Basic polymer P-7 was obtained by replacing 8.52 g (38.00 mmol) of ABI with 7.62 g (34.00 mmol) of ABI and 1.03 g (4.00 mmol) of 2,2-bis(3-amino-4-hydroxyphenyl)propane (manufactured by Tokyo Chemical Industry Co., Ltd.) when synthesizing the basic polymer. Concerning basic polymer P-7, it was verified that imidization progressed to 90% or more. Fine particles were formed in the same manner as in Example A1, and thus basic polymer fine particle slurry B-9 was obtained. Otherwise, evaluations were made in the same manner as in Example A1.

It was also possible to obtain a homogeneous membrane of the electrolyte obtained in Example A10.

The measured ion-exchange capacity of the electrolyte membrane was 1.21 (meq/g).

The average particle diameter of the basic polymer in the membrane was 0.3 μm, and the coefficient of variation was 0.6.

[Example A11]

Basic polymer P-8 was obtained by replacing 8.52 g (38.00 mmol) of ABI with 7.62 g (34.00 mmol) of ABI and

0.99 g (4.00 mmol) of bis(3-aminophenyl)sulfone (manufactured by Tokyo Chemical Industry Co., Ltd.) when synthesizing the basic polymer. Concerning basic polymer P-8, it was verified that imidization progressed to 90% or more. Fine particles were formed in the same manner as in Example A1, and thus basic polymer fine particle slurry B-10 was obtained. Otherwise, evaluations were made in the same manner as in Example A1.

It was also possible to obtain a homogeneous membrane of the electrolyte obtained in Example All.

The measured ion-exchange capacity of the electrolyte membrane was 1.20 (meq/g).

The average particle diameter of the basic polymer in the membrane was 0.4 μm, and the coefficient of variation was 0.8.

[Example A12]

Basic polymer P-9 was obtained by replacing 8.52 g (38.00 mmol) of ABI with 7.62 g (34.00 mmol) of ABI and 1.34 g (4.00 mmol) of 2,2-bis(4-aminophenyl)hexafluoropropane (manufactured by Tokyo Chemical Industry Co., Ltd.) when synthesizing the basic polymer. Concerning basic polymer P-9, it was verified that imidization progressed to 90% or more. Fine particles were formed in the same manner as in Example A1, and thus basic polymer fine particle slurry B-11 was obtained. Otherwise, evaluations were made in the same manner as in Example A1.

It was also possible to obtain a homogeneous membrane of the electrolyte obtained in Example A12.

The measured ion-exchange capacity of the electrolyte membrane was 1.22 (meq/g).

The average particle diameter of the basic polymer in the membrane was 0.4 μm, and the coefficient of variation was 0.9.

[Example A13]

Evaluations were made in the same manner as in Example A1 except that when forming fine particles of a basic polymer, B-12 was used that was obtained by grinding the basic polymer with an agate mortar and pestle, passing the ground basic polymer through a sieve having a mesh size of 53 μm to give a powder, and diluting the powder with ethanol to form a slurry.

Concerning the electrolyte obtained in Example A13, the membrane had a rough surface.

The measured ion-exchange capacity of the electrolyte membrane was 1.22 (meq/g).

The average particle diameter of the basic polymer in the membrane was 7.5 μm, and the coefficient of variation was 0.8.

[Comparative Example A1]

Evaluations were made in the same manner as in Example A1 except that no basic polymer was added. When visually observed, the composition was verified as being uniformly dissolved and a transparent solution. That is, the obtained composition was evaluated as not having particles.

It was also possible to obtain a homogeneous membrane of the electrolyte obtained in Comparative Example A1.

The measured ion-exchange capacity of the electrolyte membrane was 1.30 (meq/g).

[Comparative Example A2]

Fine particles were formed in the same manner as in Example A1 by using poly[2,2'-(m-phenylene)-5,5'-bibenzimidazole] (manufactured by Sigma-Aldrich Japan, weight average molecular weight 27,000, hereinafter referred to as "PBI") (P-10) as a basic polymer. When the particles were passed at 180 MPa for 20 passes, there was no change in average particle diameter. The pressure was increased to 250 MPa, and the particle size distribution of the slurry was verified after a lapse of every 20 passes. After a lapse of 180 passes, the average diameter reached 1.77 μm, and thus the resulting slurry (B-13) was recovered. By using B-13, a composition was prepared and dispersibility was evaluated in the same manner as in Example A1, revealing an average particle diameter of 38 μm and aggregation of particles.

This composition was also evaluated in the same manner as in Example A1.

Concerning the electrolyte obtained in Comparative Example A2, visually observable irregularities of aggregates appeared.

The measured ion-exchange capacity of the electrolyte membrane was 1.06 (meq/g).

[Table 1]

| Basic polymer | Molecular weight (Mw) | Basic group concentration |
|---|---|---|
| P-1 | $5.0 \times 10^4$ | 1.9mmol |

(continued)

| Basic polymer | Molecular weight (Mw) | Basic group concentration |
|---|---|---|
| P-2 | $3.0 \times 10^4$ | 2.0mmol |
| P-3 | $2.3 \times 10^4$ | 1.9mmol |
| P-4 | $7.0 \times 10^4$ | 2.0mmol |
| P-5 | $3.0 \times 10^4$ | 1.9mmol |
| P-6 | $3.1 \times 10^4$ | 2.0mmol |
| P-7 | $3.3 \times 10^4$ | 1.7mmol |
| P-8 | $3.2 \times 10^4$ | 1.7mmol |
| P-9 | $3.2 \times 10^4$ | 1.7mmol |
| P-10 | $2.7 \times 10^4$ | 6.5mmol |

The basic group concentration provided in Table 1 is a value calculated from the azole ring concentration when synthesizing the basic polymer.

[Table 2]

| Basic polymer fine particle | Average diameter | Modal diameter | 5.00um to Abundance ratio | 0.10 to 5.00um Abundance ratio | 0.05 to 3.00um Abundance ratio | 0.05 to 1.00um Abundance ratio | 0.05 to 0.80um Abundance ratio | 0.05 to 0.60um Abundance ratio | Pulverizability |
|---|---|---|---|---|---|---|---|---|---|
| B-1 | 0.24um | 0.14um | 0 | 0.81 | 1.00 | 0.96 | 0.95 | 0.94 | ◎ |
| B-2 | 0.41um | 0.52um | 0 | 0.83 | 1.00 | 0.96 | 0.92 | 0.75 | ◎ |
| B-3 | 0.64um | 0.74um | 0 | 0.78 | 0.96 | 0.94 | 0.9 | 0.48 | ◎ |
| B-4 | 0.33um | 0.25um | 0 | 0.81 | 1.00 | 0.96 | 0.94 | 0.92 | ◎ |
| B-5 | 0.28um | 0.15um | 0 | 0.82 | 1.00 | 0.96 | 0.95 | 0.94 | ◎ |
| B-6 | 0.27um | 0.14um | 0 | 0.83 | 1.00 | 0.96 | 0.95 | 0.94 | ◎ |
| B-7 | 0.25um | 0.17um | 0 | 0.85 | 1.00 | 0.96 | 0.95 | 0.94 | ◎ |
| B-8 | 0.25um | 0.16um | 0 | 0.84 | 1.00 | 0.96 | 0.95 | 0.94 | ◎ |
| B-9 | 0.26um | 0.15um | 0 | 0.83 | 1.00 | 0.96 | 0.95 | 0.94 | ◎ |
| B-10 | 0.28um | 0.16um | 0 | 0.83 | 1.00 | 0.96 | 0.95 | 0.94 | ◎ |
| B-11 | 0.31um | 0.19um | 0 | 0.85 | 1.00 | 0.96 | 0.95 | 0.93 | ◎ |
| B-12 | 7.5um | 6.9um | 0.92 | 0.08 | 0.00 | 0.00 | 0.00 | 0.00 | ◎ |
| B-13 | 1.77um | 1.60um | 0.04 | 0.96 | 0.89 | 0.36 | 0.26 | 0.21 | × |

[Table 3]

| | Component (A) | Component (B) | Resin type | Particle type | Viscosity (cP) | Dispersibility | Chemical durability | Average particle diameter | Coefficient of variation |
|---|---|---|---|---|---|---|---|---|---|
| Example A1 | 100 | 6 | P-1 | B-1 | 1370 | ◎ | ◎ | 0.4 | 0.9 |
| Example A2 | 100 | 3 | P-1 | B-1 | 1522 | ◎ | ○ | 0.4 | 0.8 |
| Example A3 | 100 | 6 | P-1 | B-2 | 1610 | ◎ | ○ | 1.2 | 0.9 |
| Example A4 | 100 | 7 | P-1 | B-3 | 1580 | ◎ | ○ | 1.1 | 0.9 |
| Example A5 | 100 | 5 | P-2 | B-4 | 1840 | ◎ | ◎ | 0.5 | 0.8 |
| Example A6 | 100 | 6 | P-3 | B-5 | 1653 | ◎ | ◎ | 0.3 | 0.7 |
| Example A7 | 100 | 6 | P-4 | B-6 | 1687 | ◎ | ◎ | 0.3 | 0.7 |
| Example A8 | 100 | 6 | P-5 | B-7 | 1432 | ◎ | ◎ | 0.4 | 0.8 |
| Example A9 | 100 | 6 | P-6 | B-8 | 1350 | ◎ | ○ | 0.4 | 0.7 |
| Example A10 | 100 | 6 | P-7 | B-9 | 1512 | ◎ | ◎ | 0.3 | 0.6 |
| Example A11 | 100 | 6 | P-8 | B-10 | 1528 | ◎ | ◎ | 0.4 | 0.8 |
| Example A12 | 100 | 6 | P-9 | B-11 | 1472 | ◎ | ◎ | 0.4 | 0.9 |
| Example A13 | 100 | 5 | P-1 | B-12 | 1460 | Δ | Δ | 7.5 | 0.8 |
| Comparative Example A1 | 100 | - | - | - | 1048 | - | Δ | - | - |
| Comparative Example A2 | 100 | 6 | P-10 | B-13 | 1700 | × | Δ | - | - |

<<Examples of Second Embodiment>>

The measurement methods and evaluation methods used in the Examples and Comparative Examples are as follows.

(Measurement of Molecular Weight)

The weight-average molecular weight (Mw) was measured under the following conditions by gel permeation chromatography (GPC). The solvent used was N,N-dimethylformamide (manufactured by Wako Pure Chemical Industries Ltd., for high performance liquid chromatography) to which 24.8 mol/L lithium bromide monohydrate (manufactured by Wako Pure Chemical Industries, Ltd., purity 99.5%) and 63.2 mol/L phosphoric acid (manufactured by Wako Pure Chemical Industries Ltd., for high performance liquid chromatography) were added before measurement. A calibration curve for calculating the weight average molecular weight was prepared using standard polystyrene (manufactured by Tosoh Corporation).

Column: TSK-GEL
SUPER
HM-H
Flow rate: 0.5 mL/min
Column temperature: 40°C
Pump: PU-2080 (manufactured by JASCO)
Detector: RI-2031 Plus (RI: differential refractometer, manufactured by JASCO)
UV-2075 Plus (UV-Vis: ultraviolet visible absorption spectrometer, manufactured by JASCO)

(Solubility Evaluation)

Polyimide solutions obtained in Examples and Comparative Examples described below were each recovered in a 50 mL glass sample bottle and left to stand still at room temperature for 10 days to evaluate solubility according to the following criteria.

○: No precipitates were formed, and fluidity was maintained.

Δ: Slight turbidity was developed, but fluidity was maintained.

×: Precipitates were formed, or fluidity was lost.

(Evaluation of Amount of Volatile Components in Porous Material)

Measurement was carried out under the following conditions by thermogravimetric analysis (TGA), and the weight loss from 30°C to 350°C was evaluated as the amount of volatile components.

Measurement apparatus: SII EXSTAR 6000 (manufactured by Seiko Instruments Inc.)
TG/DTA 6200
Measurement atmosphere: Nitrogen
Flow rate: 100 mL/min
Measurement temperature range: 30°C to 350°C
Heating rate: 10°C/min

(Average Fiber Diameter of Porous Material)

The average fiber diameters of porous materials were evaluated as follows.
Secondary electron images of the surfaces of the porous materials obtained in Examples and Comparative Examples described below were observed under a scanning electron microscope (manufactured by Hitachi High-Technologies Corporation, S-4800), and the average fiber diameters were determined from electron micrographs of 5000 magnification. Here, the "fiber diameter" refers to the length in a direction perpendicular to the direction of a fiber length measured based on an electron micrograph of the fiber.

(Electrolyte Impregnatability)

The impregnatability of a porous material with a solution (a perfluorocarbon sulfonic acid resin solution) containing a perfluoropolymer compound having an ion-exchange group (hereinafter also referred to as an "electrolyte") was evaluated as follows.

As indicated in the Examples and Comparative Examples described below, a porous material was impregnated with a perfluorocarbon sulfonic acid resin solution to prepare a composite membrane. A sheet randomly cut out from the resulting composite membrane was embedded in an epoxy adhesive, and the cross-section of the sheet was processed by using an ultramicrotome. A secondary electron image of the cross-section over 10 mm of the cut-out sheet was observed under a scanning electron microscope (S-4800, manufactured by Hitachi High-Technologies Corporation). In a region where the porous material and the electrolyte formed a composite, the proportion of regions where the electrolyte did not fill voids was evaluated according to the following criteria.

○: Voids accounted for 0 to 3% or less.
Δ: Voids accounted for more than 3% and 10% or less.
×: Voids exceeded 10%.

(Evaluation of Dimensional Change)

The dimensional change of an electrolyte membrane at 120°C under 100% RH was evaluated as follows. A rectangular mark having about 15 mm × 20 mm was drawn on the electrolyte membrane, and the length of each side was measured by a measuring microscope (OLYMPUS STM 6). The electrolyte membrane was placed in a highly accelerated stress tester (HAST, EHS-211) and exposed to an environment having 120°C and 100% RH for 2 hours, and then the lengths of the sides of the rectangular mark were similarly measured. The dimensional change before and after swelling was calculated for the longer-side and shorter-side directions of the rectangle, and the average value thereof was evaluated according to the following criteria.

◎: Average value of dimensional change was 15% or less.

○: Average value of dimensional change was more than 15% and 30% or less.

Δ: Average value of dimensional change was more than 30% and 40% or less.

×: Average value of dimensional change was more than 40%.

(Preparation of MEA)

MEA was prepared as follows. First, electrode catalyst layers were prepared as follows. To 1.00 g of Pt-supported carbon (TEC10E40E, manufactured by Tanaka Kikinzoku Kogyo, Pt 36.4%) was added 3.31 g of a polymer solution obtained by concentrating a 5% by mass perfluorosulfonic acid polymer solution SS-910 (manufactured by Asahi Kasei E-materials Corp., equivalent weight (EW): 910, solvent composition: ethanol/water = 50/50 (mass ratio)) to 11% by mass, further, 3.24 g of ethanol was added, and then the mixture was thoroughly mixed by a homogenizer to obtain electrode ink. The electrode ink was applied to a PTFE sheet by a screen printing method. The electrode ink was applied in two different amounts: one resulting in a Pt loading and a polymer loading of both 0.15 mg/cm$^2$, and the other resulting in a Pt loading and a polymer loading of both 0.30 mg/cm$^2$. After application, the electrode ink was dried at room temperature for 1 hour and at 120°C for 1 hour in air to obtain electrode catalyst layers having a thickness of about 10 μm. Among these electrode catalyst layers, one having a Pt loading and a polymer loading of 0.15 mg/cm$^2$ was used as an anode catalyst layer, and the other having a Pt loading and a polymer loading of 0.30 mg/cm$^2$ was used as a cathode catalyst layer.

The anode catalyst layer and the cathode catalyst layer thus obtained were placed so as to face each other, with a composite membrane, which will be described below, being interposed therebetween, and hot-pressed at 160°C at a surface pressure of 0.1 MPa to transfer and attach the anode catalyst layer and the cathode catalyst layer to the composite membrane, and thus a MEA was prepared.

(Fuel Cell Evaluation)

Carbon cloth (ELAT(R) B-1, manufactured by DE NORA NORTH AMERICA) was set as a gas diffusion layer on both sides of the MEA (the outer surfaces of the anode catalyst layer and the cathode catalyst layer) to be incorporated

into an evaluation cell. The evaluation cell was set in a fuel cell evaluation system 890 CL (manufactured by Toyo Corporation), the temperature of the cell was raised to 80°C, then hydrogen gas was allowed to flow at 300 cc/min on the anode side, air was allowed to flow at 800 cc/min on the cathode side, and the anode and the cathode were both pressurized at 0.15 MPa (absolute pressure). A water bubbling method was used for gas humidification, and while supplying hydrogen gas and air, which were both humidified at 53°C, to the cell, a current-voltage curve was measured and evaluated according to the following criteria.

○: Voltage at 1 $A/cm^2$ was 0.6 V or more.
×: Voltage at 1 $A/cm^2$ was less than 0.6 V.

(Evaluation of Chemical Durability)

Carbon cloth (ELAT(R) B-1, manufactured by DE NORA NORTH AMERICA) was set as a gas diffusion layer on both sides of the MEA (the outer surfaces of the anode catalyst layer and the cathode catalyst layer) to be incorporated into an evaluation cell. The evaluation cell was set in a fuel cell evaluation system 890 CL (manufactured by Toyo Corporation), the temperature of the cell was raised to 95°C, and the gas humidification temperature of the anode and the cathode was 50°C. Hydrogen was allowed to flow at 50 cc/min on the anode side, and air was allowed to flow at 50 cc/min on the cathode side. In this state, by opening the circuit and maintaining a current value at 0, chemical durability was evaluated.

In a durability test, pinholes generated in an electrolyte membrane cause a phenomenon called cross-leakage in which hydrogen gas leaks to the cathode side. In order to determine the amount resulting from cross-leakage, the hydrogen concentration in the cathode-side discharge gas was measured by a Micro GC (manufactured by Varian Co., model number: CP4900), and the test was terminated when the measured value exceeded 1,000 ppm. The time Hr from the beginning to the end of the test was used for the evaluation of the durability test, and durability was evaluated according to the following criteria.

◎: Showed a durability of 200 Hr or more.
○: Showed a durability of 100 Hr or more and less than 200 Hr.
×: Showed a durability of 50 Hr or more and less than 100 Hr.

[Example B1]

(Preparation of Solution of Perfluorocarbon Polymer Compound Having Ion-Exchange Group)

Pellets of a perfluorosulfonic acid resin precursor (ion-exchange capacity after hydrolysis and acid treatment: 1.30 meq/g) obtained from tetrafluoroethylene and $CF_2$=$CFO(CF_2)_2$-$SO_2F$, which is an electrolyte precursor polymer, were provided. Next, the precursor pellets were subjected to a hydrolysis treatment by being brought into contact at 80°C for 20 hours with an aqueous solution obtained by dissolving potassium hydroxide (15% by mass) and methyl alcohol (50% by mass). Thereafter, the pellets were immersed in water at 60°C for 5 hours. Next, the pellets after being immersed in water was subjected to an immersion treatment in a 2 N aqueous hydrochloric acid solution at 60°C for 1 hour. This treatment was repeated 5 times wherein a new aqueous hydrochloric acid solution was used each time. Then, the pellets after being repeatedly immersed in an aqueous hydrochloric acid solution was washed with ion-exchange water and dried. Thereby, an electrolyte perfluorocarbon sulfonic acid resin was obtained.

The pellets were placed and sealed in a 5 L autoclave together with an aqueous ethanol solution (water:ethanol=50.0/50.0 (mass ratio)), heated to 160°C while being stirred with a blade, and retained for 5 hours. Thereafter, the autoclave was spontaneously cooled to obtain a uniform perfluorocarbon sulfonic acid resin solution having a solids concentration of 5% by mass. This solution was concentrated under reduced pressure at 80°C and then diluted with water and ethanol to prepare a solution of ethanol:water=60:40 (mass ratio) having a solids content of 15.0% by mass (A-1).

(Synthesis of Polyimide)

A 500 mL stirrer-equipped separable flask having a Dean-Stark tube and a reflux tube in the upper part was set, and purged with nitrogen gas. Then, 114 g of N-methylpyrrolidone (hereinafter referred to as "NMP"), 7.69 g (34.30 mmol) of 5-amino-2-(4-aminophenyl)benzimidazole (manufactured by Tokyo Chemical Industry Co., Ltd., hereinafter referred to as "ABI"), 8.52 g (34.30 mmol) of bis(3-aminophenyl)sulfone (manufactured by Tokyo Chemical Industry Co., Ltd., hereinafter referred to as "33DAS"), 21.71 g (70.00 mmol) of 4,4'-oxydiphthalic anhydride (manufactured by Tokyo Chemical Industry Co., Ltd., hereinafter referred to as "ODPA"), and 42 g of toluene were added, and stirred while

introducing nitrogen gas into the reaction vessel. Then, the Dean-Stark tube was filled with toluene, the inner temperature was raised to 160°C in an oil bath, and the mixture was thermally refluxed at 160°C for 2 hours for imidization. It was verified from the weight of water recovered in the Dean-Stark tube that imidization progressed to 90% or more. Then, toluene was removed from the Dean-Stark tube, the temperature was raised to 180°C to further continue the reaction for 4 hours, and thus polyimide solution P-3 having a Mw of $6.7 \times 10^4$ was obtained. This polyimide had a structure represented by formula (1) above.

The polyimide solution was a transparent solution without turbidity. The molecular weight of the polyimide and evaluations of solubility are shown in Table 4 below.

(Preparation of Porous Material)

A NANON manufactured by Mecc Co., Ltd., was set to have a spinning distance of 200 mm, a voltage of 20 kV, and a discharge rate of 1 mL/hr, a solution obtained by diluting polyimide solution P-3 to a suitable viscosity was used to carry out electrospinning, and a 3.3 g/$m^2$ sheet was prepared.

The resulting sheet was heat-treated under reduced pressure at 260°C for 30 minutes in an oven. The amount of volatile components in the resulting porous material was 3 wt% or less.

A secondary electron image of the heat-treated sheet observed under a scanning electron microscope (manufactured by Hitachi High-Technologies Corporation, S-4800) showed a porous material in a nanofiber form.

A SEM image of the porous material is shown in Figure 2.

(Preparation of Composite Membrane)

Solution A-1 prepared above was applied to a Kapton film by using an applicator, the gap of which was regulated so as to provide a dry film thickness of 8 μm, and the porous material prepared (in the preparation of a porous material) was impregnated and heated at 120°C for 30 minutes. Moreover, the second layer was applied by using the same applicator and heated at 120°C for 30 minutes and then at 170°C for 20 minutes, and thus a composite membrane was prepared.

The results of evaluating the electrolyte impregnatability of the resulting composite membrane verified that there were no voids in the composite membrane region. The results of observing the cross-section under a SEM showed that the overall membrane thickness was 20 μm, and the composite membrane region was 8 μm. A SEM image of the cross-section of the composite membrane is shown in Figure 3.

A MEA was prepared by using the resulting membrane, and the results of fuel cell evaluation and chemical durability evaluation are shown in Table 5.

[Example B2]

Evaluations were made in the same manner as in Example B1 except that polyimide solution P-4 was obtained by changing the amount of ABI from 7.69 g (34.30 mmol) to 9.23 g (41.16 mmol) and the amount of 33DAS from 8.52 g (34.30 mmol) to 6.81 g (27.44 mmol) when synthesizing the polymer. This polyimide had a structure represented by formula (1) above.

The sheet prepared by using polyimide solution P-4 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite membrane region was 8 μm.

A MEA was prepared by using the resulting membrane, and the results of fuel cell evaluation and chemical durability evaluation are shown in Table 5.

[Example B3]

Evaluations were made in the same manner as in Example B1 except that polyimide solution P-5 was obtained by changing the amount of ABI from 7.69 g (34.30 mmol) to 12.43 g (55.44 mmol) and the amount of 33DAS from 8.52 g (34.30 mmol) to 3.44 g (13.86 mmol) when synthesizing the polymer. This polyimide had a structure represented by formula (1) above.

The sheet prepared by using polyimide solution P-5 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that

the overall membrane thickness was 20 μm, and the composite membrane region was 8 μm.

A MEA was prepared by using the resulting membrane, and the results of fuel cell evaluation and chemical durability evaluation are shown in Table 5.

[Example B4]

Evaluations were made in the same manner as in Example B1 except that polyimide solution P-6 was obtained by changing the amount of ABI from 7.69 g (34.30 mmol) to 13.85 g (61.74 mmol) and the amount of 33DAS from 8.52 g (34.30 mmol) to 1.70 g (6.86 mmol) when synthesizing the polymer. While appearing slightly turbid, the resulting polyimide solution P-6 maintained fluidity. This polyimide had a structure represented by formula (1) above.

The sheet prepared by using polyimide solution P-6 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite membrane region was 8 μm.

A MEA was prepared by using the resulting membrane, and the results of fuel cell evaluation and chemical durability evaluation are shown in Table 5.

[Example B5]

Evaluations were made in the same manner as in Example B1 except that polyimide solution P-7 was obtained by replacing NMP with N,N-dimethylacetamide when synthesizing the polymer. This polyimide had a structure represented by formula (1) above.

The sheet prepared by using polyimide solution P-7 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite membrane region was 8 μm.

A MEA was prepared by using the resulting membrane, and the results of fuel cell evaluation and chemical durability evaluation are shown in Table 5.

[Example B6]

Evaluations were made in the same manner as in Example B1 except that polyimide solution PI-8 was obtained by changing the amount of NMP from 114 g to 155 g and replacing 21.71 g (70.00 mmol) of ODPA with 22.56 g (70.00 mmol) of 3,3',4,4'-benzophenonetetracarboxylic dianhydride (manufactured by Tokyo Chemical Industry Co., Ltd., hereinafter referred to as "BTDA") when synthesizing a polymer. This polyimide had a structure represented by formula (1) above.

The sheet prepared by using polyimide solution PI-8 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.

A MEA was prepared by using the resulting membrane, and the results of fuel cell evaluation and chemical durability evaluation are shown in Table 5.

[Example B7]

Evaluations were made in the same manner as in Example B6 except that polyimide solution PI-9 was obtained by changing the amount of ABI from 7.69 g (34.30 mmol) to 9.23 g (41.16 mmol) and the amount of 33DAS from 8.52 g (34.30 mmol) to 6.81 g (27.44 mmol) when synthesizing the polymer. This polyimide had a structure represented by formula (1) above.

The sheet prepared by using polyimide solution PI-9 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.

A MEA was prepared by using the resulting membrane, and the results of fuel cell evaluation and chemical

durability evaluation are shown in Table 5.

[Example B8]

Evaluations were made in the same manner as in Example B1 except that polyimide solution PI-10 was obtained by changing the amount of NMP from 114 g to 134 g and the amount of ABI from 7.69 g (34.30 mmol) to 15.38 g (68.60 mmol) and replacing 21.71 g (70.00 mmol) of ODPA with 24.88 g (56.00 mmol) of 4,4'-(hexafluoroisopropylidene)diphthalic anhydride (manufactured by Tokyo Chemical Industry Co., Ltd., hereinafter referred to as "6FDA") and 4.34 g (14.00 mmol) of ODPA, and 33DAS was not used, when synthesizing the polymer. This polyimide had a structure represented by formula (1) above.

The sheet prepared by using polyimide solution PI-10 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.

A MEA was prepared by using the resulting membrane, and the results of fuel cell evaluation and chemical durability evaluation are shown in Table 5.

[Example B9]

Evaluations were made in the same manner as in Example B8 except that the heat treatment conditions of a porous material in a nanofiber form prepared using polyimide solution PI-10 were changed from a reduced pressure at 260°C for 30 minutes to a reduced pressure at 240°C for 30 minutes. The amount of volatile components in the resulting porous material was 4 wt%.

Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.

A MEA was prepared by using the resulting membrane, and the results of fuel cell evaluation and chemical durability evaluation are shown in Table 5. In the fuel cell evaluation, the voltage at 1 $A/cm^2$ was 0.6 V or more, which was about 0.02 V lower than that of Example B8.

[Example B10]

Evaluations were made in the same manner as in Example B8 except that polyimide solution PI-11 was obtained by changing the amount of NMP from 134 g to 129 g, the amount of 6FDA from 24.88 g (56.00 mmol) to 18.66 g (42.00 mmol), and the amount of ODPA from 4.34 g (14.00 mmol) to 8.69 g (28.00 mmol) when synthesizing the polymer. This polyimide had a structure represented by formula (1) above.

The sheet prepared by using polyimide solution PI-11 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.

A MEA was prepared by using the resulting membrane, and the results of fuel cell evaluation and chemical durability evaluation are shown in Table 5.

[Example B11]

Evaluations were made in the same manner as in Example B1 except that polyimide solution PI-12 was obtained by changing the amount of NMP from 114 g to 129 g and replacing 8.52 g (34.30 mmol) of 33DAS with 12.56 g (34.30 mmol) of 2,2-bis(3-amino-4-hydroxyphenyl)hexafluoropropane (manufactured by Tokyo Chemical Industry Co., Ltd., hereinafter referred to as "6FHA") and 21.71 g (70.00 mmol) of ODPA with 22.56 g (70.00 mmol) of BTDA when synthesizing the polymer. This polyimide had a structure represented by formula (1) above.

The sheet prepared by using polyimide solution PI-12 was a porous material in a nanofiber form. The amount of volatile components in the resulting porous material was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.

A MEA was prepared by using the resulting membrane, and the results of fuel cell evaluation and chemical

durability evaluation are shown in Table 5.

[Example B12]

Evaluations were made in the same manner as in Example B10 except that polyimide solution PI-13 was obtained by changing the amount of NMP from 129 g to 126 g, the amount of ABI from 7.69 g (34.3 mmol) to 9.23 g (41.16 mmol), and the amount of 6FHA from 12.56 g (34.30 mmol) to 10.05 g (27.44 mmol) when synthesizing the polymer. This polyimide had a structure represented by formula (1) above.
The sheet prepared by using polyimide solution PI-13 was a porous material in a nanofiber form. The amount of volatile components in the resulting porous material was 3 wt% or less.
Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.
A MEA was prepared by using the resulting membrane, and the results of fuel cell evaluation and chemical durability evaluation are shown in Table 5.

[Example B13]

Evaluations were made in the same manner as in Example B11 except that polyimide solution PI-14 was obtained by changing the amount of NMP from 126 g to 123 g, the amount of ABI from 9.23 g (41.16 mmol) to 10.77 g (48.02 mmol), and the amount of 6FHA from 10.05 g (27.44 mmol) to 7.54 g (20.58 mmol) when synthesizing the polymer. This polyimide had a structure represented by formula (1) above.
The sheet prepared by using polyimide solution PI-14 was a porous material in a nanofiber form. The amount of volatile components in the resulting porous material was 3 wt% or less.
Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.
A MEA was prepared by using the resulting membrane, and the results of fuel cell evaluation and chemical durability evaluation are shown in Table 5.

[Example B14]

Evaluations were made in the same manner as in Example B1 except that polyimide solution PI-15 was obtained by changing the amount of NMP from 129 g to 118 g and replacing 12.56 g (34.30 mmol) of 6FHA with 8.86 g (34.30 mmol) of 2,2-bis(3-amino-4-hydroxyphenyl)propane (manufactured by Tokyo Chemical Industry Co., Ltd., hereinafter referred to as "BPA-DA") when synthesizing the polymer. This polyimide had a structure represented by formula (1) above.
The sheet prepared by using polyimide solution PI-15 was a porous material in a nanofiber form. The amount of volatile components in the resulting porous material was 3 wt% or less.
Moreover, the results of evaluating the electrolyte impregnatability of the resulting composite membrane verified that there were no voids in the composite region. The results of observing the cross-section under a SEM showed that the overall membrane thickness was 20 μm, and the composite region was 8 μm.
A MEA was prepared by using the resulting membrane, and the results of fuel cell evaluation and chemical durability evaluation are shown in Table 5.

[Comparative Example B1]

Evaluations were made in the same manner as in Example B1 except that polyimide solution P-1 was obtained by not adding ABI and replacing 8.52 g (34.30 mmol) of 33DAS with 3.41 g (13.72 mmol) of 33DAS and 5.11 g (20.57 mmol) of bis(4-aminophenyl)sulfone (manufactured by Tokyo Chemical Industry Co., Ltd., hereinafter referred to as "44DAS") when synthesizing the polymer.
The sheet prepared by using polyimide solution P-1 was a porous material in a nanofiber form. The amount of volatile components in the resulting porous material was 3 wt% or less.
Moreover, the results of evaluating the electrolyte impregnatability of the resulting composite membrane verified that 50% or more of the composite region was voids and not filled with the electrolyte. The results of observing the cross-section under a SEM showed that the overall membrane thickness was 30 μm, and the composite membrane region where voids were present was 18 μm. A SEM image of the cross section of the composite membrane is shown in Figure 4.
A membrane having a final membrane thickness of 20 μm obtained by regulating gaps during membrane formation was used to prepare a MEA, and the results of fuel cell evaluation and chemical durability evaluation are

shown in Table 5.

In the fuel cell evaluation, the voltage was at least 0.05 V lower than those of Examples B1 to B13.

[Comparative Example B2]

Evaluations were made in the same manner as in Example B1 except that polyimide solution P-2 was obtained by changing the amount of ABI from 7.69 g (34.30 mmol) to 14.91 g (66.50 mmol) and not adding 33DAS when synthesizing the polymer. The resulting polyimide solution P-2 showed precipitates, and lost fluidity when left to stand still at room temperature for 10 days. Accordingly, it was judged that preparation of a porous material by electrospinning was difficult, and electrolyte impregnatability was not evaluated.

[Comparative Example B3]

Evaluations were made in the same manner as in Example B1 except that no porous material was used.

[Table 4]

| | Polymer | Diamine | | Acid dianhydride | | Molecular weight | Solubility | Electrolyte impregnatability |
|---|---|---|---|---|---|---|---|---|
| Example B1 | P-3 | ABI (50) | 33DAS (50) | ODPA (100) | | $6.7 \times 10^4$ | ○ | ○ |
| Example B2 | P-4 | ABI (60) | 33DAS (40) | ODPA (100) | | $4.5 \times 10^4$ | ○ | ○ |
| Example B3 | P-5 | ABI (80) | 33DAS (20) | ODPA (100) | | $7.5 \times 10^4$ | ○ | ○ |
| Example B4 | P-6 | ABI (90) | 33DAS (10) | ODPA (100) | | $5.2 \times 10^4$ | Δ | ○ |
| Example B5 | P-7 | ABI (50) | 33DAS (50) | ODPA (100) | | $2.7 \times 10^4$ | ○ | ○ |
| Example B6 | P-8 | ABI (50) | 33DAS (50) | BTDA (100) | | $19.7 \times 10^4$ | ○ | ○ |
| Example B7 | P-9 | ABI (60) | 33DAS (40) | BTDA (100) | | $19.7 \times 10^4$ | ○ | ○ |
| Example B8 | P-10 | ABI (100) | | 6FDA (80) | ODPA (20) | $11.5 \times 10^4$ | ○ | ○ |
| Example B9 | P-10 | ABI (100) | | 6FDA (80) | ODPA (20) | $11.5 \times 10^4$ | ○ | ○ |
| Example B10 | P-11 | ABI (100) | | 6FDA (60) | ODPA (40) | $13.4 \times 10^4$ | ○ | ○ |
| Example B11 | P-12 | ABI (50) | 6FHA (50) | BTDA (100) | | $27.0 \times 10^4$ | ○ | ○ |
| Example B12 | P-13 | ABI (60) | 6FHA (40) | BTDA (100) | | $23.1 \times 10^4$ | ○ | ○ |
| Example B13 | P-14 | ABI (70) | 6FHA (30) | BTDA (100) | | $22.4 \times 10^4$ | ○ | ○ |
| Example B14 | P-15 | ABI (50) | BPA-DA (50) | BTDA (100) | | $28.2 \times 10^4$ | ○ | ○ |
| Comparative Example B1 | P-1 | 33DAS (40) | 44DAS (60) | ODPA (100) | | $4.5 \times 10^4$ | ○ | × |
| Comparative Example B2 | P-2 | ABI (100) | - | ODPA (100) | | $3.8 \times 10^4$ | × | - |

(continued)

| | Polymer | Diamine | | Acid dianhydride | | Molecular weight | Solubility | Electrolyte impregnatability |
|---|---|---|---|---|---|---|---|---|
| Comparative Example B3 | - | - | - | - | | - | - | - |

In Table 4, the numerical value of each component indicates the content of the component in the composition as the ratio of the component added.

[Table 5]

| | Dimensional change | Fuel cell evaluation | Chemical durability evaluation |
|---|---|---|---|
| Example B1 | ◎ | ○ | ◎ |
| Example B2 | ◎ | ○ | ◎ |
| Example B3 | ◎ | ○ | ◎ |
| Example B4 | ◎ | ○ | ◎ |
| Example B5 | ◎ | ○ | ◎ |
| Example B6 | ◎ | ○ | ◎ |
| Example B7 | ◎ | ○ | ◎ |
| Example B8 | ◎ | ○ | ◎ |
| Example B9 | ◎ | ○ | ◎ |
| Example B10 | ◎ | ○ | ◎ |
| Example B11 | ◎ | ○ | ◎ |
| Example B12 | ◎ | ○ | ◎ |
| Example B13 | ◎ | ○ | ◎ |
| Example B14 | ◎ | ○ | ◎ |
| Comparative Example B1 | ◎ | × | × |
| Comparative Example B2 | - | - | - |
| Comparative Example B3 | × | ○ | × |

[Example C1]

(Preparation of Solution of Perfluorocarbon Polymer Compound Having Ion-Exchange Group)

Pellets of a perfluorosulfonic acid resin precursor (ion-exchange capacity after hydrolysis and acid treatment: 1.30 meq/g) obtained from tetrafluoroethylene and $CF_2$=$CFO(CF_2)_2$-$SO_2F$, which is an electrolyte precursor polymer, were provided. Next, the precursor pellets were subjected to a hydrolysis treatment by being brought into contact at 80°C for 20 hours with an aqueous solution obtained by dissolving potassium hydroxide (15% by mass) and methyl alcohol (50% by mass). Thereafter, the pellets were immersed in water at 60°C for 5 hours. Next, the pellets after being immersed in water was subjected to an immersion treatment in a 2 N aqueous hydrochloric acid solution at 60°C for 1 hour. This treatment was repeated 5 times wherein a new aqueous hydrochloric acid solution was used each time. Then, the pellets after being repeatedly immersed in an aqueous hydrochloric acid solution was washed with ion-exchange water and dried. Thereby, an electrolyte perfluorocarbon sulfonic acid resin was obtained.

The pellets were placed and sealed in a 5 L autoclave together with an aqueous ethanol solution (water:ethanol=50.0/50.0 (mass ratio)), heated to 160°C while being stirred with a blade, and retained for 5 hours. Thereafter, the autoclave was spontaneously cooled to obtain a uniform perfluorocarbon sulfonic acid resin solution having a solids concentration of 5% by mass. This solution was concentrated under reduced pressure at 80°C and then diluted with water and ethanol to prepare a solution of ethanol:water=60:40 (mass ratio) having a solids content of 15.0% by mass

(A-1).

(Synthesis of Polyimide)

A 500 mL stirrer-equipped separable flask having a Dean-Stark tube and a reflux tube in the upper part was set, and purged with nitrogen gas. Then, 140 g of N-methylpyrrolidone (hereinafter referred to as "NMP"), 15.38 g (68.60 mmol) of 5-amino-2-(4-aminophenyl)benzimidazole (manufactured by Tokyo Chemical Industry Co., Ltd., hereinafter referred to as "ABI"), 31.10 g (70.00 mmol) of 4,4'-(hexafluoroisopropylidene)diphthalic anhydride (manufactured by Tokyo Chemical Industry Co., Ltd., hereinafter referred to as "6FDA"), and 36 g of toluene were added, and stirred while introducing nitrogen gas into the reaction vessel. Then, the Dean-Stark tube was filled with toluene, the inner temperature was raised to 160°C in an oil bath, and the mixture was thermally refluxed at 160°C for 2 hours for imidization. It was verified from the weight of water recovered in the Dean-Stark tube that imidization progressed to 90% or more. Then, toluene was removed from the Dean-Stark tube, the temperature was raised to 180°C to further continue the reaction for 4 hours, and thus polyimide solution P-3 having a Mw of $25.3\times10^4$ was obtained.

The polyimide solution was a transparent solution without turbidity. The molecular weight and the solubility evaluation of the polyimide are shown in Table 6 below.

(Preparation of Porous Material Fiber Sheet)

A NANON manufactured by Mecc Co., Ltd., was set to have a spinning distance of 200 mm, a voltage of 20 kV, and a discharge rate of 1 mL/hr, a solution obtained by diluting polyimide solution P-3 to a suitable viscosity was used to carry out electrospinning, and a 3.3 g/m$^2$ sheet having an average fiber diameter of 200 nm was obtained.

The resulting sheet was heat-treated under reduced pressure at 260°C for 30 minutes in an oven. The amount of residual volatile components in the resulting porous material fiber sheet was 3 wt% or less.

A secondary electron image of the heat-treated sheet observed under a scanning electron microscope (manufactured by Hitachi High-Technologies Corporation, S-4800) showed a porous material in a nanofiber form. A SEM image of the porous material is shown in Figure 5.

(Preparation of Composite Membrane)

Solution A-1 prepared above was applied to a Kapton film by using an applicator, the gap of which was regulated so as to provide a dry film thickness of 8 μm, and the porous material prepared above (in the preparation of a porous material fiber sheet) was impregnated and heated at 120°C for 30 minutes. Moreover, the second layer was applied by using the same applicator and heated at 120°C for 30 minutes and then at 170°C for 20 minutes, and thus a composite membrane was prepared.

The results of evaluating the electrolyte impregnatability of the resulting composite membrane verified that there were no voids in the composite membrane region. The results of observing the cross-section under a SEM showed that the overall membrane thickness was 20 μm, and the composite membrane region was 8 μm. A SEM image of the cross-section of the composite membrane is shown in Figure 6.

A MEA was prepared by using the resulting membrane, and the results of fuel cell evaluation and chemical durability evaluation are shown in Table 7.

[Example C2]

Evaluations were made in the same manner as in Example C1 except that polyimide solution P-4 was obtained by replacing NMP with N,N-dimethylacetamide when synthesizing the polymer.

The sheet prepared by using polyimide solution P-4 was a porous material in a nanofiber form. The average fiber diameter of the resulting porous material was 200 nm, and the amount of volatile components was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite membrane region was 8 μm.

A MEA was prepared by using the resulting membrane, and the results of fuel cell evaluation and chemical durability evaluation are shown in Table 7.

[Example C3]

Evaluations were made in the same manner as in Example C1 except that polyimide solution P-5 was obtained by replacing 31.10 g (70.00 mmol) of 6FDA with 24.88 g (56.00 mmol) of 6FDA and 4.34 g (14.00 mmol) of 4,4'-oxydiphthalic anhydride (manufactured by Tokyo Chemical Industry Co., Ltd., hereinafter referred to as "ODPA") when synthesizing the polymer.

The sheet prepared by using polyimide solution P-5 was a porous material in a nanofiber form. The average fiber diameter of the resulting porous material was 200 nm, and the amount of volatile components was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite membrane region was 8 μm.

A MEA was prepared by using the resulting membrane, and the results of fuel cell evaluation and chemical durability evaluation are shown in Table 7.

[Example C4]

Evaluations were made in the same manner as in Example C1 except that polyimide solution P-6 was obtained by replacing 31.10 g (70.00 mmol) of 6FDA with 18.66 g (42.00 mmol) of 6FDA and 8.69 g (28.00 mmol) of ODPA when synthesizing the polymer.

The sheet prepared by using polyimide solution P-6 was a porous material in a nanofiber form. The average fiber diameter of the resulting porous material was 200 nm, and the amount of volatile components was 3 wt% or less.

Moreover, the results of evaluating the electrolyte impregnatability of the resulting composite membrane verified that there were no voids in the composite region. The results of observing the cross-section under a SEM showed that the overall membrane thickness was 20 μm, and the composite membrane region was 8 μm.

A MEA was prepared by using the resulting membrane, and the results of fuel cell evaluation and chemical durability evaluation are shown in Table 7.

[Comparative Example C1]

Evaluations were made in the same manner as in Example C1 except that polyimide solution P-1 was obtained by not adding ABI and replacing it with 3.41 g (13.72 mmol) of bis(3-aminophenyl)sulfone (manufactured by Tokyo Chemical Industry Co., Ltd., hereinafter referred to as "33DAS") and 5.11 g (20.57 mmol) of bis(4-aminophenyl)sulfone (manufactured by Tokyo Chemical Industry Co., Ltd., hereinafter referred to as "44DAS") when synthesizing the polymer.

The sheet prepared by using polyimide solution P-1 was a porous material in a nanofiber form. The average fiber diameter of the resulting porous material was 200 nm, and the amount of volatile components was 3 wt% or less.

Moreover, the results of evaluating the electrolyte impregnatability of the resulting composite membrane verified that 50% or more of the composite region was voids and not filled with the electrolyte. The results of observing the cross-section under a SEM showed that the overall membrane thickness was 30 μm, and the composite membrane region where voids were present was 18 μm. A SEM image of the cross-section of the composite membrane is shown in Figure 7.

A membrane having a final membrane thickness of 20 μm obtained by regulating gaps during membrane formation was used to prepare a MEA, and the results of fuel cell evaluation and chemical durability evaluation are shown in Table 7.

In the fuel cell evaluation, the voltage was at least 0.05 V lower than those of Examples C1 to C5.

[Comparative Example C2]

Evaluations were made in the same manner as in Example C1 except that polyimide solution P-2 was obtained by changing the amount of ABI from 7.69 g (34.30 mmol) to 14.91 g (66.50 mmol) and not adding 33DAS when synthesizing the polymer. The resulting polyimide solution P-2 showed precipitates, and lost fluidity when left to stand still at room temperature for 10 days. Accordingly, it was judged that preparation of a porous material fiber sheet by electrospinning was difficult, and electrolyte impregnatability was not evaluated.

[Comparative Example C3]

Evaluations were made in the same manner as in Example C1 except that no porous material fiber sheet was used.

[Table 6]

| | Polymer | Diamine | Acid dianhydride | Molecular weight | Solubility | Electrolyte impregnatability |
|---|---|---|---|---|---|---|
| Example C1 | P-3 | ABI (100) | 6FDA (100) | $25.3 \times 10^4$ | ○ | ○ |

(continued)

| | Polymer | Diamine | | Acid dianhydride | | Molecular weight | Solubility | Electrolyte impregnatability |
|---|---|---|---|---|---|---|---|---|
| Example C2 | P-4 | ABI (100) | | 6FDA (100) | | $10.3 \times 10^4$ | ○ | ○ |
| Example C3 | P-5 | ABI (100) | | 6FDA (80) | ODPA (20) | $11.5 \times 10^4$ | ○ | ○ |
| Example C4 | P-6 | ABI (100) | | 6FDA (60) | ODPA (40) | $13.4 \times 10^4$ | ○ | ○ |
| Comparative Example C1 | P-1 | 33DAS (40) | 44DAS (60) | ODPA (100) | | $4.5 \times 10^4$ | ○ | × |
| Comparative Example C2 | P-2 | ABI (100) | - | ODPA (100) | | $3.8 \times 10^4$ | × | - |
| Comparative Example C3 | - | - | - | - | | - | - | - |

In Table 6, the numerical value of each component indicates the content of the component in the composition as the ratio of the component added.

[Table 7]

| | Dimensional change | Fuel cell evaluation | Chemical durability evaluation |
|---|---|---|---|
| Example C1 | ◎ | ○ | ◎ |
| Example C2 | ◎ | ○ | ◎ |
| Example C3 | ◎ | ○ | ◎ |
| Example C4 | ◎ | ○ | ◎ |
| Comparative Example C1 | ◎ | × | × |
| Comparative Example C2 | - | - | - |
| Comparative Example C3 | × | ○ | × |

[Example D1]

(Preparation of Solution of Perfluorocarbon Polymer Compound Having Ion-Exchange Group)

Pellets of a perfluorosulfonic acid resin precursor (ion-exchange capacity after hydrolysis and acid treatment: 1.30 meq/g) obtained from tetrafluoroethylene and $CF_2$=$CFO(CF_2)_2$-$SO_2F$, which is an electrolyte precursor polymer, were provided. Next, the precursor pellets were subjected to a hydrolysis treatment by being brought into contact at 80°C for 20 hours with an aqueous solution obtained by dissolving potassium hydroxide (15% by mass) and methyl alcohol (50% by mass). Thereafter, the pellets were immersed in water at 60°C for 5 hours. Next, the pellets after being immersed in water was subjected to an immersion treatment in a 2 N aqueous hydrochloric acid solution at 60°C for 1 hour. This treatment was repeated 5 times wherein a new aqueous hydrochloric acid solution was used each time. Then, the pellets after being repeatedly immersed in an aqueous hydrochloric acid solution was washed with ion-exchange water and dried. Thereby, an electrolyte perfluorocarbon sulfonic acid resin was obtained.

The pellets were placed and sealed in a 5 L autoclave together with an aqueous ethanol solution (water:ethanol=50.0/50.0 (mass ratio)), heated to 160°C while being stirred with a blade, and retained for 5 hours. Thereafter, the autoclave was spontaneously cooled to obtain a uniform perfluorocarbon sulfonic acid resin solution having a solids concentration of 5% by mass. This solution was concentrated under reduced pressure at 80°C and then diluted with water and ethanol to prepare a solution of ethanol:water=60:40 (mass ratio) having a solids content of 15.0% by mass (solution A-1).

(Synthesis of Polyimide)

A 500 mL stirrer-equipped separable flask having a Dean-Stark tube and a reflux tube in the upper part was set, and purged with nitrogen gas. Then, 94 g of N-methylpyrrolidone (hereinafter referred to as "NMP"), 15.38 g (68.60 mmol) of 5-amino-2-(4-aminophenyl)benzimidazole (manufactured by Tokyo Chemical Industry Co., Ltd., hereinafter referred to as "ABI"), 15.69 g (70.00 mmol) of 1,2,4,5-cyclohexanetetracarboxylic dianhydride (manufactured by Tokyo Chemical Industry Co., Ltd., hereinafter referred to as "HPMDA"), and 30 g of toluene were added, and stirred while introducing nitrogen gas into the reaction vessel. Then, the Dean-Stark tube was filled with toluene, the inner temperature was raised to 160°C in an oil bath, and the mixture was thermally refluxed at 160°C for 2 hours for imidization. It was verified from the weight of water recovered in the Dean-Stark tube that imidization progressed to 90% or more. Then, toluene was removed from the Dean-Stark tube, the temperature was raised to 180°C to further continue the reaction for 4 hours, and thus polyimide solution P-3 having a Mw of $6.0\times10^4$ was obtained.
The polyimide solution was a transparent solution without turbidity. The molecular weight and the solubility evaluation of the polyimide are shown in Table 9 below.

(Preparation of Porous Material)

A NANON manufactured by Mecc Co., Ltd., was set to have a spinning distance of 200 mm, a voltage of 20 kV, and a discharge rate of 1 mL/hr, a solution obtained by diluting polyimide solution P-3 to a suitable viscosity was used to carry out electrospinning, and a 3.3 g/$m^2$ sheet having an average fiber diameter of 200 nm was obtained.
The resulting sheet was heat-treated under reduced pressure at 260°C for 30 minutes in an oven to obtain a porous material. The amount of residual volatile components in the resulting porous material was 3 wt% or less. The thickness of the resulting fiber sheet was 10 μm.
A secondary electron image of the heat-treated porous material observed under a scanning electron microscope (manufactured by Hitachi High-Technologies Corporation, S-4800) showed a porous material in a nanofiber form. A SEM image of the porous material is shown in Figure 8.

(Preparation of Composite Membrane)

Solution A-1 prepared above was applied to a Kapton film by using an applicator, the gap of which was regulated so as to provide a dry film thickness of 8 μm, and the porous material obtained above (in the preparation of a porous material) was impregnated and heated at 120°C for 30 minutes.
Moreover, the second layer was applied by using the same applicator and heated at 120°C for 30 minutes and then at 170°C for 20 minutes, and thus a composite membrane was prepared.
The results of evaluating the electrolyte impregnatability of the resulting composite membrane verified that there were no voids in the composite membrane region. The results of observing the cross-section under a SEM showed that the overall membrane thickness was 20 μm, and the composite membrane region was 8 μm.
A MEA was prepared by using the resulting membrane, and the results of fuel cell evaluation and chemical durability evaluation are shown in Table 9. A SEM image of the cross-section of the composite membrane is shown in Figure 9.

[Example D2]

A porous material and a composite membrane were prepared and evaluated in the same manner as in Example D1 except that polyimide solution P-4 was used that was obtained by replacing NMP with N,N-dimethylacetamide when synthesizing the polymer.
The sheet prepared by using polyimide solution P-4 was a porous material in a nanofiber form. The average fiber diameter of the resulting porous material was 200 nm, and the amount of residual volatile components was 3 wt% or less. The thickness of the resulting sheet was 10 μm.
Moreover, the results of evaluating the electrolyte impregnatability of the resulting composite membrane verified that there were no voids in the composite region. The results of observing the cross-section under a SEM showed that the overall membrane thickness was 20 μm, and the composite membrane region was 8 μm.
A MEA was prepared by using the resulting membrane, and the results of fuel cell evaluation and chemical durability evaluation are shown in Table 9.

[Example D3]

A porous material and a composite membrane were prepared and evaluations were made in the same manner

as in Example D1 except that polyimide solution P-5 was used that was obtained by replacing 15.69 g (70.00 mmol) of HPMDA with 12.55 g (56.00 mmol) of HPMDA and 4.34 g (14.00 mmol) of 4,4'-oxydiphthalic dianhydride (manufactured by Tokyo Chemical Industry Co., Ltd., hereinafter referred to as "ODPA") when synthesizing the polymer.

The sheet prepared by using polyimide solution P-5 was a porous material in a nanofiber form. The average fiber diameter of the resulting porous material was 200 nm, and the amount of residual volatile components was 3 wt% or less. The thickness of the resulting sheet was 9 μm.

Moreover, the results of evaluating the electrolyte impregnatability of the resulting composite membrane verified that there were no voids in the composite region. The results of observing the cross-section under a SEM showed that the overall membrane thickness was 20 μm, and the composite membrane region was 8 μm.

A MEA was prepared by using the resulting membrane, and the results of fuel cell evaluation and chemical durability evaluation are shown in Table 9.

[Comparative Example D1]

A porous material and a composite membrane were prepared and evaluated in the same manner as in Example D1 except that polyimide solution P-1 was used that was obtained by not adding ABI and replacing it with 3.41 g (13.72 mmol) of bis(3-aminophenyl)sulfone (manufactured by Tokyo Chemical Industry Co., Ltd., hereinafter referred to as "33DAS") and 5.11 g (20.57 mmol) of bis(4-aminophenyl)sulfone (manufactured by Tokyo Chemical Industry Co., Ltd., hereinafter referred to as "44DAS") when synthesizing the polymer.

The sheet prepared by using polyimide solution P-1 was a porous material in a nanofiber form. The average fiber diameter of the resulting porous material was 200 nm, and the amount of residual volatile components was 3 wt% or less. The thickness of the resulting sheet was 11 μm.

Moreover, the results of evaluating the electrolyte impregnatability of the resulting composite membrane verified that 50% or more of the composite region was voids and not filled with the electrolyte. The results of observing the cross-section under a SEM showed that the overall membrane thickness was 30 μm, and the composite membrane region where voids were present was 18 μm.

A membrane having a final membrane thickness of 20 μm obtained by regulating gaps during membrane formation was used to prepare a MEA, and the results of fuel cell evaluation and chemical durability evaluation are shown in Table 9.

In the fuel cell evaluation, the voltage was at least 0.05 V lower than those of Examples D1 to D3.

A SEM image of the cross-section of the composite membrane is shown in Figure 10.

[Comparative Example D2]

Evaluations were made in the same manner as in Example D1 except that polyimide solution P-2 was obtained by changing the amount of ABI from 7.69 g (34.30 mmol) to 14.91 g (66.50 mmol) and adding neither 33DAS nor 44DAS when synthesizing the polymer. The resulting polyimide solution P-2 showed precipitates, and lost fluidity when left to stand still at room temperature for 10 days. Accordingly, it was judged that preparation of a porous material by electrospinning was difficult, and electrolyte impregnatability was not evaluated.

[Comparative Example D3]

A composite membrane was prepared and evaluated in the same manner as in Example D1 except that a porous material was not used in the preparation of a composite membrane.

[Table 8]

| | Polymer | Diamine | | Acid dianhydride | | Molecular weight | Solubility | Electrolyte impregnatability |
|---|---|---|---|---|---|---|---|---|
| Example D1 | P-3 | ABI (100) | | HPMDA (100) | | $6.0 \times 10^4$ | ○ | ○ |
| Example D2 | P-4 | ABI (100) | | HPMDA (100) | | $5.4 \times 10^4$ | ○ | ○ |
| Example D3 | P-5 | ABI (100) | | HPMDA (90) | ODPA (10) | $5.5 \times 10^4$ | ○ | ○ |
| Comparative Example D1 | P-1 | 33DAS (40) | 44DAS (60) | ODPA (100) | | $4.5 \times 10^4$ | ○ | × |
| Comparative Example D2 | P-2 | ABI (100) | - | ODPA (100) | | $3.8 \times 10^4$ | × | - |
| Comparative Example D3 | - | - | - | - | | - | - | - |

In Table 8, the numerical value in parentheses of each component indicates the content of the component in the composition as the ratio (calculated from the molar amount (mol)) of the component added.

[Table 9]

| | Dimensional change | Fuel cell evaluation | Chemical durability evaluation |
|---|---|---|---|
| Example 1 | ◎ | ○ | ◎ |
| Example 2 | ◎ | ○ | ◎ |
| Example 3 | ◎ | ○ | ◎ |
| Comparative Example 1 | ◎ | × | × |
| Comparative Example 2 | - | - | - |
| Comparative Example 3 | × | ○ | × |

The present application is based on a Japanese patent application filed on February 23, 2017 (Japanese Patent Application No. 2017-032159), a Japanese patent application filed on February 24, 2017 (Japanese Patent Application No. 2017-033885), a Japanese patent application filed on August 8, 2017 (Japanese Patent Application No. 2017-153592), a Japanese patent application filed on August 8, 2017 (Japanese Patent Application No. 2017-153437), a Japanese patent application filed on May 17, 2017 (Japanese Patent Application No. 2017-094841), and a Japanese patent application filed on July 7, 2017 (Japanese Patent Application No. 2017-134028), the content of which is incorporated herein by reference.

[Table 3]

| | Component (A) | Component (B) | Resin type | Particle type | Viscosity (cP) | Dispersibility | Chemical durability | Average particle diameter | Coefficient of variation |
|---|---|---|---|---|---|---|---|---|---|
| Example A1 | 100 | 6 | P-1 | B-1 | 1370 | ◎ | ◎ | 0.4 | 0.9 |
| Example A2 | 100 | 3 | P-1 | B-1 | 1522 | ◎ | ○ | 0.4 | 0.8 |
| Example A3 | 100 | 6 | P-1 | B-2 | 1610 | ◎ | ○ | 1.2 | 0.9 |
| Example A4 | 100 | 7 | P-1 | B-3 | 1580 | ◎ | ○ | 1.1 | 0.9 |
| Example A5 | 100 | 5 | P-2 | B-4 | 1840 | ◎ | ◎ | 0.5 | 0.8 |
| Example A6 | 100 | 6 | P-3 | B-5 | 1653 | ◎ | ◎ | 0.3 | 0.7 |
| Example A7 | 100 | 6 | P-4 | B-6 | 1687 | ◎ | ◎ | 0.3 | 0.7 |
| Example A8 | 100 | 6 | P-5 | B-7 | 1432 | ◎ | ◎ | 0.4 | 0.8 |
| Example A9 | 100 | 6 | P-6 | B-8 | 1350 | ◎ | ○ | 0.4 | 0.7 |
| Example A10 | 100 | 6 | P-7 | B-9 | 1512 | ◎ | ◎ | 0.3 | 0.6 |
| Example A11 | 100 | 6 | P-8 | B-10 | 1528 | ◎ | ◎ | 0.4 | 0.8 |
| Example A12 | 100 | 6 | P-9 | B-11 | 1472 | ◎ | ◎ | 0.4 | 0.9 |
| Example A13 | 100 | 5 | P-1 | B-12 | 1460 | Δ | Δ | 7.5 | 0.8 |
| Comparative Example A1 | 100 | - | - | - | 1048 | - | Δ | - | - |
| Comparative Example A2 | 100 | 6 | P-10 | B-13 | 1700 | × | Δ | - | - |

<<Examples of Second Embodiment>>

The measurement methods and evaluation methods used in the Examples and Comparative Examples are as follows.

(Measurement of Molecular Weight)

The weight-average molecular weight (Mw) was measured under the following conditions by gel permeation chromatography (GPC). The solvent used was N,N-dimethylformamide (manufactured by Wako Pure Chemical

## Claims

**1.** A composition comprising:

100.0 parts by mass of a perfluorocarbon polymer having an ion-exchange group (A); and
0.1 to 200.0 parts by mass of a basic polymer (B),
wherein the basic polymer (B) is a fine particle.

**2.** A composition comprising:

100.0 parts by mass of a perfluorocarbon polymer having an ion-exchange group (A); and
0.1 to 200.0 parts by mass of a basic polymer (B),
wherein a concentration of a basic group per gram of the basic polymer (B) is 5.0 mmol or less.

**3.** The composition according to claim 2, wherein the concentration of the basic group per gram of the basic polymer (B) is 3.0 mmol or less.

**4.** The composition according to any one of claims 1 to 3, wherein
the basic polymer (B) is a fine particle, and
a proportion of the fine particle having a particle diameter exceeding 5.0 μm is 10% or less of the fine particle of the basic polymer (B).

**5.** The composition according to any one of claims 1 to 4, wherein
the basic polymer (B) is a fine particle, and
an average diameter of the fine particle of the basic polymer (B) is 0.10 μm or more and 5.00 μm or less.

**6.** The composition according to any one of claims 1 to 5, wherein the basic polymer (B) comprises an imide and/or an amide structure.

**7.** The composition according to any one of claims 1 to 6, comprising 0.1 parts by mass or more and 20.0 parts by mass or less of the basic polymer (B) per 100.0 parts by mass of the perfluorocarbon polymer having an ion-exchange group (A).

**8.** The composition according to any one of claims 1 to 7, wherein the basic polymer (B) has an azole ring.

**9.** The composition according to any one of claims 1 to 8, wherein the basic polymer (B) has two or more azole rings and an imide and/or an amide structure positioned between the two or more azole rings.

**10.** The composition according to any one of claims 1 to 9, wherein a weight average molecular weight (Mw) of the basic polymer (B) is 300 or more and 500000 or less.

**11.** The composition according to any one of claims 1 to 10, wherein a molecular weight distribution of the basic polymer (B) calculated as weight average molecular weight (Mw)/number average molecular weight (Mn) is 2.60 or less.

**12.** The composition according to any one of claims 1 to 11, wherein the basic polymer (B) comprises at least one structure selected from the group consisting of an imidazole ring, a benzimidazole ring, an oxazole ring, a benzoxazole ring, a thiazole ring, and a benzothiazole ring.

**13.** The composition according to any one of claims 1 to 12, wherein the basic polymer (B) has a structure represented by formula (1):

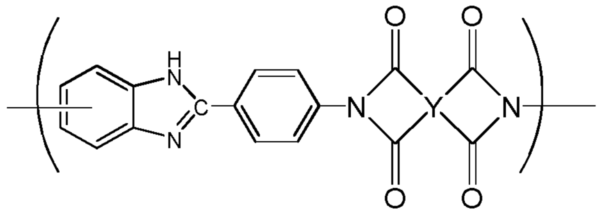

(1)

wherein Y represents a tetravalent organic group.

**14.** The composition according to any one of claims 1 to 13, wherein an ion-exchange capacity of the perfluorocarbon polymer having an ion-exchange group (A) is 0.5 to 3.0 meq/g.

**15.** The composition according to any one of claims 1 to 14, wherein the perfluorocarbon polymer having an ion-exchange group (A) is a perfluorocarbon polymer having a structure represented by formula (2):

$$-[CF_2CX^1X^2]_a-[CF_2-CF((-O-CF_2-CF(CF_2X^3))_b-O_c-(CFR^1)_d-(CFR^2)_e-(CF_2)_f-X^4)]_g- \quad (2)$$

wherein

$X^1$, $X^2$, and $X^3$ are each independently selected from the group consisting of halogen atoms and perfluoroalkyl groups having 1 to 3 carbon atoms;
$X^4$ represents COOZ, $SO_3Z$, $PO_3Z_2$, or $PO_3HZ$;
Z represents a hydrogen atom, an alkali metal atom, an alkaline earth metal atom, or an amine selected from the group consisting of $NH_4$, $NH_3R^{x1}$, $NH_2R^{x1}R^{x2}$, $NHR^{x1}R^{x2}R^{x3}$, and $NR^{x1}R^{x2}R^{x3}R^{x4}$, wherein $R^{x1}$, $R^{x2}$, $R^{x3}$, and $R^{x4}$ each independently represent an alkyl group or an arene group;
when $X^4$ is $PO_3Z_2$, Z may be the same or different;
$R^1$ and $R^2$ each independently represent a halogen atom or a perfluoroalkyl group or fluorochloroalkyl group having 1 to 10 carbon atoms;
a and g are numbers that satisfy $0 \leq a < 1$, $0 < g \leq 1$, and $a+g=1$;
b is an integer of 0 to 8;
c is 0 or 1; and
d, e, and f are each independently an integer of 0 to 6, provided that d, e, and f are not 0 at the same time.

**16.** The composition according to any one of claims 1 to 15, wherein the perfluorocarbon polymer having an ion-exchange group (A) has a structure represented by formula (4) :

$$-[CF_2CF_2]_a-[CF_2-CF((-O-(CF_2)_m-X^4)]_g- \quad (4)$$

wherein a and g are numbers that satisfy $0 \leq a < 1$, $0 < g \leq 1$, and $a+g=1$; m is an integer of 1 to 6; and $X^4$ represents $SO_3H$.

**17.** An electrolyte membrane comprising the composition according to any one of claims 1 to 16.

**18.** The electrolyte membrane according to claim 17, wherein
the basic polymer (B) contained in the electrolyte membrane is a fine particle; and
a particle diameter of the basic polymer (B) included in a 62.8 $\mu m \times 26.0$ $\mu m$ region on a SEM image of a membrane cross-section of the electrolyte membrane has a coefficient of variation of 0.10 or more and 2.00 or less.

**19.** The electrolyte membrane according to claim 18, wherein the coefficient of variation of the particle diameter of the basic polymer (B) is 0.20 or more and 1.50 or less.

**20.** A membrane electrode assembly comprising the electrolyte membrane according to any one of claims 17 to 19.

**21.** A composite membrane comprising:

the electrolyte membrane according to any one of claims 17 to 19; and
a membrane comprising a polyimide,
wherein the polyimide is a polyimide having a structure represented by formula (1):

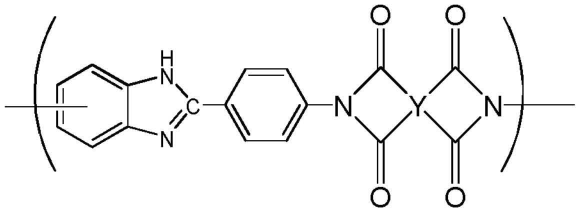

(1)

wherein Y represents a tetravalent organic group.

**22.** The composite membrane according to claim 21, wherein the membrane comprising the polyimide is in a fiber sheet form.

**23.** A composition comprising a polyimide having a structure represented by formula (1):

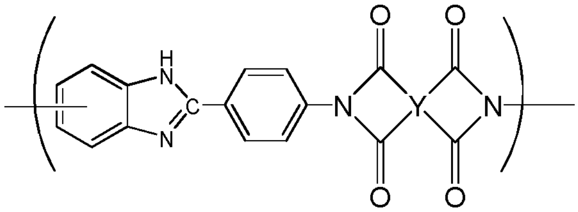

(1)

wherein Y represents a tetravalent organic group.

**24.** The composition according to claim 23, comprising a polyimide having a structure represented by formula (5):

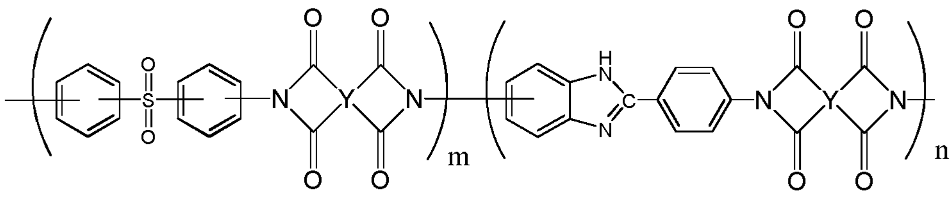

(5)

wherein Y represents a tetravalent organic group, m and n represent the number of repeating units, and a ratio m:n is 20:80 to 70:30.

**25.** The composition according to claim 23, comprising a polyimide having a structure represented by formula (6):

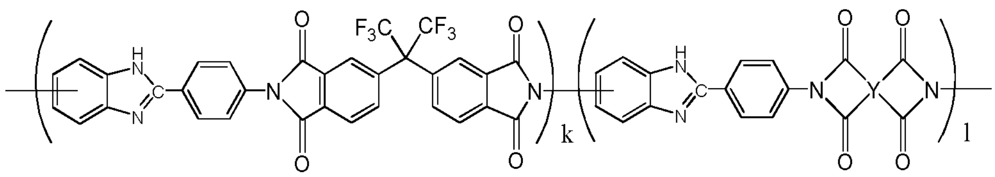

(6)

wherein Y represents a tetravalent organic group, k and l represent the number of repeating units, and a ratio k:l is 20:80 to 70:30.

**26.** The composition according to claim 23 or 24, wherein Y is represented by formula (Y1).

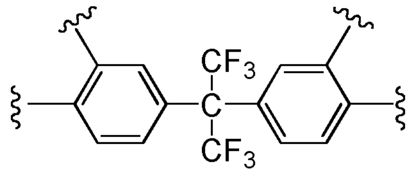

(Y1)

**27.** The composition according to any one of claims 23 to 25, wherein Y is a tetravalent organic group having an alicyclic structure.

**28.** The composition according to any one of claims 23 to 27, wherein a molecular weight distribution calculated as Mw/Mn is 2.60 or less.

**29.** The composition according to any one of claims 23 to 28, wherein when the composition is formed into a porous material or a fiber sheet, a weight loss of the porous material or the fiber sheet in a nitrogen atmosphere from 30°C to 350°C is 10% by mass or less.

**30.** A porous material made of the composition according to any one of claims 23 to 29.

**31.** A fiber sheet made of the composition according to any one of claims 23 to 29.

**32.** A fiber sheet comprising a polyimide represented by formula (7):

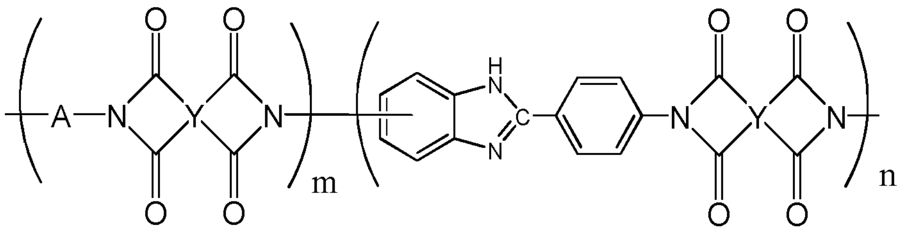

(7)

wherein
in formula (7), A represents a divalent organic group represented by formula (A-1), (A-2), (A-3), or (A-4) :

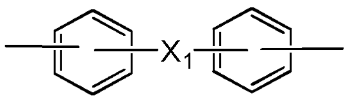

(A-1)

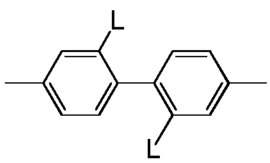

(A-2)

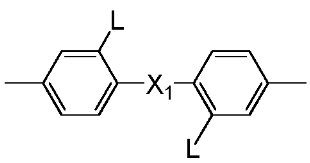

(A-3)

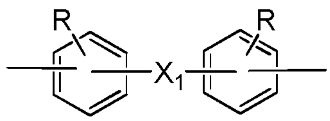

(A-4)

in formulas (A-1), (A-3), and (A-4), $X_1$ represents a divalent organic group represented by (X1-1) or (X1-2):

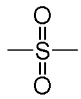

(X1-1)

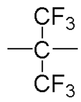

(X1-2)

in formulas (A-2) and (A-3), L represents a methyl group or a trifluoromethyl group;
in formula (A-4), R represents a hydroxyl group;
Y represents a tetravalent organic group;
m and n represent the number of repeating units; and
a ratio m:n is 20:80 to 70:30.

**33.** A fiber sheet comprising a polyimide represented by formula (8):

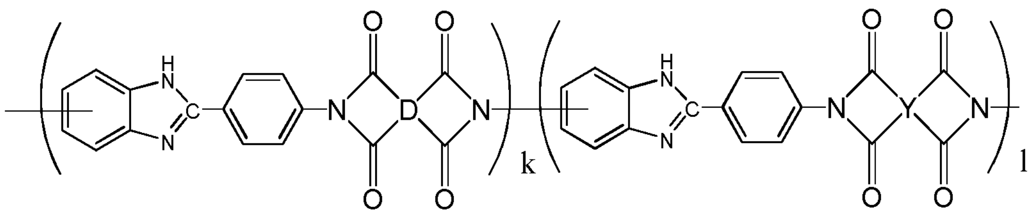

(8)

wherein D and Y represent a tetravalent organic group, and a ratio k:l is 20:80 to 70:30.

**34.** The fiber sheet according to claim 33, wherein D is a tetravalent organic group represented by formula (D1):

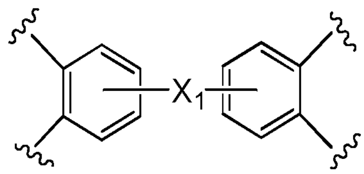

(D1)

wherein $X_1$ represents a divalent organic group represented by formula (X1-1) or (X1-2).

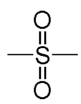

(X1-1)

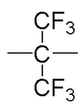

(X1-2)

**35.** The fiber sheet according to any one of claims 32 to 34, wherein the fiber has an average fiber diameter of 100 nm or more and 1000 nm or less.

**36.** A composite membrane comprising the fiber sheet according to any one of claims 31 to 35; and a proton-conductive electrolyte, wherein the proton-conductive electrolyte is present in the fiber sheet.

**37.** The composite membrane according to claim 36, wherein the proton-conductive electrolyte is a perfluorocarbon polymer having an ion-exchange group.

**38.** A membrane electrode assembly comprising the composite membrane according to claim 37.

**39.** A fuel cell comprising the membrane electrode assembly according to claim 38.

**40.** A fuel cell system comprising the fuel cell according to claim 39.

Figure 1

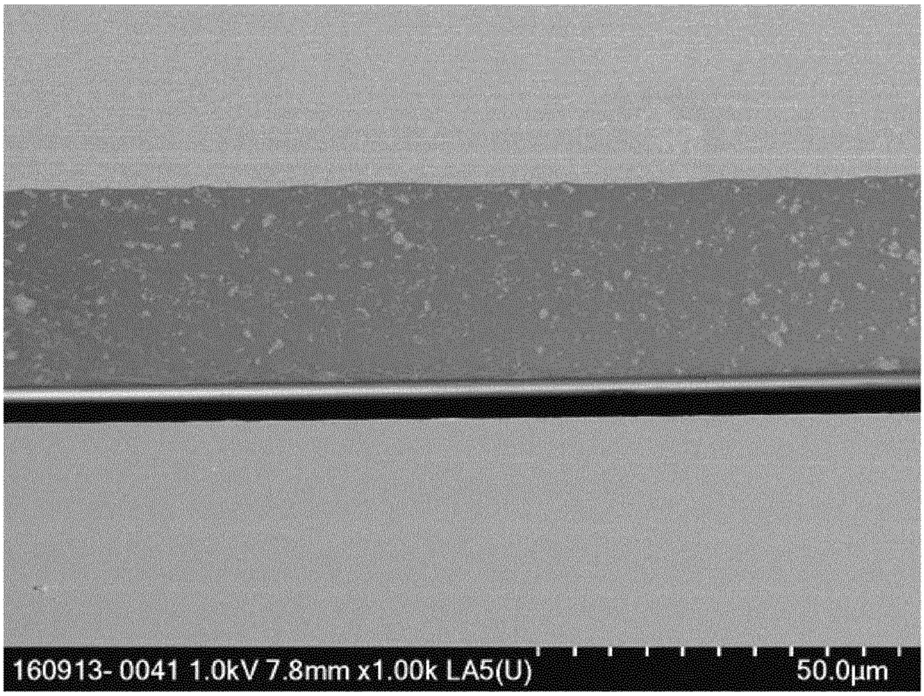


Figure 2

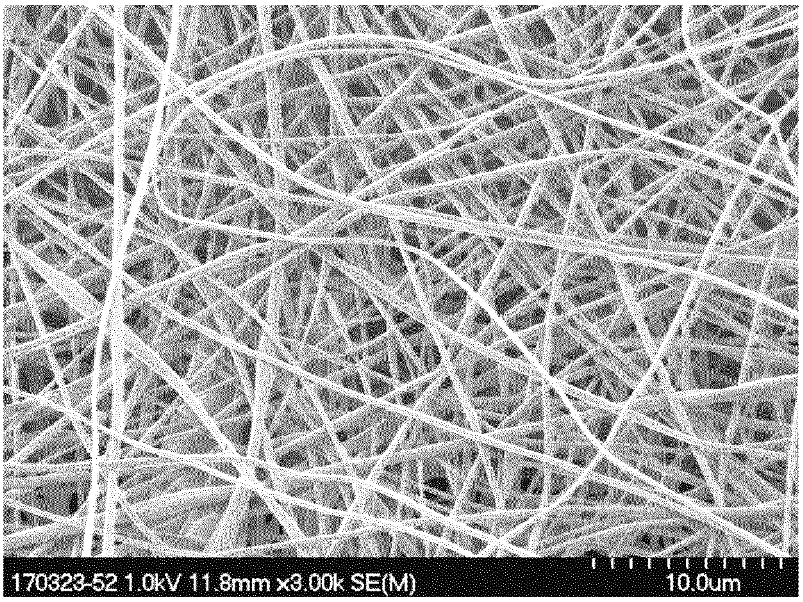

Figure 3

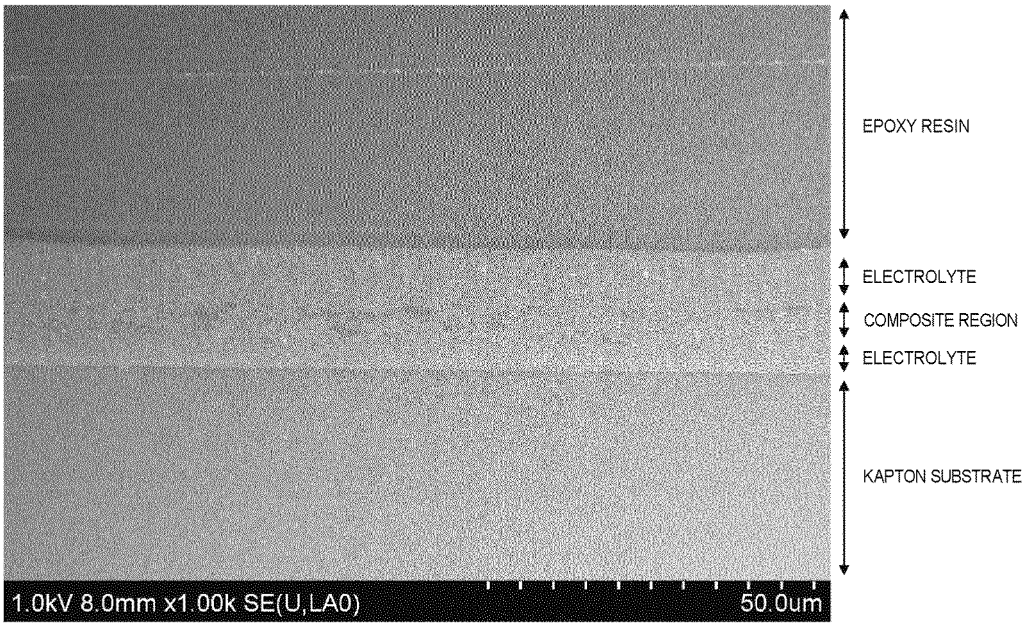


Figure 4

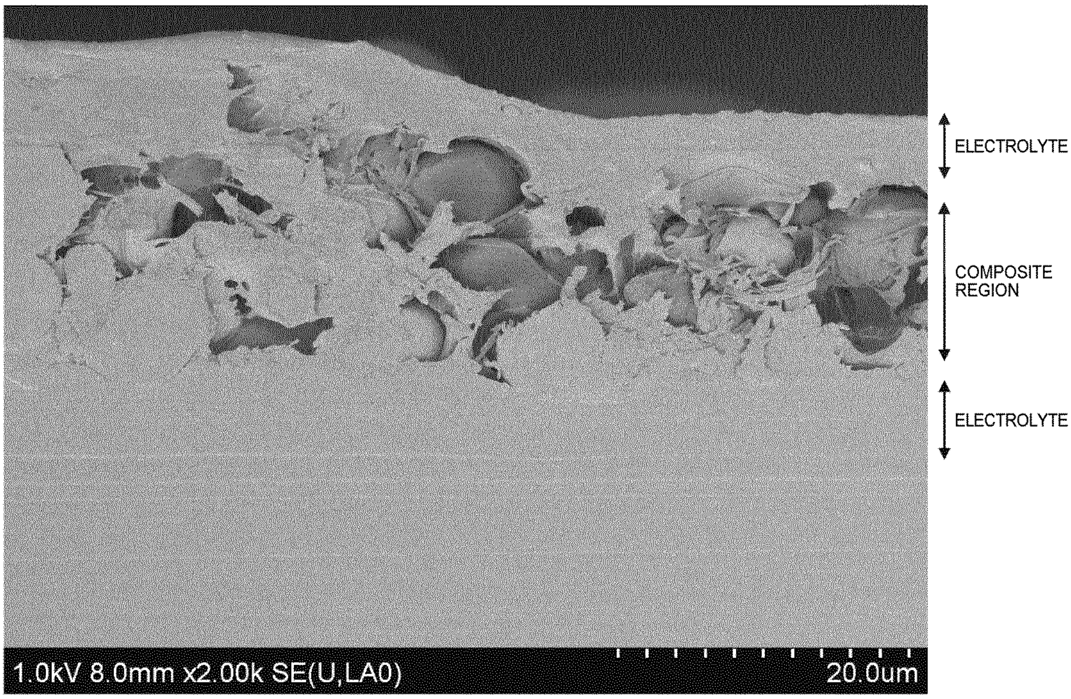

Figure 5

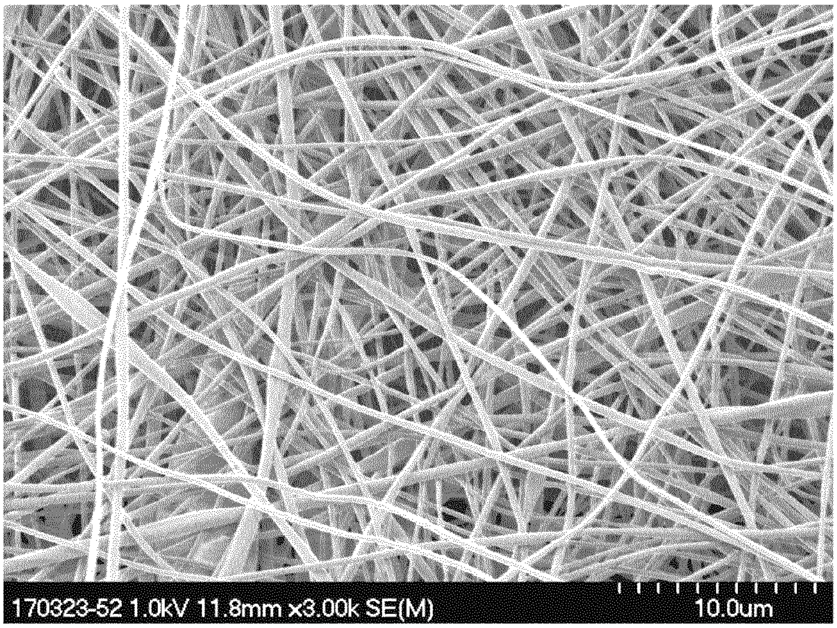


Figure 6

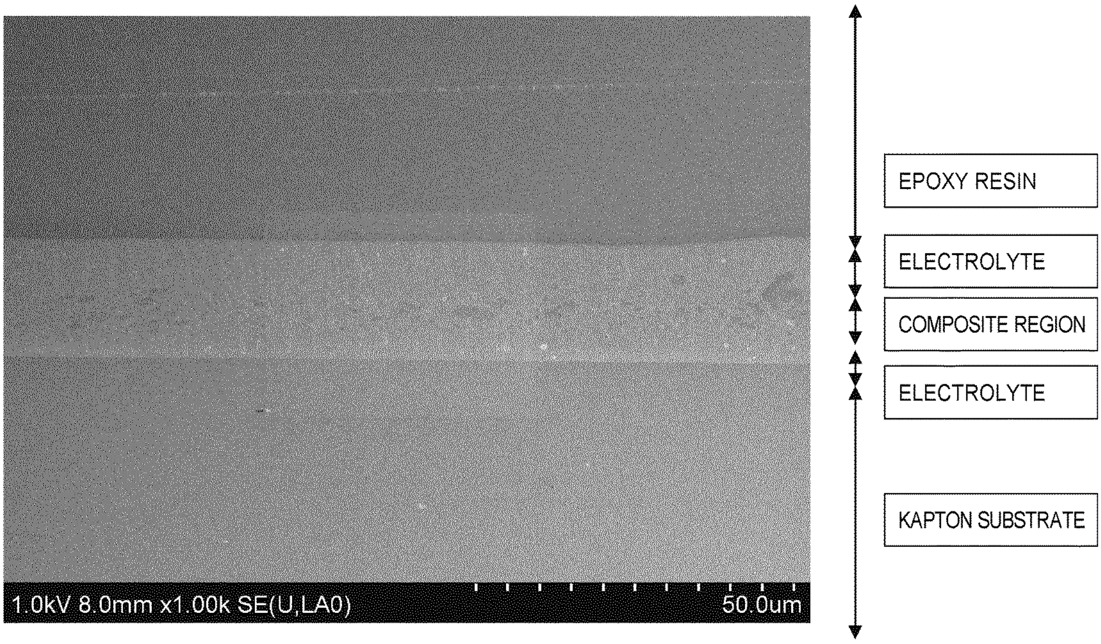

Figure 7

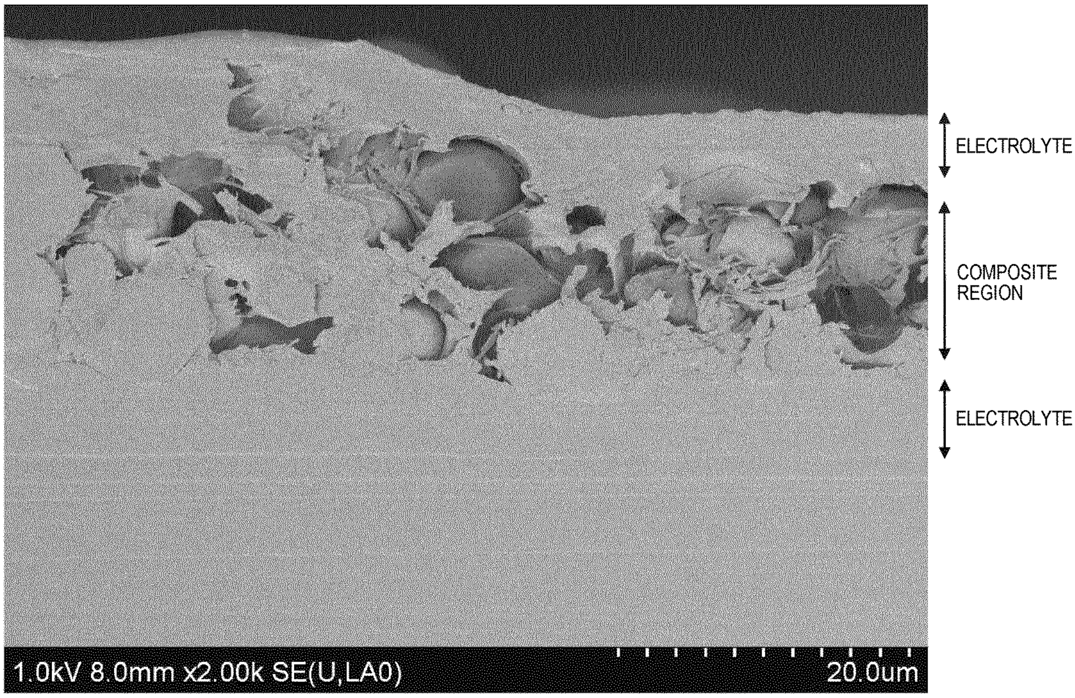


Figure 8

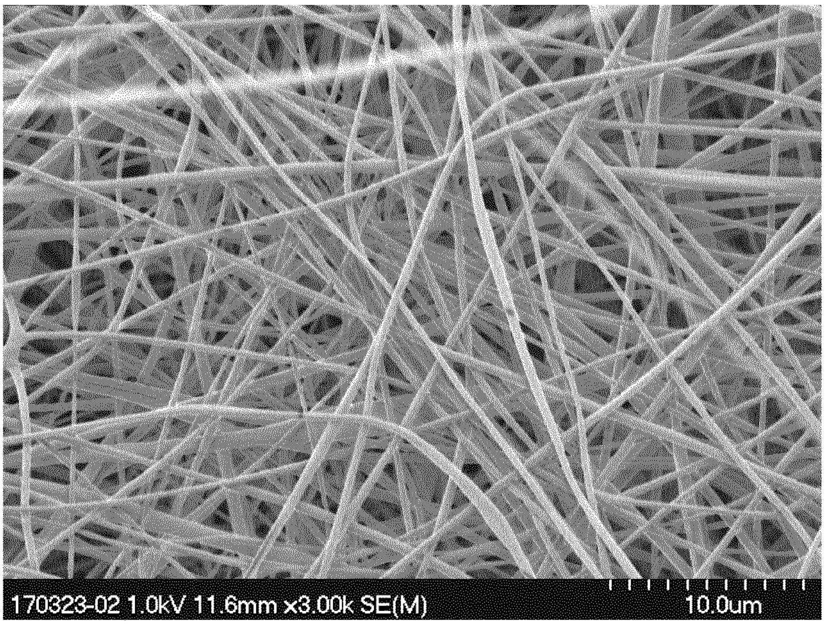

Figure 9

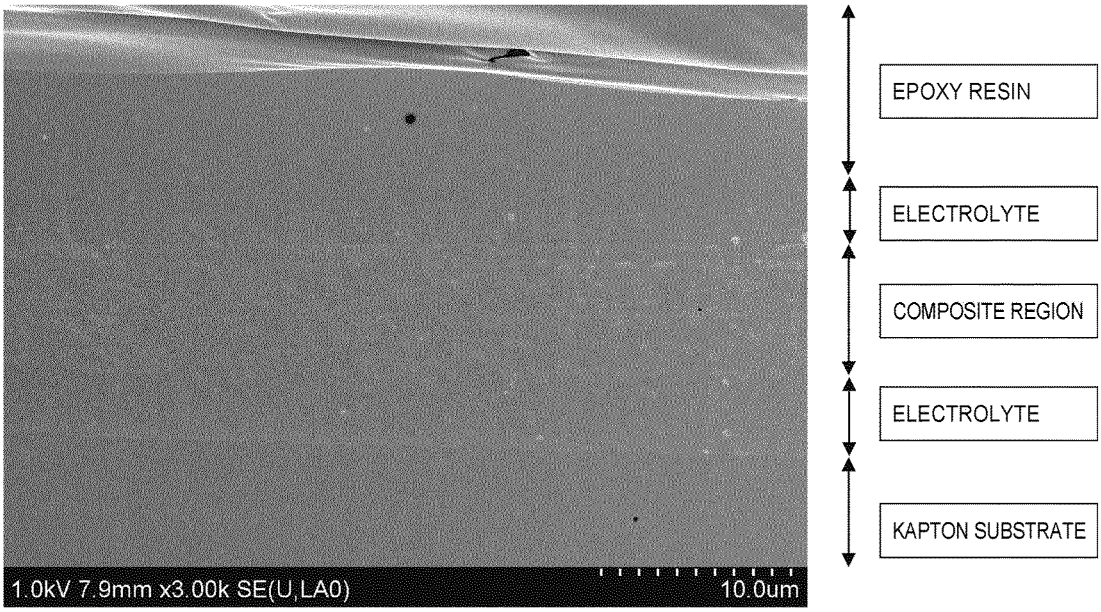


Figure 10

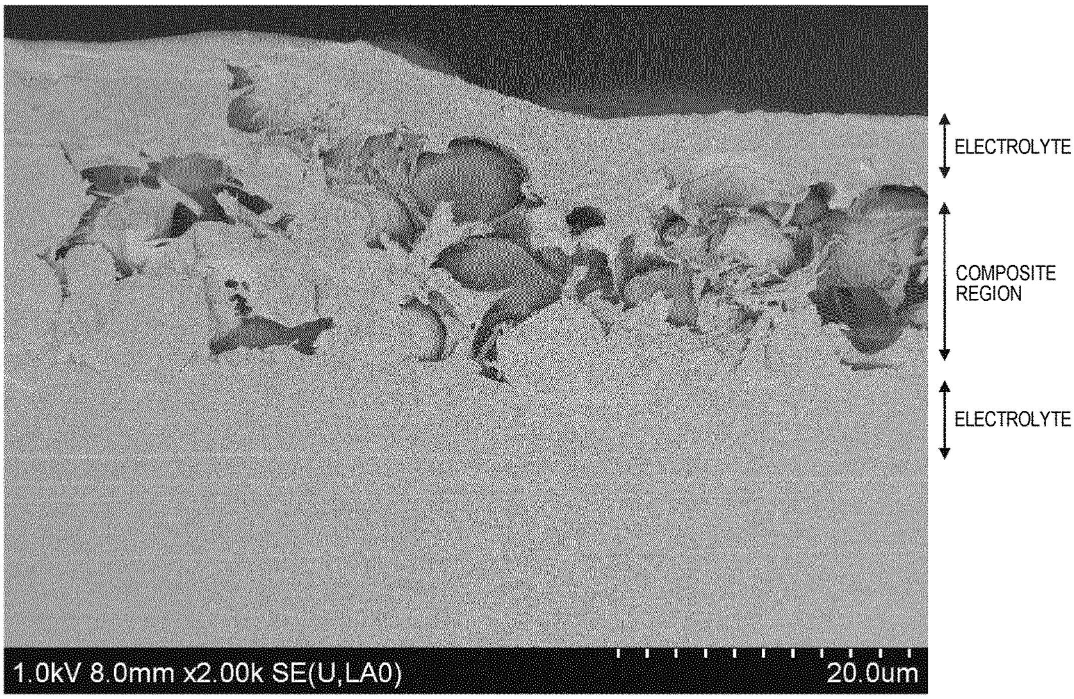

Figure 11

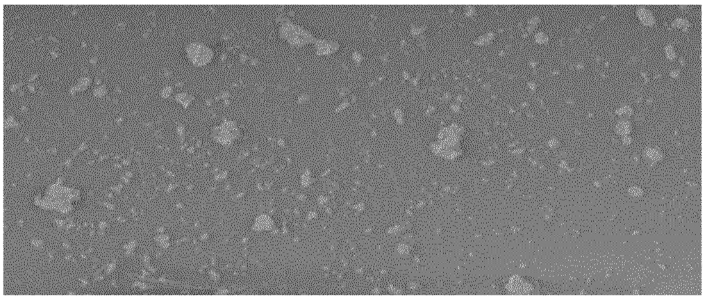

Figure 12

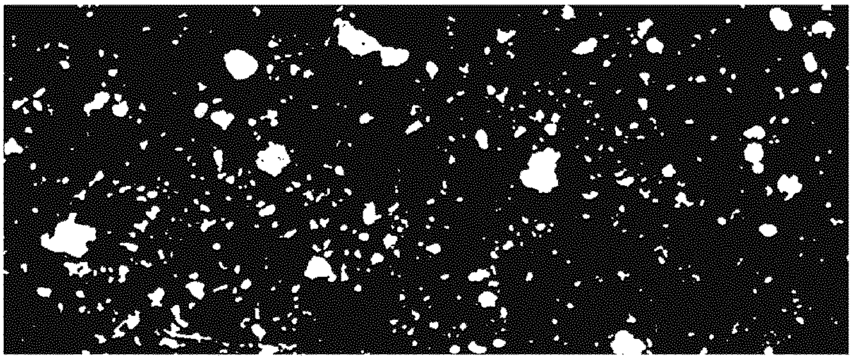

Figure 13

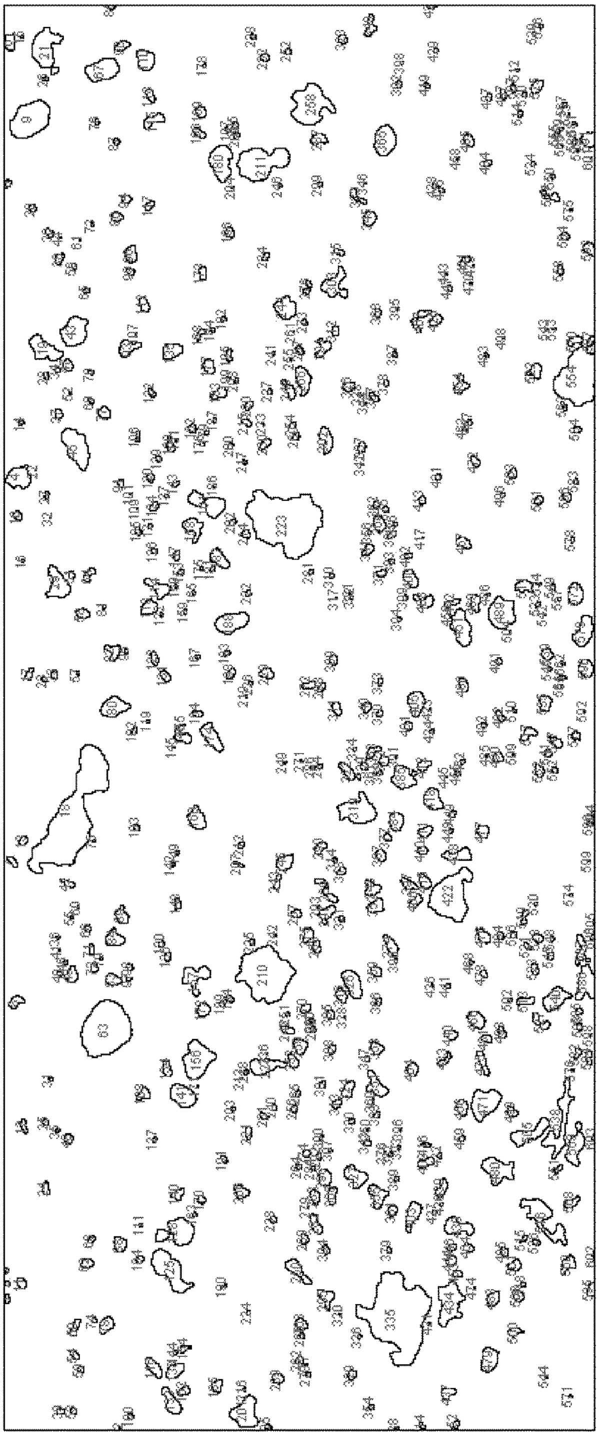

## INTERNATIONAL SEARCH REPORT

International application No. PCT/JP2018/006592

A. CLASSIFICATION OF SUBJECT MATTER
Int.Cl. C08L27/12(2006.01)i, C08G73/10(2006.01)i, C08L27/22(2006.01)i, C08L77/00(2006.01)i, C08L79/08(2006.01)i, H01B1/06(2006.01)i, H01M8/10(2016.01)i, H01M8/1004(2016.01)i, H01M8/103(2016.01)i, H01M8/1039(2016.01)i, H01M8/1044(2016.01)i, H01M8/1058(2016.01)i

According to International Patent Classification (IPC) or to both national classification and IPC

B. FIELDS SEARCHED

Minimum documentation searched (classification system followed by classification symbols)
Int.Cl. C08L27/12, C08G73/10, C08L27/22, C08L77/00, C08L79/08, H01B1/06, H01M8/10, H01M8/1004, H01M8/103, H01M8/1039, H01M8/1044, H01M8/1058

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 2005-336475 A (ASAHI KASEI CHEMICALS CORP.) 08 December 2005, claims, paragraphs [0003], [0022], [0023], [0031]-[0034] (Family: none) | 1, 5, 7, 8, 10-12, 14-17, 20<br>2-4, 6, 9, 13, 18, 19, 21-40 |
| X<br><br>A | JP 5548445 B2 (ASAHI KASEI E-MATERIALS CORP.) 16 July 2014, claims, paragraphs [0043]-[0049] & US 2010/0015496 A1, claims, paragraphs [0187]-[0198] & EP 2128919 A1 & CN 101617427 A & KR 10-2009-0114400 A | 1, 5, 7, 8, 10-12, 14-17, 20<br>2-4, 6, 9, 13, 18, 19, 21-40 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 01 May 2018 (01.05.2018) | 15 May 2018 (15.05.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/006592

C (Continuation). DOCUMENTS CONSIDERED TO BE RELEVANT

| Category* | Citation of document, with indication, where appropriate, of the relevant passages | Relevant to claim No. |
|---|---|---|
| X<br><br>A | JP 2010-6940 A (TEIJIN LTD.) 14 January 2010, claims, examples (Family: none) | 2, 3, 6, 8-17, 20, 23, 28<br>1, 4, 5, 7, 18, 19, 21, 22, 24-27, 29-40 |
| X<br><br>A | JP 2010-44971 A (TEIJIN LTD.) 25 February 2010, claims, examples (Family: none) | 2, 3, 6, 8-17, 20, 23, 28<br>1, 4, 5, 7, 18, 19, 21, 22, 24-27, 29-40 |
| A | JP 2007-177116 A (TOYOBO BOSEKI KABUSHIKI KAISHA) 12 July 2007, entire text, all drawings (Family: none) | 1-40 |
| A | JP 2008-88287 A (TOYOBO BOSEKI KABUSHIKI KAISHA) 17 April 2008, entire text, all drawings (Family: none) | 1-40 |
| A | JP 2012-12479 A (TEIJIN TECHNO PRODUCTS LTD.) 19 January 2012, entire text (Family: none) | 1-40 |
| A | JP 2013-80701 A (TORAY INDUSTRIES, INC.) 02 May 2013, entire text, all drawings (Family: none) | 1-40 |
| A | WO 2015/152058 A1 (TORAY INDUSTRIES, INC.) 08 October 2015, entire text, all drawings & US 2017/0037207 A1, entire text, all drawings & EP 3128592 A1 & CN 106133976 A & KR 10-2016-0140732 A & TW 201546154 A | 1-40 |

Form PCT/ISA/210 (continuation of second sheet) (January 2015)

**INTERNATIONAL SEARCH REPORT**

International application No. PCT/JP2018/006592

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

International application No.
PCT/JP2018/006592

(Invention 1) Claims 1, and 4-22

Document 1 discloses a proton exchange film composed of a composition including a perfluorocarbon polymer having 50.00 mass% to 99.98 mass% of an ion exchange group, 0.01 mass% to 44.99 mass% of polyimide and/or polyamideimide, and 0.01 mass% to 44.99 mass% of a polyazole compound, wherein the cross-sectional structure of the proton exchange film in the thickness direction is a sea-island structure, a sulfonic acid polymer of perfluorocarbon, a carbonic acid polymer, a phosphoric acid polymer, an amine group thereof, a metal salt thereof or the like is preferably used as the perfluorocarbon polymer having the proton exchange group contained in the composition constituting the proton exchange film of the present invention, a polymer represented by chemical formula (1) is used as a representative example thereof, $[-[CF_2CX_1X_2]_a-[CF_2-CF(-0-CF_2-CF(CF_2X_3))_b-0_c-(CFR_1)_d-(CFR_2)_e-(CF_2)_f-X_4]_g-]$···(1), among these, a short-chain type perfluorocarbon sulfonic acid polymer represented by chemical formula (2), or an amine salt or metal salt thereof is particularly preferable, $[-[CF_2CF_2]_a-[CF_2-CF(-0-(CF_2)_2-S0_3Z)]_g-]$···(2), the polyazole compound contained in the composition constituting the proton exchange film of the present invention, while not particularly limited, indicates a polymer of a heterocyclic five-membered compound, such as a polyimidazole compound, a polybenzimidazole compound, a polybenzobisimidazole compound, a polybenzoxazole compound, a polyoxazole compound, a polythiazole compound, a polybenzothiazole compound, etc., including one or more nitrogen atoms in a ring, the heterocyclic five-membered compound may include oxygen or sulfur instead of nitrogen, the polyazole compound has a weight-average molecular weight of 300-500000, the diameter (or long diameter or maximum diameter) of an island-shaped particle is in a range of 0.01-10 µm, and in the sea-island structure, the contrast of a black island particle is mainly due to polyimide and/or polyamideimde and/or polyazole compounds (b), and a white sea (continuous shape) portion is mainly due to a perfluorocarbon polymer (a) having an ion exchange group. Claims 1, 5, 7, 8, 10-12, 14-17, and 20 lack novelty in light of document 1, and thus do not have a special technical feature. However, claim 6, which is dependent on claim 1, has the special technical feature in which "(B) the basic polymer comprises an imide and/or amide structure".

Thus, claims 1, and 4-22 are classified as invention 1.

(Invention 2) Claims 2, 3, and parts not classified as invention 1 in claims 4-22

Claim 2 cannot be said to have an identical or corresponding special technical feature to claim 6 classified as invention 1. In addition, claim 2 is not substantially identical or equivalent to any of the claims classified as invention 1.

Accordingly, claim 2 cannot be classified as invention 1.

In addition, claim 2 has the special technical feature in which "(B) the concentration of the basic group per 1 g of basic polymer is 5.0 mmol or less", and thus is classified as invention 2.

(Invention 3) Claims 23-31, and 36-40

Claim 23 cannot be said to have an identical or corresponding special technical feature to claim 6 classified as invention 1 or claim 2 classified as invention 2. In addition, claim 23 is not substantially identical or equivalent to any of the claims classified as invention 1 or 2.

Accordingly, claim 23 cannot be classified as invention 1 or 2.

In addition, claim 23 has the special technical feature of a "composition comprising polyimide having a structure represented by formula (1)", and thus is classified as invention 3.

Form PCT/ISA/210 (extra sheet) (January 2015)

INTERNATIONAL SEARCH REPORT

International application No.
PCT/JP2018/006592

(Invention 4) Claims 32, 35, and parts not classified as invention 3 in claims 32, and 35-40

Claim 32 cannot be said to have an identical or corresponding special technical feature to claim 6 classified as invention 1, claim 2 classified as invention 2, or claim 23 classified as invention 3. In addition, claim 32 is not substantially identical or equivalent to any of the claims classified as invention 1, 2, or 3.

Accordingly, claim 32 cannot be classified as invention 1, 2, or 3.

In addition, claim 32 has the special technical feature of a "fiber sheet comprising polyimide represented by formula (7)", and thus is classified as invention 4.

(Invention 5) Claims 33, 34, and parts not classified as invention 3 or 4 in claims 33-40

Claim 33 cannot be said to have an identical or corresponding special technical feature to claim 6 classified as invention 1, claim 2 classified as invention 2, claim 23 classified as invention 3, or claim 32 classified as invention 4. In addition, claim 33 is not substantially identical or equivalent to any of the claims classified as invention 1, 2, 3, or 4.

Accordingly, claim 33 cannot be classified as invention 1, 2, 3, or 4.

In addition, claim 33 has the special technical feature of a "fiber sheet comprising polyimide represented by formula (8)", and thus is classified as invention 5.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012084278 A
- JP 2015219941 A
- JP 2013080701 A
- JP 2005336475 A
- JP 5548445 B
- JP 5798186 B
- CN 104629081
- JP 53149881 A
- JP 63061337 A
- JP 5075835 A
- JP 11501964 PCT
- JP 2008243420 A
- JP 2003297393 A
- JP 2017032159 A
- JP 2017033885 A
- JP 2017153592 A
- JP 2017153437 A
- JP 2017094841 A
- JP 2017134028 A


### Non-patent literature cited in the description


- **K. HU ; T. XU ; W. YANG ; Y. FU.** *Journal of Applied Polymer Science,* vol. 91
- **E. MONTONERI.** Polymer Chemistry. *Journal of Polymer Science,* 1989, vol. 27, 3043-3051
- **VAN NOSTRAND REINHOLD ; J. APPLEBY.** FUEL CELL HANDBOOK
- Chemistry One Point, Fuel Cell. Kyoritsu Shuppan Co., Ltd, 1992